# EUROPÄISCHE PATENTSCHRIFT

(11) **EP 3 600 139 B1**
(45) Veröffentlichungstag und Bekanntmachung des Hinweises auf die Patenterteilung: **10.03.2021**
(21) Anmeldenummer: 17749489.5
(22) Anmeldetag: 11.08.2017
(51) Int. Cl.: A61C 17/22, A61C 17/34

(54) **ELEKTRISCHE KÖRPERPFLEGEBÜRSTE**
ELECTRICAL BODY CARE BRUSH
BROSSE ÉLECTRIQUE DE SOIN CORPOREL

(30) Priorität: 31.03.2017 EP 17164182
(43) Veröffentlichungstag der Anmeldung: 05.02.2020
(60) Teilanmeldung: 21154502.5
(73) Patentinhaber: Trisa Holding AG, 6234 Triengen (CH)
(72) Erfinder: SCHERRER, Jonas, 6204 Sempach (CH); BAUHOFER, Marc, 6243 Egolzwil (CH)
(74) Vertreter: Frei Patent Attorneys
(86) Internationale Anmeldenummer: PCT/EP2017/070406
(87) Internationale Veröffentlichungsnummer: WO 2018/177566

(56) Entgegenhaltungen:
- WO-A1-2004/098445
- DE-A1- 4 438 732
- US-A1- 2003 131 427
- US-A1- 2016 331 116
- US-B2- 6 581 234

## Beschreibung

Die Erfindung bezieht sich auf das Gebiet der elektrischen Pflege- und Reinigungsbürsten, wie elektrische Körperpflegebürsten, und insbesondere elektrische Zahnbürsten.

Die Erfindung betrifft ein mehrteiliges Aufsteckbürstenteil für eine elektrische Körperpflegebürste, insbesondere für eine elektrische Zahnbürste nach dem Oberbegriff des Anspruchs 1, sowie eine elektrische Körperpflegebürste, insbesondere eine elektrische Zahnbürste, mit einem mehrteiligen Aufsteckbürstenteil und einem Handteil.

Elektrische Pflege- und Reinigungsbürsten zeichnen sich dadurch aus, dass der Bürstenkopf über einen elektromotorischen Antrieb in Bewegung versetzt wird. Mit Bezug auf elektrische Zahnbürsten sind heute auf dem Markt mehrere Typen von elektrischen Zahnreinigungsbürsten bekannt, unter anderem die oszillierende Rotationszahnbürste und die Schallzahnbürste. Die Rotationszahnbürste zeichnet sich dadurch aus, dass der Bürstenkopf um eine Drehachse im Wesentlichen senkrecht zur Längsachse der elektrischen Körperpflegebürste oszillierend rotiert. Bei der Schallzahnbürste wird der Bürstenkopf hingegen mit einer in der Regel höheren Frequenz in Schwingung versetzt, die Drehachse ist dabei vorzugsweise parallel zur Reinigungsfläche.

Elektrische Pflege- und Reinigungsbürsten, welche für eine längere Lebensdauer ausgelegt sind und in der Regel auch eine hohe Funktionalität aufweisen, umfassen in der Regel ein Handteil sowie ein separat ausgebildetes Aufsteckbürstenteil, welches auf das Handteil reversibel aufsteckbar und wieder abziehbar ist.

Das Handteil enthält in der Regel den elektromotorischen Antrieb zum Antreiben des Bürstenkopfes. Ferner enthält das Handteil in der Regel zusätzlich ein Getriebe zum Umwandeln der Rotationsbewegung des elektromotorischen Antriebs in eine oszillierende Rotationsbewegung des Steuerstiftes. Im Weiteren enthält das Handteil einen Energiespeicher, wie Akkumulator oder Primärzelle, zur Versorgung des elektromotorischen Antriebs mit Strom.

Weiter gehören in der Regel ein Ein-/Ausschalter sowie eine Steuereinheit zum Handteil. Mit der Steuereinheit lassen sich die elektrischen Funktionen des Gerätes einstellen bzw. steuern steuern.

Die separate Ausbildung des Aufsteckbürstenteils liegt darin begründet, dass die Aufsteckbürstenteile von Zeit zu Zeit ausgetauscht werden müssen, weil z.B. die Borsten verschlissen sind oder das bisherige Aufsteckbürstenteil aus hygienischen Gründen nicht mehr verwendet werden sollte.

Auf diese Weise kann das relativ langlebige Handteil weit über die durchschnittliche Lebenserwartung eines Aufsteckbürstenteils hinaus verwendet werden. Ferner erlaubt die Austauschbarkeit der Aufsteckbürstenteile auch die Benutzung eines einzigen Handteils durch mehrere Benutzer, zum Beispiel durch mehrere Familienmitglieder.

Vorliegende Erfindung befasst sich nun mit elektrischen Pflege- und Reinigungsbürsten, bei welchen der Bürstenkopf um eine Drehachse oszillierend rotiert. Bezogen auf elektrische Zahnbürsten befasst sich die vorliegende Erfindung mit einer Rotationszahnbürste.

Das Handteil und das Aufsteckbürstenteil solcher Pflege- und Reinigungsbürsten weisen jeweils Kupplungsmittel auf, zum gegenseitigen Kuppeln von Aufsteckbürstenteil und Handteil, d.h. zum Aufstecken des Aufsteckbürstenteils auf das Handteil.

Die Kupplungsmittel umfassen einen am Aufsteckbürstenteil im handteilseitigen Endabschnitt angeordneten, hülsenförmigen Kupplungsabschnitt mit einer Zapfenaufnahme. Ferner umfassen die Kupplungsmittel einen am Handteil im aufsteckbürstenseitigen Ende angeordneten Kupplungszapfen. Durch den Kupplungszapfen ist ein Steuerstift geführt, welcher endseitig aus dem Kupplungszapfen ragt und dazu dient, mechanische Antriebsenergie in das Aufsteckbürstenteil zu übertragen. Im Weiteren dient der Steuerstift dazu gewisse Teile des Aufsteckbürstenteils gegenüber dem Handteil zu fixieren.

Der Steuerstift wird durch den elektromotorischen Antrieb im Handteil über mechanische Mittel, wie ein Getriebe, in eine oszillierende Drehung versetzt. Diese oszillierende Drehung wird im Aufsteckbürstenteil wiederum über mechanische Mittel in eine oszillierende, Rotationsbewegung des Bürstenkopfes umgesetzt.

Für eine optimale, d.h. möglichst verlustfreie und geräuscharme Übertragung der mechanischen Bewegung vom Steuerstift auf das Aufsteckbürstenteil ist es wichtig, dass das Handteil und das Aufsteckbürstenteil über die Kupplungsmittel optimal passend miteinander verbunden sind. Das heisst, die Kupplungsmittel müssen so ausgelegt sein, dass die Verbindung von Aufsteckbürstenteil und Handteil im gekoppelten Zustand sowohl axial als auch gegen eine Verdrehung gesichert ist.

Die Publikationsschrift US 6,851,150 B2 beschreibt ein Aufsteckbürstenteil einer elektrischen Zahnbürste. Dieses umfasst einen Bürstenkopf mit Reinigungsborsten sowie einen Verbindungsabschnitt zum Aufstecken auf ein Handteil. Ferner umfasst das Aufsteckbürstenteil eine rohrförmigen Halsabschnitt zur Aufnahme eines Steuerstifts. Der Bürstenkopf ist am vorderen Ende des Aufsteckbürstenteils drehbar gelagert. Der Steuerstift ist im rohrförmigen Halsabschnitt zwischen dem Bürstenkopf und dem Verbindungsabschnitt angeordnet.

Die Publikationsschriften WO 2004/098445 A1, DE 44 38 732 A1, US 6 581 234 B2, US 2003/131427 und US 2016/331116 A1 beschreiben gattungsgemässe, elektrische Rotationszahnbürsten mit Antriebsmitteln, welche mit einem Motor zusammenwirken.

Herkömmliche elektrische Pflege- und Reinigungsbürsten weisen den Nachteil auf, dass sich das Aufsteckbürstenteil aus vielen Einzelteilen zusammensetzt. Ferner sind die mechanisch beanspruchten Teile herkömmlicher Aufsteckbürstenteile einem erhöhten Verschleiss unterworfen.

Es ist daher eine Aufgabe vorliegender Erfindung, ein mehrteiliges Aufsteckbürstenteil für eine elektrische Pflege- und Reinigungsbürste, insbesondere für eine elektrische Körperpflegebürste, wie elektrische Zahnbürste, vorzuschlagen, welches aus möglichst wenigen Einzelteilen besteht und einfach montiert werden kann.

Ferner soll sich das Aufsteckbürstenteil im Zusammenwirken mit dem Handteil und dem darin enthaltenen Antrieb der elektrischen Pflege- und Reinigungsbürste durch geringe Abnützung bzw. durch geringen Abrieb zwischen den mechanisch bewegten Teilen und entsprechend durch seine Dauerhaftigkeit und eine hohe Sicherheit für den Benutzer auszeichnen.

Ferner ist es die Aufgabe der vorliegenden Erfindung eine elektrische Pflege- und Reinigungsbürste, insbesondere eine elektrische Körperpflegebürste, wie elektrische Zahnbürste, mit einem mehrteiligen Aufsteckbürstenteil vorzuschlagen, welche günstig herzustellen ist und sich durch einen geringen Energieverbrauch auszeichnet.

Weiter offenbart ist die Umsetzung von besonderen Borstenfeldern angeordnet auf dem Aufsteckbürstenteil, welche über eine verbesserte Reinigungswirkung verfügen.

Die Erfindung wird durch die unabhängigen Ansprüche 1 und 15 gelöst.

Die abhängigen Ansprüche sowie die Beschreibung und die Figuren beinhalten besondere Ausführungsformen und Weiterbildungen der Erfindung.

Das mehrteilige Aufsteckbürstenteil enthält:
- ein Aufsteckbürstengehäuse;
- einen Antriebsstab zum Antreiben des Borstenträgers, mit einem bürstenkopfseitigen Endabschnitt, an welchem eine erste Zahnung angeordnet ist, und mit einem handteilseitigen Endabschnitt;
- einen Bürstenkopf mit einem Borstenträger und an diesem angeordneten Borsten, wobei der Borstenträger eine zweite Zahnung aufweist; sowie
- ein Festlegelement zur drehbaren Lagerung des handteilseitigen Endabschnittes des Antriebsstabes.

Ferner enthält das mehrteilige Aufsteckbürstenteil insbesondere einen Lagerstift zum Positionieren, Sichern und zum oszillierend drehbaren Lagern des Bürstenkopfs am Aufsteckbürstengehäuse.

Der Bürstenkopf kann ein- und insbesondere mehrteilig sein.

Die erste und zweite Zahnung bilden eine Antriebsverzahnung zum Antreiben des Borstenträgers bzw. des Bürstenkopfes durch den Antriebsstab aus. Das heisst, die oszillierende Drehbewegung des Antriebsstabes um eine geometrische Steuerdrehachse wird über die Antriebsverzahnung in eine oszillierende Rotationsbewegung des Bürstenkopfes um eine geometrische Trägerdrehachse übertragen. Durch die oszillierende Rotationsbewegung des Bürstenkopfes wird auch das Borstenfeld aktiv bewegt.

Die geometrische Steuerdrehachse wird nachfolgen vereinfacht nur noch "Steuerdrehachse" genannt. Die geometrische Trägerdrehachse wird nachfolgend vereinfacht nur noch "Trägerdrehachse" genannt.

Im Rahmen dieser Beschreibung werden die Begriffe "Vorderseite", "Rückseite" und "seitlich" verwendet. Die "Vorderseite" bezeichnet jene Seite der Pflege- bzw. Reinigungsbürste, auf welcher das Borstenfeld angeordnet ist. Das heisst, die "Vorderseite" entspricht der Pflege- bzw. Reinigungsseite. Die "Rückseite" bezeichnet die der "Vorderseite" und entsprechend dem Borstenfeld entgegengesetzte Seite der Pflege- bzw. Reinigungsbürste.

Als "seitlich" wird jener Bereich der Pflege- bzw. Reinigungsbürste bezeichnet, welcher mit Blick senkrecht auf die Vorderseite der Zahnbürste links oder rechts von einem Bezugspunkt angeordnet ist.

Mit der Richtungsangabe "oben" bzw. "oberhalb" ist eine Richtung entlang der Steuerdrehachse zum Gehäusekopf hin gemeint.

Mit der Richtungsangabe "unten" bzw. "unterhalb" ist eine Richtung entlang der Steuerdrehachse zum Handteil hin gemeint.

Das Handteil umfasst einen Griffkörper zum Halten der elektrischen Pflege- bzw. Reinigungsbürste. Der Griffkörper enthält ein Gehäuse, in welchem ein elektromotorischer Antrieb in der Regel mit einem Getriebe zum Antreiben eines Steuerstiftes angeordnet ist.

Das Getriebe kann beispielsweise so aufgebaut sein, dass sich ein Zahnrad, welches an der Antriebsachse des Motors angebracht ist, kontinuierlich in eine Richtung dreht. Das Zahnrad greift in die Zähne auf einem Kronenrad ein, und dieses wird kontinuierlich in eine Richtung gedreht. Die Drehachsen der Antriebsachse des Motors bzw. des entsprechenden Zahnrads und jene des Kronenrads stehen senkrecht aufeinander. Auf dem Kronenrad ist ein Nocken angebracht, der zur Drehachse des Kronenrades exzentrisch angebracht ist. Ein Abnehmer in Form eines U's, welcher den Nocken umgreift und mit einem Steuerstift verbunden ist, greift die Bewegung des Nockens ab und wandelt die Rotationsbewegung des Nockens in eine oszillierende Hin- und Her-Bewegung um. Damit wird erreicht, dass der Steuerstift eine entsprechende Bewegung ausführt. Die Achse des Steuerstifts ist wiederum im Wesentlichen parallel zur Antriebsachse des Motors.

Das Getriebe kann grundsätzlich auch anders aufgebaut werden. Das Getriebe ist jedoch im Wesentlichen so aufgebaut, dass dieses aus einer kontinuierlichen Drehbewegung des Motors eine oszillierende Drehbewegung des Steuerstifts generiert.

Ferner ist im Gehäuse ein Energiespeicher Versorgung des elektromotorischen Antriebs mit Strom angeordnet. Der Energiespeicher kann ein Akkumulator, wie z.B. ein NiMh- oder Li-Ion-Akkumulator, sein. Der Akkumulator kann über eine kabellose Verbindung (induktiv) oder über eine Kabelverbindung aufladbar sein.

Alternativ zu einem Akkumulator können auch Batterien (Primärzellen) verwendet werden, welche austauschbar sind.

Der elektromotorische Antrieb wird über eine Schalter und/ oder eine elektronische Steuerung im Handteil kontrolliert.

Die Bauart des elektromotorischen Antriebs kann insbesondere auch ein Schwingankerantrieb sein. Dieser erbringt eine schnelle oszillierende Drehbewegung mit einem relativ kleinen Winkel. Ein Getriebe ist in diesem Fall nicht nötig da der Schwingankerantrieb bereits eine oszillierende Drehbewegung auf den Steuerstift liefert.

Der elektromotorische Antrieb kann eine Drehzahl von 3'000 - 20'000 U/Min (Umdrehungen pro Minute), insbesondere von 5'000 - 16'000 U/Min, und ganz besonders von 6'000 - 13'000 U/Min aufweisen.

Ebenfalls im Gehäuse angeordnet ist ein mechanisches Getriebe zum Übertragen des Drehmoments vom elektromotorischen Antrieb auf den Steuerstift. Das Getriebe versetzt dabei den Steuerstift in eine oszillierende Drehbewegung um einen bestimmten Drehwinkel.

Das Getriebe kann so ausgelegt sein, dass der Drehwinkel des Steuerstiftes auf 30° bis 100°, insbesondere auf 50° bis 70°, beschränkt ist. Die Winkeleinheit "°" bezieht sich in dieser Beschreibung immer auf Winkelgrade.

Ferner wird durch das Getriebe auch die Drehzahl vom elektromotorischen Antrieb auf den Steuerstift herabgesetzt, so dass der Steuerstift mit einer kleineren Frequenz oszilliert als dies ohne Übersetzung der Drehzahl des Antriebsmotors der Fall wäre.

Am aufsteckbürstenseitigen Ende des Griffkörpers ist ein Kupplungszapfen zum Verbinden des Handteils mit dem Aufsteckbürstenteil angeordnet.

Es kann vorgesehen sein, dass der Steuerstift eine der oszillierenden Drehbewegung überlagerte Hubbewegung ausführt, welche ebenfalls auf den Bürstenkopf übertragen wird. Diese Hubbewegung kann neben der oszillierenden Bewegung eine weitere Bewegung im Bürstenkopf auslösen. Beispielswese kann eine zusätzliche Bewegung des Bürstenkopfes nach vorn oder nach oben ausgelöst werden.

Der Steuerstift besteht in der Regel aus Metall. Er weist in der Regel einen kreisförmigen Basisquerschnitt auf. Der Steuerstift geht in seinem bürstenkopfseitigen Endabschnitt, d.h. im Antriebsabschnitt vom kreisförmigen Basisquerschnitt in einen halbkreisförmigen Querschnitt über. D.h., der Steuerstift bildet im besagten Endabschnitt eine halbkreisförmige Aussparung mit einer ebenen Vorderseite und einer querschnittlich halbkreisbogenförmigen Rückseite aus.

Der Steuerstift ist durch den Kupplungszapfen hindurch aus dem Griffkörpergehäuse nach aussen geführt. Der Steuerstift tritt am aufsteckbürstenseitigen Ende des Handteils mit einem Antriebsabschnitt in Längsrichtung der Pflege- bzw. Reinigungsbürste aus dem Kupplungszapfen hervor. Das heisst, der Steuerstift verläuft in Längsrichtung der Pflege- bzw. Reinigungsbürste.

Der Steuerstift liegt auf der Steuerdrehachse, um welche der Steuerstift oszillierend rotiert.

Der Steuerstift kann im Antriebsabschnitt, insbesondere auf der bogenförmigen Umfangsfläche eines halbkreisförmigen Querschnitts, eine Rastkerbe enthalten. Die Rastkerbe dient dem Einrasten bzw. Einschnappen eines Rastelements am Aufsteckbürstenteil beim Zusammenführen von Handteil und Aufsteckbürstenteil. Auf diese Weise soll mit dem Aufsteckbürstenteil eine zusätzliche Axialsicherung hergestellt werden. Das Einrasten des Rastelements kann zudem eine akustische Rückmeldung zur Sicherung des Aufsteckbürstenteils geben.

Der Steuerstift kann einen Durchmesser von 1.5 mm bis 4.5 mm, insbesondere von 2.5 mm bis 3.5 mm, aufweisen.

Die Länge des Aufsteckbürstenteils kann 50 mm bis 90 mm, insbesondere 60 mm bis 80 mm, betragen. Die Breite des Aufsteckbürstenteils kann 10 mm bis 18 mm, insbesondere 12 mm bis 16 mm, betragen. Die Höhe des Aufsteckbürstenteils (ohne Borsten) kann 8 mm bis 20 mm, insbesondere 12 mm bis 16 mm, betragen.

Das Aufsteckbürstengehäuse des Aufsteckbürstenteils bildet eine Trägerstruktur zur Aufnahme verschiedener Bauteile, wie Bürstenkopf oder Antriebsstab. Ferner dient das Aufsteckbürstengehäuse auch zur Herstellung von Verbindungen zu anderen Bauteilen oder zur Lagerung von anderen Bauteilen. Das Aufsteckbürstengehäuse ist insbesondere einteilig, z. B. mittels Spritzgiessen ausgebildet.

Die Länge des Aufsteckbürstengehäuses kann 50 mm bis 90 mm, insbesondere 60 mm bis 80 mm, betragen.

Die grösste Breite des Aufsteckbürstengehäuses kann 8 mm bis 20 mm, insbesondere 10 mm bis 15 mm, betragen. Die Breite ist am bürstenkopfseitigen Ende insbesondere geringer als im handteilseitigen Ende.

Die grösste Höhe des Aufsteckbürstengehäuses kann 8 mm bis 18 mm, insbesondere 12 mm bis 14 mm, betragen. Die Höhe ist am bürstenkopfseitigen Ende insbesondere geringer als im handteilseitigen Ende.

Das Aufsteckbürstengehäuse ist aus einem Kunststoff hergestellt. Das Aufsteckbürstengehäuse umfasst mindestens eine Hartkomponente oder besteht aus dieser. Das Aufsteckbürstengehäuse besteht insbesondere aus Polybutylenterephthalat (PBT) oder enthält dieses.

Neben dem genannten Kunststoff kann das Aufsteckbürstengehäuse auch einen oder mehrere Zusatzstoffe zur Modifikation der Materialeigenschaften enthalten. Das Aufsteckbürstengehäuse kann z. B. Fasern zur Verstärkung enthalten. Die Zusatzstoffe sind dabei im matrixbildenden Kunststoff eingebettet. Mögliche weitere Zusatzstoffe werden im Abschnitt zu den Zusatzstoffen weiter unten näher beschrieben.

Polybutylenterephthalat zeichnet sich durch eine hohe Schlagzähigkeit und Abriebfestigkeit aus. Ersteres ist in Bezug auf das Herunterfallen des Aufsteckbürstenteils bzw. der Bürste von Bedeutung. Zweiteres ist in Bezug auf Reibkontakte mit dem Bürstenkopf und dem Antriebsstab von Bedeutung.

Das Aufsteckbürstengehäuse umfasst einen Gehäusehals und einen bürstenkopfseitig an den Gehäusehals anschliessenden Gehäusekopf. Der Gehäusehals ist ein rohrförmiger Körper mit einer durchgängigen Aufnahme, welche handteilseitig in einer Aufnahmeöffnung endet und bürstenkopfseitig in der Borstenträgeraufnahme des Gehäusekopfes mündet.

Der Gehäusehals dient insbesondere der Aufnahme des Antriebsstabes. Ferner nimmt der Gehäusehals auch das Festlegelement auf.

An die handteilseitige Aufnahmeöffnung schliesst in Richtung Bürstenkopf ein erster Aufnahmeabschnitt zur Aufnahme des Festlegelements an.

Gemäss einer besonderen Ausführungsvariante bildet der erste Aufnahmeabschnitt einen hülsenförmigen Kupplungsabschnitt mit einer Zapfenaufnahme zur Aufnahme des Kupplungszapfens eines Handteils aus.

Der Kupplungsabschnitt mündet in der Aufnahmeöffnung. Das Aufsteckbürstenteil und das Handteil werden durch Einschieben des Kupplungszapfens in die Zapfenaufnahme des Kupplungsabschnitts des Gehäusehalses miteinander verbunden.

Wird der Kupplungsabschnitt mit Zapfenaufnahme, wie weiter unten noch beschrieben, durch das Festlegelement ausgebildet, so werden das Aufsteckbürstenteil und das Handteil durch Einschieben des Kupplungszapfens in die Zapfenaufnahme des Kupplungsabschnitts des Festlegelements miteinander verbunden.

Es ist bekannt, dass unterschiedliche Modelle von elektrischen Zahnbürsten Kupplungszapfen mit unterschiedlichen Zapfengeometrien aufweisen. Es ist nun beispielsweise denkbar, dass der Kupplungsabschnitt im ersten Aufnahmeabschnitt des Gehäusehalses eine Innengeometrie zur Aufnahme eines Kupplungszapfens eines ersten Modells einer elektrischen Zahnbürste aufweist.

Das weiter unten noch detailliert beschriebene Festlegelement wiederum kann einen Kupplungsabschnitt mit einer Innengeometrie zur Aufnahme des Kupplungszapfens eines zweiten Modells einer elektrischen Zahnbürste aufweisen. Das heisst, die Innengeometrien der beiden Kupplungsabschnitte im Festlegelement und im Gehäusehals sind voneinander verschieden.

Je nachdem, mit welchem Modell die Aufsteckbürste kombiniert werden soll, kann in einem ersten Fall ein Festlegelement mit Kupplungsabschnitt und in einem zweiten Fall ein Festlegelement ohne Kupplungsabschnitt in den ersten Aufnahmeabschnitt des Gehäusehalses eingesetzt werden.

Im ersten Fall ist der Kupplungsabschnitt des Festlegelements im Kupplungsabschnitt des Gehäusehalses angeordnet. Entsprechend wird der Kupplungszapfen des Handteils mit dem Kupplungsabschnitt des Festlegelementes gekoppelt. Das Festlegelement dient in diesem Fall auch der Verbindung des Aufsteckbürstenteils mit dem Handteil.

Die Aussengeometrie des Kupplungsabschnittes des Festlegelements kann insbesondere der Innengeometrie des Kupplungsabschnittes des Gehäusehalses entsprechen. Das heisst, dass die Aussengeometrie des Kupplungsabschnittes des Festlegelements mindestens teilweise einer Schnittstelle eines ersten Modells entspricht. Der Kupplungsabschnitt des Festlegelements wird auf diese Weise formschlüssig im Kupplungsabschnitt des Gehäusehalses aufgenommen.

Im zweiten Fall ist das Festlegelement ohne Kupplungsabschnitt entsprechend kürzer ausgebildet als das Festlegelement mit Kupplungsabschnitt, so dass dieses den Kupplungsabschnitt im Gehäusehals nicht belegt, sondern in einem an den Kupplungsabschnitt in Richtung Bürstenkopf anschliessenden Abschnitt angeordnet ist. Entsprechend wird der Kupplungszapfen des Handteils mit dem Kupplungsabschnitt des Gehäusehalses gekoppelt.

Je nachdem, auf welches Modell von Handteil das Aufsteckbürstenteil aufgesetzt werden soll, wird nun ein Festlegelement mit oder ohne Kupplungsabschnitt in den Gehäusehals eingesteckt.

Dies hat den Vorteil, dass für mehrere Modelle von elektrischen Zahnbürsten ein gemeinsames Aufsteckbürstengehäuse eingesetzt werden kann. Dies wirkt sich entsprechend positiv auf die Werkzeug- und Herstellungskosten aus.

Grundsätzlich können sogar mehrere Typen von Festlegelementen vorgesehen sein, welche sich durch unterschiedlich ausgebildete Kupplungsabschnitte voneinander unterscheiden. Gegebenenfalls können sich die unterschiedlichen Typen von Festlegelemente auch bezüglich Durchführung des Steuerstiftes oder der Festlegung des Antriebsstabes unterscheiden. Dies als Folge unterschiedlicher Geometrien der Steuerstifte, welche manchmal mit unterschiedlichen Kupplungszapfen einhergehen.

Auf diese Weise lässt sich ein gemeinsames Aufsteckbürstengehäuse sogar für mehr als zwei Modelle von elektrischen Zahnbürsten mit unterschiedlichen Kupplungszapfen verwenden.

Es ist auch möglich, dass der erste Aufnahmeabschnitt am Gehäusehals keinen Kupplungsabschnitt ausbildet und die Kupplungsabschnitte mit den Zapfenaufnahmen ausschliesslich im Festlegelement untergebracht sind.

In der Gehäusewand des ersten Aufnahmeabschnitts kann eine federelastische Rastzunge mit einer Rastnase angeordnet sein. Die Rastzunge ist über einen U-förmigen Schlitz in der Gehäusewand freigelegt. Die Anordnung, d.h. Rastzunge, ist vorzugsweise auf der Rückseite angebracht.

Die Rastzunge rastet mit ihrer Rastnase in eine Vertiefung am Festlegelement ein und fixiert das in den Gehäusehals eingeschobene Festlegelement in axialer Richtung. Zusätzlich verfügen die genannten Teile über eine Passung, so dass nach der Montage ein genügender Kraft- bzw. Reibschluss entsteht.

Im ersten Aufnahmeabschnitt können zum zweiten Aufnahmeabschnitt hin eine oder mehrere Nuten angeordnet sein. Die Nut bzw. Nuten verlaufen insbesondere entlang des Umfangs. Das heisst, ihre Längserstreckung ist quer zur Längsachse des Aufsteckbürstengehäuses ausgerichtet.

So können insbesondere zwei Nuten ausgebildet sein, die axial an derselben Stelle bzw. auf derselben Höhe im ersten Aufnahmeabschnitt bzw. im Aufsteckbürstengehäuse angebracht sind und sich jeweils über einen Teil des Umfangs erstrecken.

Die eine oder mehrere Nuten wirken im montierten Zustand insbesondere mit entsprechenden Erhebungen zusammen, welche im Festlegelement ausgeformt sind.

Zusammen bewirken diese eine noch stabilere Montage des Festlegelements im ersten Aufnahmeabschnitt in axialer Richtung.

Im Weiteren schliesst an den ersten Aufnahmeabschnitt in Richtung Bürstenkopf ein zweiter Aufnahmeabschnitt zur Aufnahme des Antriebsstabes an.

Am bürstenkopfseitigen Ende des zweiten Aufnahmeabschnittes ist ein, insbesondere länglicher Pinnaufnahmekörper mit einer Pinnaufnahme zur Aufnahme des Lagerpinns eines weiter unten noch beschriebenen Antriebstabes angeordnet. Der Pinnaufnahmekörper ragt insbesondere ein Stück weit in die Borstenträgeraufnahme des Gehäusekopfes hinein. Die Aussenfläche des Pinnaufnahmekörpers ist zur Vorderseite hin querschnittlich insbesondere bogenförmig bzw. gerundet ausgebildet. Die Pinnaufnahme ist insbesondere eine kreiszylinderförmige Vertiefung. Die Pinnaufnahme ist insbesondere ein Langloch. Die Pinnaufnahme ist insbesondere als Sackloch ausgebildet mit einer handteilseitigen Öffnung. Die Pinnaufnahme liegt insbesondere auf der Steuerdrehachse.

Die Pinnaufnahme kann im Bereich der Einführöffnung eine trichterartige Erweiterung aufweisen, welche als Einführhilfe für den Lagerpinn dient.

Die Pinnaufnahme kann eine Länge bzw. Tiefe von 1 mm bis 5 mm, insbesondere von 2.5 mm bis 3.5 mm, aufweisen. Die Pinnaufnahme kann einen Durchmesser von 0.8 mm bis 2 mm, insbesondere von 1 mm bis 1.5 mm, aufweisen.

Zwischen Lagerpinn und Pinnaufnahme besteht insbesondere genügend Spiel, so dass Toleranzabweichungen des Antriebsstabes aufgenommen werden können. So besteht insbesondere eine seitliche Toleranz von 0.05 mm bis 0.2 mm, vorzugsweise von 0.08 mm bis 0.15 mm. Damit können u.a. Winkelabweichungen zwischen den Bauteilen aufgefangen werden.

In Längsrichtung besteht zwischen dem Antriebsstab und dem Aufsteckbürstengehäuse beziehungsweise dem Festlegelement im montierten Zustand insbesondere ein Spiel von 0.1 mm bis 1 mm, vorzugsweise von 0.2 mm bis 0.5 mm. Damit können Längstoleranzen in Bezug auf den Steuerstift kompensiert werden.

Der Pinnaufnahmekörper ist insbesondere an der rückseitigen Gehäusewand angeordnet und ragt von dieser in den zweiten Aufnahmeabschnitt hinein.

Der Pinnaufnahmekörper kann über eine Verbindungsrippe mit einer Lagerungshülse für einen Lagerstift im Gehäusekopf verbunden sein. Die Verbindungsrippe kann überdies mit der rückseitigen Gehäusewand verbunden sein. Dies erhöht die Stabilität des Gehäusekopfes und macht diesen robuster gegenüber Schlägen und Stössen. Die Rippe, wie auch der Pinnaufnahmekörper sind insbesondere integraler Teil des Aufsteckbürstengehäuses.

Die Rippe kann als gradliniges Bauteil zwischen Lagerungshülse für den Lagerstift im Gehäusekopf und dem Pinnaufnahmekörper gestaltet sein.

Die Rippe kann aber insbesondere auch eine breitere Grundform haben, mit breiterer Basis und auch grösserer bzw. breiterer Endfläche.

Die Verbindungsrippe kann eine Höhe von 2 mm bis 2.5 mm aufweisen. Die Verbindungsrippe kann an ihrer Basis eine Breite von 0.4 bis 1.2 mm, insbesondere von 0.6 mm bis 1 mm, aufweisen. Dies trifft insbesondere zu, wenn Verbindungsrippe als gradliniges Bauteil geformt ist.

Die Verbindungsrippe kann auch als pfeilförmiges Element geformt sein bzw. dieses umfassen oder dieses ausbilden und z. B. eine Pfeilspitze und einen Pfeilschaft umfassen. Die Spitze ist hierbei zur Lagerungshülse gerichtet während der Schaft zum Pinnaufnahmekörper weist. Der Schaft kann mindestens einen Teil des Pinnaufnahmekörpers ausbilden

In diesem Fall beträgt die Breite an der Basis der Pfeilspitze insbesondere maximal von 2.5 bis 6 mm. Die Breite im Bereich des Pfeilschafts beträgt insbesondere von 0.7 bis 2 mm.

Die pfeilförmige Ausgestaltung der Verbindungsrippe führt zu einer, in Montagerichtung des Bürstenkopfs betrachteten, grösseren Endfläche, welche auch als Abstützung oder als Kippbegrenzung für den Bürstenkopf wirkt. Die besagte Endfläche wirkt dabei als Anschlagfläche in Montagerichtung des Bürstenkopfs.

Die Verbindungsrippe kann sich ferner von ihrer Basis an der Gehäusewand in Richtung freies Ende verjüngen.

Im Übergang vom ersten zum zweiten Aufnahmeabschnitt können in der Gehäusewand des Gehäusehalses eine, insbesondere zwei, einander gegenüber liegende Durchgangsöffnungen angeordnet sein. Die Ausnehmungen, insbesondere Durchgangsöffnungen, dienen der Aufnahme der Rastnasen von Rastzungen am Festlegelement. Es ist weiter möglich, dass drei oder vier Durchgangsöffnungen zur Aufnahme von Rastnasen von Rastzungen angeordnet sind.

Im Weiteren können sowohl im Gehäusehals als auch im Gehäusekopf Durchgangsöffnungen, insbesondere schlitzartige Durchgangsöffnungen, in der Gehäusewand vorgesehen sein. Diese dienen dem Wasserdurchfluss beim Reinigen des Aufsteckbürstenteils. Damit können beispielsweise Rückstände von Zahnpasta, welche in das Aufsteckbürstenteil eingedrungen sind, ausgespült werden.

So kann im zweiten Aufnahmeabschnitt des Gehäusehalses, insbesondere zum Gehäusekopf hin, je eine Durchgangsöffnung auf der Vorderseite und auf der Rückseite vorgesehen sein.

Die Länge der Durchgangsöffnungen kann 5 mm bis 9 mm, insbesondere 6.5 mm bis 7.5 mm, betragen. Die Breite der Durchgangsöffnungen kann 0.5 mm bis 2.5 mm, insbesondere 1 mm bis 2 mm, betragen.

Im Gehäusekopf können die Durchgangsöffnungen auf der Rückseite angeordnet sein. So können auf der Rückseite geradlinige oder bogenförmige, schlitzartige Durchgangsöffnungen vorgesehen sein, welche konzentrisch um die Trägerdrehachse angeordnet sind. Es können 2 bis 5, insbesondere 3 solcher Durchgangsöffnungen vorgesehen sein.

Die Länge der Schlitzöffnung kann 2 mm bis 5 mm, insbesondere 2.5 mm bis 3.5 mm, betragen. Die Breite der Schlitzöffnung kann 0.5 mm bis 2 mm, insbesondere 0.7 mm bis 1.5 mm, betragen.

An der Aussenfläche des Gehäusehalses können Abzugsrippen, insbesondere ringförmige Abzugsrippen, angeordnet sein. Diese sind konzentrisch zur Steuerdrehachse. Die Abzugsrippen sollen den nötigen Halt beim Abziehen des Aufsteckbürstenteils vom Handteil gewährleisten. Die Abzugsrippen können aus einem anderen Material als das Aufsteckbürstengehäuse, beispielsweise aus einer Weichkomponente hergestellt sein.

Der Gehäusekopf bildet eine becherförmige Borstenträgeraufnahme aus, welche zur Vorderseite hin über eine Trägeraufnahmeöffnung offen ist. Die Borstenträgeraufnahme dient dazu, wenigstens die Funktionseinheit des Borstenträgers aufzunehmen bzw. zu lagern.

Gemäss einer besonderen Weiterbildung kann vorgesehen sein, dass der Trägerkörper mit den Pflegeborsten ausserhalb der Trägeraufnahmeöffnung angeordnet ist.

Die Trägeraufnahmeöffnung wird von einer umlaufenden Stirnendfläche begrenzt, welche entlang des Umfanges unterschiedliche Breiten aufweist. Diese unterschiedlichen Breiten repräsentieren unterschiedliche Wanddicken im Gehäusekopf. So kann die Aussengeometrie der Stirnendfläche kreisrund sein, während die Innengeometrie durch die ändernden Wanddicken unregelmässig ist.

Der Gehäusekopf weist insbesondere an seinem äussersten Kopfende entlang der Steuerdrehachse die grösste Wanddicke auf, da hier der Gehäusekopf bezüglich mechanischer Beanspruchung besonders exponiert ist und sich an dieser Stelle herstellungsbedingt eine Zusammenflussstelle des Kunststoffes befindet. Die Wanddicke kann hier 1 mm bis 2.5 mm, insbesondere 1.5 mm bis 2 mm, betragen. Zum Gehäusehals hin weist der Gehäusekopf insbesondere die geringste Wanddicke auf, da hier der anschliessende Gehäusehals für die notwendige Stabilität sorgt. Die Wanddicke kann hier 0.45 mm betragen.

In der Borstenträgeraufnahme ist eine Lagerungshülse mit einer Durchführöffnung zum Hindurchführen eines nachfolgend noch beschriebenen Lagerstiftes angeordnet. Die Lagerungshülse bzw. die Durchführöffnung weist eine Länge von 2 mm bis 7 mm, insbesondere von 3.5 mm bis 5 mm, auf.

Die Lagerungshülse kann eine zur Vorderseite gerichtete umlaufende, insbesondere ringförmig, wie kreisringförmig umlaufende Anschlagschulter ausbilden, welche einen zylinderförmigen Endabschnitt der Durchführöffnung umschliesst. Die Anschlagschulter kann mit einer zum Bürstenkopf gerichteten Stirnendfläche des Begrenzungsnockens in einer Ebene liegen.

Der zylinderförmige, insbesondere kreiszylinderförmige Endabschnitt greift insbesondere in eine nachfolgend noch beschriebene Zylinderaufnahme an der Funktionseinheit ein und liegt mit der Stirnendfläche einer ebenfalls nachfolgend beschriebenen Auflageschulter auf, welche eine Lagerstiftaufnahme umgibt.

Auf der Rückseite des Gehäusekopfes ist eine Senkung zur Aufnahme des Stiftkopfs des Lagerstifts vorgesehen. Das an anderer Stelle noch beschriebene Zusammenspiel zwischen Stiftkopf und Senkung begünstigen die Stabilität des Lagerstiftes und nehmen insbesondere seitliche Kräfte auf diesen auf.

Die Senkung kann einen Durchmesser von 1.5 mm bis 4 mm, insbesondere von 2 mm bis 2.6 mm, aufweisen. Die Tiefe der Senkung kann 0.5 mm bis 4 mm, insbesondere 1 mm bis 2 mm, betragen.

Der bereits weiter oben erwähnte Begrenzungsnocken ist insbesondere an der Aussenwand der Lagerungshülse für den Lagerstift angeordnet und mit dieser verbunden sein. Der Begrenzungsnocken kann ferner auch mit der rückseitigen Gehäusewand verbunden sein. Der Begrenzungsnocken ist insbesondere zum äussersten Kopfende entlang der Steuerdrehachse gerichtet.

Begrenzungsnocken ist insbesondere integraler Teil des Gehäusekopfes. Der Begrenzungsnocken ist insbesondere auf der Verlängerung der Steuerdrehachse angeordnet.

Der Begrenzungsnocken und die Pinnaufnahme des Pinnaufnahmekörpers sind insbesondere in einer gemeinsamen Ebene angeordnet. Die Steuerdrehachse ist insbesondere ebenfalls in dieser Ebene angeordnet. Falls vorhanden, kann auch eine Verbindungsrippe wie weiter oben beschrieben in dieser Ebene angeordnet sein. Auch die Durchführöffnung der Lagerungshülse kann in dieser Ebene angeordnet sein. Die Ebene entspricht insbesondere der Mittelängsebene des Aufsteckbürstenteils.

Der Begrenzungsnocken kann im Wesentlichen trapezförmig ausgebildet sein. Das heisst, der Begrenzungsnocken verjüngt sich von seinem freien Ende zu seiner Basis hin. Die Trapezform ist insbesondere symmetrisch. Die Seitenflanken des trapezförmigen Begrenzungsnockens können gegenüber der Steuerdrehachse einen Winkel von 20° bis 70°, insbesondere von 35° bis 60° einschliessen.

Grössere Winkel der Seitenflanken des trapezförmigen Begrenzungsnockens bringen mit sich, dass die (Trapez-) Fläche zur Vorderseite hin, auch Endfläche genannt, grösser wird. Damit werden neben der Winkelbegrenzung auch entsprechende Stützflächen grösser. In Richtung Rückseite werden überdies die VerstärkungsRippen stabiler ausgebildet.

Die Wanddicke des Aufsteckbürstenteils kann, abgesehen von den oben genannten Wanddicken des Gehäusekopfs, 0.5 mm bis 1.8 mm, insbesondere 0.8 mm bis 1.3 mm betragen. Grundsätzlich sind die Wanddicken im Aufsteckbürstenteil variabel und entsprechend deren Funktionalität und Anforderungen an den entsprechenden Stellen optimiert.

An der Aussenseite des Aufsteckbürstengehäuses können Informationen, wie Schriftzüge oder Zeichen angebracht sein. Die Informationen können mittels eines Druckverfahrens wie Tampon-Druckverfahren, Digitaldruckverfahren aufgebracht werden. Die Informationen können auch mittels eines Prägeverfahrens aufgebracht werden.

Ferner können die Informationen auch mittels entsprechender Einsätze, wie Schrifteinsätze, im Spritzgiesswerkzeug während des Spritzgiessens integral eingebracht werden. In diesem Fall werden die Informationen, wie auch beim Prägen, mittels erhobenen und vertieften Bereichen wiedergegeben. Dieses Verfahren kann auch mit einem Prägeverfahren oder einem Druckverfahren kombiniert werden.

Zusätzlich oder alternativ können Informationen auch mittels Verwendung von zwei farblich verschiedenen Materialien, insbesondere Kunststoffkomponenten, erzeugt werden. Insbesondere kann das Aufsteckbürstengehäuse im Mehrkomponentenspritzgussverfahren hergestellt werden. Es bietet sich dazu die Verwendung einer Hart- und einer Weichkomponente an.

An der Aussenseite des Aufsteckbürstengehäuses, insbesondere des Gehäusekopfes können bezüglich des oszillierend drehbaren Bürstenkopfs stationäre Funktionselemente, beispielsweise Borsten, wie gespritzte Borsten, Massageelemente oder Zungenreiniger, angeordnet sein. Die genannten Funktionselemente können einzeln oder in Kombination miteinander vorgesehen sein. Die genannten Funktionselemente können auf der Vorder- und/oder der Rückseite des Gehäusekopfes angeordnet sein.

Es kann vorgesehen sein, dass die besagten Funktionselemente durch die Bewegung des Bürstenkopfs in Bewegung versetzt werden. Die Funktionselemente können z. B. durch die Bewegung des Borstenträgers verdrängt werden, was zu einer Bewegung der Funktionselemente führt.

Die Funktionselemente können alternativ auch direkt durch den Antriebsstab in Bewegung versetzt werden. Insbesondere ist es möglich, dass die Funktionselemente durch eine überlagerte Bewegung des Antriebsstabes (beispielsweise eine Längsbewegung) in Bewegung versetzt werden.

Die genannten Funktionselemente können zusammen mit dem Aufsteckbürstengehäuse aus einer gemeinsamen Komponente hergestellt sein. Die genannten Elemente können allerdings auch in einem Mehrkomponenten-Spritzgiessverfahren aus einer anderen Materialkomponente als die Hartkomponente des Aufsteckbürstengehäuses, insbesondere aus einer Weichkomponente, hergestellt sein.

Vorzugsweise werden alle Elemente aus Weichmaterial in einem Arbeitsgang am Aufsteckbürstengehäuse angespritzt.

Die Funktionselemente können an die Aussenseite des Aufsteckbürstengehäuses oder des Bürstenkopfs angespritzte Elemente aus einer Weichkomponente sein. Diese Elemente können zur Dämpfung der durch den Betrieb der Zahnbürste verursachten Geräusche dienen. Die Elemente können auch zum Abdichten gegen Wassereintritt dienen.

Im Weiteren können die Funktionselemente Dämpfungselemente gegen Stösse und Schläge sein. So können die Dämpfungselemente die Mundhöhle vor unbeabsichtigten Stössen des Aufsteckbürstenteils während der Zahnpflege schützen. Ferner können Dämpfungselemente auch als Fallschutz dienen.

Im Weiteren können die Funktionselemente auch einer besseren Haptik dienen. So können die Funktionselemente, wie Griffelemente, z.B. Griffmulden, Rippen etc., zum Abziehen und Aufstecken des Aufsteckbürstenteils auf das Handteil dienen.

Ferner können die Funktionselemente auch nachgiebige, d.h. elastische Oberflächen ausbilden, welche sich z. B. zum Auffangen von Toleranzen oder zur Herstellung einer Vorspannung dienen, zum Beispiel zwischen Kupplungsabschnitt und Kupplungszapfen. Hierzu können die Funktionselemente auch im Gehäuseinneren, z. B. im Kupplungsabschnitt, angespritzt sein.

Die Funktionselemente aus Weichkomponente können insbesondere auch dazu dienen, Durchbrüche in der Hartkomponente am Aufsteckbürstengehäuse mindestens teilweise zu verschliessen oder abzudecken.

Dies können insbesondere Durchbrüche sein, welche zur Montage anderer Teile am oder im Aufsteckbürstengehäuse technisch notwendig sind.

Bei der Montage anderer Teile kann die Weichkomponente dabei mindestens teilweise verdrängt werden und dabei federnd bzw. elastisch wirken. Dadurch wird die Montage anderer Teile von aussen nicht oder weniger sichtbar. Ferner wird auch die Verschmutzung dieser Montagezonen reduziert.

Andere Teile können beispielsweise der Lagerstift, das Festlegeelement oder der Bürstenkopf sein. Es sei explizit erwähnt, dass diese Methode auch für andere hier nicht aufgeführte Teile verwendet werden kann ohne den Rahmen der Erfindung zu verlassen.

Die Funktionselemente können auch in Kombination mit einer Materialschwächung in der Hartkomponente des Aufsteckbürstengehäuse eingesetzt werden, um so zum Beispiel flexible Zonen zu schaffen.

Der Antriebsstab hat die Funktion, in seinem handteilseitigen Endabschnitt den Steuerstift des Handteils aufzunehmen, wenn das Aufsteckbürstenteil auf das Handteil aufgesteckt ist. Der Antriebsstab bildet hierzu an seinem handteilseitigen Endabschnitt eine Steuerstiftaufnahme für den Endabschnitt des Steuerstiftes aus. Der Antriebsstab ist in diesem Abschnitt insbesondere hülsen- bzw. rohrförmig ausgebildet.

Die Längsachse der Steuerstiftaufnahme verläuft insbesondere entlang der Steuerdrehachse.

Der Steuerstift ist mit seinem Endabschnitt in die Steuerstiftaufnahme hinein geschoben. Die Steuerstiftaufnahme dient insbesondere zur formschlüssigen und/oder kraftschlüssigen Aufnahme des Steuerstiftes.

So soll die oszillierende Drehung des Steuerstiftes über die beschriebene Verbindung möglichst verlustfrei auf den Antriebsstab übertragen werden. Die oszillierende Drehbewegung ist wie bereits andernorts erwähnt keine 360° Drehung sondern folgt einem definierten oszillierenden Drehwinkel.

Das Aufsteckbürstengehäuse ist zusammen mit dem Handteil relativ zur oszillierenden Drehbewegung von Steuerstift, Antriebsstab und Bürstenkopf im Wesentlichen stationär.

Trotz einer form- und/oder kraftschlüssigen Aufnahme des Steuerstiftes ist der Antriebsstab bzw. dessen Steuerstiftaufnahme bevorzugt mit gewissen Toleranzen ausgestaltet, welche erlauben, Steuerstifte unterschiedlicher Hersteller bzw. Formen und Toleranzen aufzunehmen.

Der Antriebsstab, bzw. dessen Wand kann im Bereich der Steuerstiftaufnahme insbesondere auch eine gewisse Nachgiebigkeit bzw. Elastizität aufweisen, so dass die Steuerstiftaufnahme bedingt an unterschiedliche Stiftquerschnitte anpassbar ist und z. B. eine bedingte, elastische Erweiterung des Aufnahmequerschnittes erlaubt. Die Steuerstiftaufnahme kann über Verdrängungsrippen oder andere deformierbare Elemente verfügen.

Zur Nachgiebigkeit der Wände tragen insbesondere auch Durchbrüche bei, welche zur Ausbildung einer Andrückzunge vorgesehen sind.

Bei entsprechender Materialwahl sind aber Durchbrüche nicht in jedem Fall notwendig. In gewissen Fällen wirken sie höchstens unterstützend.

Es kann insbesondere ein Gleitsitz zwischen dem Steuerstift und dem Antriebsstab geschaffen werden.

Der Antriebsabschnitt des Steuerstiftes ist in der Steuerstiftaufnahme gegenüber dem Antriebsstab drehsicher gelagert, so dass gewährleistet ist, dass eine oszillierende Drehbewegung des Steuerstiftes vollumfänglich auf den Antriebsstab übertragen wird.

Die Drehsicherung wird über eine beispielsweise im Zusammenhang mit dem Steuerstift beschriebene, nicht rotationssymmetrische Ausgestaltung des Antriebsabschnittes des Steuerstifts erreicht.

Die Steuerstiftaufnahme kann einen kreiszylinderförmigen Basisquerschnitt aufweisen. Weist der Antriebsabschnitt des Steuerstifts eine oben beschrieben kreissegmentförmige Aussparung auf, so kann die Steuerstiftaufnahme, bezogen auf den kreisförmigen Basisquerschnitt eine gegengleiche, kreissegmentförmige Wandverdickung umfassen.

Dies gewährleistet zum einen eine formschlüssige Aufnahme des Antriebsabschnittes mit Aussparung in der Steuerstiftaufnahme und somit eine Verdrehsicherung. Zum anderen wird so auch die Drehlage des Steuerstiftes und somit des Handteils vorgegeben, womit ein falsches Aufstecken des Aufsteckbürstenteils auf das Handteil verhindert wird.

Allerdings kann die besagte Drehlage auch durch eine nicht rotationssymmetrische Ausgestaltung des Kupplungszapfens am Handteil und der Zapfenaufnahme des Kupplungsabschnittes am Aufsteckbürstenteil vorgegeben werden.

Die Steuerstiftaufnahme kann eine grössere Länge entlang der Steuerdrehachse aufweisen als die Länge des eingeschobenen Antriebsabschnittes des Steuerstiftes. Das heisst, die Aufnahme weist bei eingeschobenem Antriebsabschnitt zum Bürstenkopf hin noch einen Freiraum auf. Der eingeschobene Antriebsabschnitt füllt also die Aufnahme zum Bürstenkopf hin nicht vollständig aus.

Der Antriebsstab kann, wie bereits weiter oben erwähnt, im Bereich der Steuerstiftaufnahme eine in der Wand der Steuerstiftaufnahme federelastisch gelagerte Andrückzunge aufweisen. Diese drückt gegen den in die Steuerstiftaufnahme eingeführten Steuerstift und klemmt diesen so (zusätzlich) in der Steuerstiftaufnahme.

Die Andrückzunge ist mittels eines Durchbruchs, insbesondere eines schlitzförmigen Durchbruchs in der Wand der Steuerstiftaufnahme aus dieser freigelegt. Der Durchbruch kann insbesondere U-förmig sein. Der Durchbruch kann gleichzeitig als Entlüftungsöffnung dienen, über welche die durch den eingeführten Antriebsabschnitt des Steuerstiftes verdrängte Luft entweichen kann.

Die Länge der Andrückzunge kann 2 mm bis 10 mm, insbesondere 3 mm bis 7 mm, betragen. Je grösser die Länge der Andrückzunge ist, desto grössere Auslenkungen der Andrückzunge und entsprechend desto grössere Andrückkräfte auf den Steuerstift sind möglich.

Die Andrückzunge kann in einer Weiterbildung zwecks Ausbildung einer Axialsicherung als Rastzunge mit einer nach innen gerichteten Rastnase zum Einrasten in eine Rastkerbe am Steuerstift ausgebildet sein.

Rastkerbe und Rastnase sind allerdings insbesondere derart ausgestaltet und aufeinander abgestimmt, dass die Rastverbindung durch Ausüben einer bestimmten Abzugskraft auf das Aufsteckbürstengehäuse von Hand wieder gelöst werden kann. Die Abzugsbewegung ist entsprechend parallel zur Längsachse des Steuerstiftes bzw. zur Steuerdrehachse.

Weiter ist es möglich, dass als zweites Federelement ein Schlitz im Antriebsstab in Längsrichtung auf der Bürstenkopfseite in der Fortsetzung des U-förmigen Durchbruchs geschaffen wird. Dadurch wird der Steuerstift weiter geklemmt. Die Länge des Schlitzes kann 2 mm bis 10 mm, vorzugsweise 3 mm bis 7 mm betragen.

Gemäss einer Weiterbildung weist der Antriebsstab im handteilseitigen Endabschnitt der Steuerstiftaufnahme einen Anschlagzylinder auf. Der Anschlagzylinder ist ein ringförmiger, insbesondere kreisringförmiger Hohlzylinderabschnitt von geringerem Aussendurchmesser als der Aussendurchmesser des daran anschliessenden Aufnahmeabschnitts der Steuerstiftaufnahme des Antriebsstabes. Der Anschlagzylinder weist entsprechend einen kreisförmigen Innenquerschnitt auf.

Die Länge des Anschlagzylinders kann 1 mm bis 4.5 mm, insbesondere 2 mm bis 3.5 mm, betragen. Der Aussendurchmesser des Anschlagzylinders kann 3 mm bis 7 mm, insbesondere 4 mm bis 5.5 mm, betragen.

Im Übergang vom Aufnahmeabschnitt zum Hohlzylinderabschnitt wird eine umlaufende oder teilumlaufende Anschlagschulter ausgebildet.

Ist die Anschlagschulter als teilumlaufende Anschlagschulter ausgebildet, so sind vorzugsweise zwei bis vier Abschnitte einer Anschlagschulter realisiert. Diese sind vorzugsweise symmetrisch oder regelmässig angeordnet und bilden jeweils eine Teilschulter der gesamten Anschlagschulter.

Die Anschlagschulter kann auch mit unterschiedlicher Schulterbreite umlaufend ausgebildet sein. So kann die Anschlagschulter beispielsweise mit einem oder mehreren Abschnitten mit geringerer Schulterbreite und mit einem oder mehreren Abschnitten mit grösserer Schulterbreite jeweils teilumlaufend ausgebildet sein.

Die Anschlagschulter kann eine Schulterbreite von 0.2 mm bis 3 mm, insbesondere von 0.3 mm bis 0.8 mm, beziehungsweise von 1.2 mm bis 1.8 mm, aufweisen.

Wird eine Anschlagschulter mit teilumlaufenden Schulterabschnitten ausgebildet, so decken die einzelnen Anschlagschulterabschnitte gegenüber der Steuerachse jeweils einen Winkel von 40° bis 120°, vorzugsweise von 50° bis 80° ab.

In einer Ausführungsform, bei welcher im Festlegelement im bürstenseitigen Hülsenabschnitt die Wandung weggelassen wird, ist es möglich die Anschlagschulter zumindest teilweise breiter auszugestalten als gezeigt. Durch den zusätzlich gewonnenen Platz auf der Innenanschlagfläche am Festlegelement kann auch die Abstützung durch die Anschlagschulter eine grössere Fläche einnehmen.

Die Funktion des ringförmigen Hohlzylinderabschnittes und der dazugehörigen Anschlagschulter wird im Zusammenhang mit der Beschreibung des Festlegelementes noch näher erörtert.

Der Antriebsstab hat im Weiteren die Funktion, eine oszillierende Drehbewegung des Steuerstiftes an den Borstenträger bzw. den Bürstenkopf weiterzugeben.

Hierzu enthält der Antriebsstab an seinem bürstenkopfseitigen Endabschnitt die erste Zahnung, welche mit der im Zusammenhang mit dem Borstenträger noch näher beschriebenen zweiten Zahnung eine Antriebsverzahnung ausbildet. Die erste Zahnung ist um die Steuerdrehachse schwenkbar.

Die erste Zahnung besteht beispielsweise aus 1, 2, 3, 4 oder 5, insbesondere 2 Zähnen. Die Zähne sind vergleichsweise gross ausgebildet, was den Ausgleich von Toleranzen erleichtert.

Die Stirnendflächen der ersten Zähne, über welche der Eingriff mit den zweiten Zähnen erfolgt, können gegenüber der Steuerdrehachse eine Neigung von 30° bis 60°, insbesondere von 40° bis 50° und ganz besonders von 45° aufweisen.

Die Aussengeometrie des Antriebsstabs kann asymmetrisch, d.h. nicht rotationssymmetrisch zur Steuerdrehachse ausgebildet sein.

Der Antriebsstab ist insbesondere nicht rotationssymmetrisch aufgebaut. Der Antriebsstab kann insbesondere eine Krümmung aus der Steuerdrehachse heraus aufweisen. So kann der Antriebsstab wenigstens zwei über einen Krümmungsabschnitt miteinander verbundene Längsabschnitte umfassen oder aus diesen Abschnitten bestehen.

So kann ein erster handteilseitiger Längsabschnitt des Antriebsstabes parallel zur Steuerdrehachse verlaufen und ein zweiter bürstenkopfseitiger Längsabschnitt gegenüber der Steuerdrehachse zur Vorderseite hin geneigt sein. Das heisst, die Längsachse des Antriebsstabs ist nicht zwingend deckungsgleich mit der Steuerdrehachse.

Der Antriebsstab kann eine Einschnürung bzw. Verjüngung (Einschnürungsabschnitt) aufweisen, in welcher der Durchmesser reduziert ist. D.h. der Antriebsstab kann einen Teilabschnitt mit kleinerem Durchmesser aufweisen. Der reduzierte bzw. verringerte Durchmesser kann 1.5 mm bis 4 mm, insbesondere 2 mm bis 3 mm betragen.

Der Bereich der Einschnürung bzw. Verjüngung kann einen Anteil von 10% bis 30%, insbesondere von 12% bis 18% der Gesamtlänge des Antriebsstabs einnehmen.

Das Gestalten einer Einschnürung im Antriebsstab bewirkt, dass dieser eine höhere Flexibilität aufweist, und so Belastungen, die beim Aufstecken oder im Betrieb der Aufsteckbürste entstehen, besser aufgefangen werden können. Insgesamt ergibt sich so eine bessere Performance und ein tieferer Energieverbrauch.

Der Antriebsstab kann eine Länge von von 30 mm bis 65 mm, insbesondere von 40 mm bis 55 mm, aufweisen. Der Antriebsstab kann eine maximale Breite (Ausdehnung zwischen den beiden Seiten der Körperpflegebürste) von 5 mm bis 8.5 mm, insbesondere von 6 mm bis 7.5 mm, aufweisen. Der Antriebsstab kann eine Höhe (Ausdehnung zwischen der Vorder- und Rückseite der Körperpflegebürste) von 5 mm bis 9 mm, insbesondere von 6.4 mm bis 7.5 mm, aufweisen.

Der Antriebsstab bildet an seinem bürstenkopfseitigen Endabschnitt einen Lagerpinn aus. Der Lagerpinn ist dabei derart am Antriebsstab angeordnet, dass dieser in der Steuerdrehachse verläuft.

Das heisst, die Längsachse der Steuerstiftaufnahme und die Längsachse des Lagerpinns liegen auf der Steuerdrehachse und somit im Wesentlichen auf einer gemeinsamen geometrischen Achse.

Da die Steuerachse bei verschiedenen Modellen in Bezug auf die Längsrichtung über Toleranzen verfügen kann, verfügt die Lagerung des Lagerpinns in der Pinnaufnahme über genügend Toleranzen bezüglich einer Winkelabweichung der Steuerachse bzw. des Antriebstabs.

Gemäss einer Weiterbildung weist der Antriebsstab in einem bürstenkopfseitigen Endabschnitt eine Querschnittsaussparung auf, welche zum handteilseitigen Endabschnitt hin durch eine Lagerpinnschulter begrenzt wird. Der Lagerpinn ist nun über seine Basis auf der Lagerpinnschulter angeordnet.

Die erste Zahnung ist am bürstenkopfseitigen Ende eines sich ausgehend von der Lagerpinnschulter in Richtung Gehäusekopf erstreckenden Stabfortsatz angeordnet. Der Stabfortsatz kann parallel zum Lagerpinn verlaufen. Zwischen Stabfortsatz und Lagerpinn kann ein Abstand bzw. eine Aussparung von 0.5 mm bis 2 mm, insbesondere von 0.8 mm bis 1.2 mm vorgesehen sein. Die zum Lagerpinn weisende Seite des Stabfortsatzes kann eine ebene Fläche sein.

Im Sinne einer Notfunktion kann auch der Antriebsstab als Übertragungselement dienen, falls der Lagerpinn aufgrund unsachgemässer Nutzung gebrochen ist. Dazu ist die Seite des Stabfortsatzes in Richtung des Lagerpinns relativ nahe zu diesem angeordnet und der Pinnaufnahmekörper rund gestaltet. Im Falle eines Bruchs des Lagerpinns schleift die Rückseite des Stabfortsatzes auf dem Pinnaufnahmekörper und die Funktion und Sicherheit des Aufsteckbürstenteils ist nach wie vor gewährleistet.

Der Lagerpinn ist wenigstens mit seinem freien Endabschnitt in einer Pinnaufnahme am Aufsteckbürstengehäuse drehbar gelagert. Die Pinnaufnahme wurde bereits Zusammenhang mit dem Aufsteckbürstengehäuse näher beschrieben.

Der Lagerpinn dient der Lagerung des bürstenkopfseitigen Endabschnittes des Antriebsstabes im Aufsteckbürstengehäuse.

Gemäss einer Weiterbildung bildet der Antriebsstab in seinem bürstenkopfseitigen Längsabschnitt lediglich über den Lagerpinn einen Kontakt mit dem Aufsteckbürstengehäuse aus.

Die Oberfläche des Lagerpinns ist insbesondere glatt. Eine spezielle Behandlung der Oberfläche des Lagerpinns ist insbesondere nicht erforderlich.

Der Lagerpinn kann eine Gesamtlänge von 1.5 mm bis 4 mm, insbesondere von 2 mm bis 3 mm, aufweisen.

Der Lagerpinn bildet insbesondere wenigstens einen zylindrischen Mittelabschnitt aus. Der Durchmesser des zylindrischen Mittelabschnitts kann 0.4 mm bis 2 mm, insbesondere 1 mm bis 1.8 mm, betragen. Die Länge des zylindrischen Mittelabschnitts kann 0.5 mm bis 2.5 mm, insbesondere 1 mm bis 1.6 mm, betragen.

Die Basis des Lagerpinns, über welche dieser auf der Lagerpinnschulter angeordnet ist kann kegelförmig ausgestaltet sein. Die Kegelhöhe kann 0.2 mm bis 1 mm, insbesondere 0.3 mm bis 0.6 mm, betragen. Die Kegelflächen können zur Steuerdrehachse einen Winkel von 10° bis 40°, insbesondere von 15° bis 30°, einschliessen.

Der Lagerpinn kann einen kegelartig zulaufenden, freien Endabschnitt ausbilden. Die Länge dieses Endabschnittes kann 0.4 mm bis 1.2 mm, insbesondere 0.6 mm bis 1 mm betragen. Die Kegelflächen können zur Steuerdrehachse einen Winkel von 10° bis 40°, insbesondere von 15° bis 30°, einschliessen.

Der Lagerpinn ist von der Vorderseite her betrachtet gegenüber der ersten Zahnung nach hinten versetzt angeordnet. Der Lagerpinn kann insbesondere hinter der ersten Zahnung angeordnet sein.

Der Antriebsstab kann im Bereich der Steuerstiftaufnahme auf der Vorderseite am Aussenumfang eine Abflachung aufweisen. Diese Abflachung dient als Montagehilfe und erleichtert die korrekte Ausrichtung bzw. Positionierung des Antriebsstabes bezüglich seiner Drehlage vor der Montage.

Der Antriebsstab besteht insbesondere aus einer Hartkomponente oder enthält eine solche. Der Antriebsstab kann ein Polyamid (PA) als Matrixmaterial enthalten oder daraus bestehen. Polyamid zeichnet sich insbesondere durch seine glatten Oberflächen aus.

Der Antriebsstab kann einen oder mehrere Zusatzstoffe zur Modifikation der Materialeigenschaften enthalten. Der Antriebsstab kann z. B. Fasern, insbesondere Glasfasern, zur Verstärkung enthalten. Die Zusatzstoffe sind dabei in der matrixbildenden Hartkomponente eingebettet.

Weitere zusätzliche oder alternative Zusatzstoffe werden an anderer Stelle in dieser Beschreibung beschrieben.

Der Borstenträger besteht aus dem Trägerkörper und der Funktionseinheit. Der Borstenträger bildet zusammen mit den Pflegeborsten, insbesondere Reinigungsborsten, und gegebenenfalls weiteren Reinigungs- bzw. Pflegeelementen den Bürstenkopf aus.

Der Borstenträger dient dazu, die Bewegung des Antriebsstabes abzunehmen und auf das Borstenfeld zu übertragen. Ferner nimmt der Borstenträger die Pflegeborsten, insbesondere Reinigungsborsten, sowie gegebenenfalls weitere Reinigungs- bzw. Pflegeelemente auf.

Der Einfachheit halber werden die Pflege- bzw. Reinigungsborsten nachfolgend lediglich "Borsten" genannt. Die Borsten sind insbesondere Zahnreinigungsborsten.

Die Pflegeborsten sind am Trägerkörper angeordnet. Der Trägerkörper wiederum beinhaltet einen Borstenverankerungskörper, an welchem die Pflegeborsten verankert bzw. befestigt sind. Der Borstenverankerungskörper kann integraler Bestandteil des Trägerkörpers sein. Der Borstenverankerungskörper kann auch mit weiteren Teilen zu einem Trägerkörper gefügt sein.

Der Trägerkörper ist in Draufsicht von der Vorderseite insbesondere im Wesentlichen rund, wie kreisrund. Der Trägerkörper kann allerdings in genannter Draufsicht auch oval bzw. elliptisch oder polygonal ausgebildet sein. Ein polygonaler Trägerkörper kann z.B. als regelmässiges oder nicht regelmässiges Vieleck mit z. B. 5, 6, 7, 8, 9, 10, 11 oder 12 Ecken ausgebildet sein.

Der Trägerkörper kann ferner scheibenförmig sein. Das heisst, seine Höhe ist wesentlich geringer als sein grösster Durchmesser. Dies kann z. B. ein Verhältnis (Höhe : Durchmesser) von 0.3 oder kleiner sein.

Die Oberfläche des Trägerkörpers, aus welchen die Borsten austreten, ist insbesondere eben. Die besagte Oberfläche kann allerdings seitlich auch Ein- und Ausbuchtungen aufweisen. Die besagte Oberfläche kann insbesondere konvex oder konkav oder auch wellenförmig ausgestaltet sein. Ferner kann die besagte Oberfläche konzentrisch angeordnete Erhöhungen und Vertiefungen ausbilden. Die Erhöhungen und Vertiefungen können auch längs oder quer orientiert sind.

Der Trägerkörper weist insbesondere integrierte Borstenlöcher auf, über welche die Borsten nach aussen geführt sind.

Die Borsten können, wie weiter unten ausführlich ausgeführt, auf unterschiedliche Weise auf den Trägerkörper aufgebracht sein.

Der Borstenträger bzw. dessen Trägerkörper kann einen Durchmesser von 10 mm bis 18 mm, insbesondere von 12 mm bis 16 mm, aufweisen.

Der Durchmesser des Borstenträgers bzw. dessen Trägerkörpers kann gleich oder grösser sein als der Aussendurchmesser des Gehäusekopfes im Bereich der Trägeraufnahmeöffnung. Dadurch wird gewährleistet, dass im Falle einer übermässigen Abnutzung der Kontaktflächen zwischen Borstenträger im Bereich der nachfolgend noch beschriebenen Funktionseinheit und dem Gehäusekopf, der Borstenträger mit seinem Trägerkörper einen Auflagekontakt mit der ringförmigen Stirnendfläche des Gehäusekopfes im Bereich der Trägeraufnahmeöffnung ausbilden kann.

Das heisst allerdings auch, dass der Trägerkörper eines verschleissfreien Aufsteckbürstenteils mit der ringförmigen Stirnendfläche des Gehäusekopfes im Bereich der Aufnahmeöffnung insbesondere keinen Auflagekontakt ausbildet. Zwischen dem Trägerkörper und der ringförmigen Stirnendfläche ist insbesondere ein Spalt vorgesehen.

Der Auflagekontakt kann im Gebrauch erst bei grossem Druck oder fortschreitendem Verschleiss entstehen und entfaltet eine Funktion für zusätzliche Sicherheit indem die Stirnendfläche zusätzlichen Auflagedruck aufnimmt.

Der Borstenträger umfasst im Weiteren eine auf der Rückseite des Trägerkörpers angeordnete Funktionseinheit. Die Funktionseinheit steht insbesondere einer ebenen Rückseitenfläche des Trägerkörpers vor. Die Funktionseinheit kann einen Durchmesser von 4 mm bis 12 mm, insbesondere von 6 mm bis 10 mm, aufweisen.

Der Borstenträger, welcher die Funktionseinheit einschliesst, kann eine Gesamthöhe von 5 mm bis 12 mm, insbesondere von 7.5 mm bis 10 mm, aufweisen.

Die Funktionseinheit umfasst unter anderem die zweite Zahnung auf der Rückseite des Trägerkörpers. Die zweite Zahnung ist als Teil des Borstenträgers zusammen mit dem Borstenträger um die Trägerdrehachse drehbar.

Die zweite Zahnung besteht beispielsweise aus 2, 3, 4 oder 5, insbesondere aus 3 Zähnen. Die Zähne sind strahlenförmig bzw. radial verlaufend angeordnet. Der Mittelpunkt der strahlenförmigen bzw. radialen Anordnung liegt insbesondere auf der Trägerdrehachse.

Die Stirnendflächen der zweiten Zähne, über welche der Eingriff der ersten Zähne erfolgt, können gegenüber der Trägerdrehachse eine Neigung von 30° bis 60°, insbesondere von 40° bis 50° und ganz besonders von 45° aufweisen.

Gemäss einer Weiterbildung enthält der Borstenträger eine Drehwinkelbeschränkungseinrichtung für den Borstenträger mit zwei seitlichen Anschlägen für den Begrenzungsnocken. Die Drehwinkelbeschränkungseinrichtung ist insbesondere Teil der Funktionseinheit.

Die Drehwinkelbeschränkungseinrichtung bzw. die dazugehörigen seitlichen Anschläge sind insbesondere in Richtung oberes Gehäusekopfende oberhalb von der zweiten Zahnung angeordnet.

Der Begrenzungsnocken ist wie bereits weiter oben ausführlich beschrieben in der Borstenträgeraufnahme des Gehäusekopfs angeordnet. Im montierten Zustand des Borstenträgers bzw. Bürstenkopfs ist der Begrenzungsnocken zwischen den beiden seitlichen Anschlägen angeordnet. Der Borstenträger ist nun um einen definierten Drehwinkel drehbar, welcher durch das Anschlagen der seitlichen Anschläge am Begrenzungsnocken definiert wird. Der über den Antrieb erzeugte Drehwinkel des Antriebsstabes ist jedoch kleiner als der über die Anschläge theoretisch mögliche Drehwinkel.

Der Drehwinkel des Borstenträgers um die Trägerdrehachse beträgt beispielsweise maximal +/- 30°, insbesondere maximal +/- 25°, bezogen auf eine Neutrallage des Borstenträgers. Die Neutrallage entspricht der Lage des Begrenzungsnockes exakt zwischen den beiden seitlichen Anschlägen. Das heisst, der maximale Gesamtdrehwinkel beträgt hier 60° bzw. 50°.

Das Zusammenspiel von den seitlichen Anschlägen und dem Begrenzungsnocken bildet insbesondere eine Überdrehsicherung aus.

Die seitlichen Anschläge können in einer Weiterbildung über eine bogenförmige, insbesondere kreisbogenförmige Führungswand miteinander verbunden sein. Die Führungswand ist insbesondere konzentrisch zur Trägerdrehachse bzw. zur oben genannten Lagerungshülse im Gehäusekopf angeordnet.

Die Funktionseinheit kann eine Höhe von 2 mm bis 8 mm, insbesondere von 4 mm bis 6 mm, aufweisen.

Wie bereits erwähnt ist der Borstenträger im Aufsteckbürstengehäuse bzw. in der Borstenträgeraufnahme im Gehäusekopf um die Trägerdrehachse drehbar gelagert. Die Trägerdrehachse liegt insbesondere im Wesentlichen senkrecht zur Steuerdrehachse. Die Trägerdrehachse kann allerdings auch in einem Winkel von kleiner 90° zur Steuerdrehachse angeordnet sein.

Der Bürstenkopf ist insbesondere über einen nachfolgend noch näher beschriebenen Lagerstift drehbar in der Borstenträgeraufnahme des Gehäusekopfs gelagert.

Der Borstenträger bzw. die dazugehörige Funktionseinheit weist eine zur Rückseite hin offene Lagerstiftaufnahme für einen nachfolgend beschriebenen Lagerstift auf. Die Lagerstiftaufnahme ist insbesondere als Sackloch ausgebildet. Das heisst, die Lagerstiftaufnahme ist zur Vorderseite des Trägerkörpers nicht offen.

Die Lagerstiftaufnahme kann auch als Durchgangsöffnung ausgebildet sein. In diesem Fall ist die Lagerstiftaufnahme zur Vorderseite des Trägerkörpers hin offen.

Der Stiftschaft des Lagerstifts ist insbesondere nicht bis zur Vorderseite des Trägerkörpers geführt. Das heisst, der Stiftschaft endet vor der Vorderseite des Trägerkörpers bzw. des Borstenverankerungskörpers. Der Stiftschaft kann im Trägerkörper bzw. Borstenverankerungskörper enden.

Die Längsachse der Lagerstiftaufnahme entspricht der Trägerdrehachse. Der Durchmesser der Lagerstiftaufnahme kann 0.75 mm bis 2 mm, insbesondere 1 mm bis 1.6 mm, betragen. Die axiale Länge der Lagerstiftaufnahme kann 2 mm bis 5 mm, insbesondere 3 mm bis 4 mm, betragen. Die Lagerstiftaufnahme dient dazu, den Lagerstift im Borstenträger zu verankern. D.h., der Lagerstift wird in der Lagerstiftaufnahme am Borstenträger fixiert.

Die Lagerstiftaufnahme ist wenigstens teilweise und insbesondere vollständig in der Funktionseinheit angeordnet. Gemäss einer Weiterbildung verläuft die Lagerstiftaufnahme lediglich innerhalb der von der Rückseite des Borstenverankerungskörpers vorstehenden Funktionseinheit. Das heisst, die Lagerstiftaufnahme endet vor dem Borstenverankerungskörper.

Die Lagerstiftaufnahme kann auch innerhalb des Borstenverankerungskörpers enden. Das heisst, die Lagerstiftaufnahme erstreckt sich nicht bis zur Vorderseite des Borstenverankerungskörpers.

Die seitlichen Anschläge für den Begrenzungsnocken sind in der Neutrallage des Borstenträgers insbesondere seitlich von der Lagerstiftaufnahme angeordnet.

Der Borstenträger, bzw. die Funktionseinheit bildet auf seiner Rückseite im Weiteren eine ringförmige Auflageschulter aus, welche die Öffnung der Lagerstiftaufnahme umgibt. Die ringförmige Auflageschulter wird gegen aussen durch eine ringförmige Wand, welche eine Zylinderaufnahme ausbildet und gegen innen durch die Lagerstiftaufnahme begrenzt. Die ringförmige, insbesondere kreisringförmige Auflageschulter dient der Auflage des Borstenträgers am Gehäusekopf bzw. an der Lagerungshülse und bildet hierzu eine Auflagefläche aus.

Der Borstenträger liegt über die Auflagefläche der Auflageschulter insbesondere einer Stirnendfläche der Lagerungshülse an. Die ringförmige Wand, welche die Auflageschulter umgibt, übergreift im montierten Zustand insbesondere die Lagerungshülse entlang der Trägerdrehachse und sorgt so für eine ausreichende Zentrierung des Borstenträgers im Gehäusekopf vor der Montage des Lagerstifts.

Die ringförmige Auflageschulter kann einen Aussendurchmesser von 1 mm bis 4 mm, insbesondere von 2 mm bis 3 mm, aufweisen. Die Breite der ringförmigen Auflageschulter kann 0.2 mm bis 1.2 mm, insbesondere 0.4 mm bis 0.8 mm, sein.

Grundsätzlich ist die Geometrie des Borstenträgers bzw. sind die Verbindungen zwischen Borstenträger und Aufsteckbürstengehäuse und Antriebsstab so gewählt, dass die durch Reinigungs- und Pflegevorgänge auf den Bürstenkopf einwirkenden Kräfte nicht auf den Antriebsstab und das Festlegelement übertragen werden. Die Kräfte werden vielmehr über die oben beschriebene ringförmige Auflageschulter über die Lagerungshülse in den Gehäusekopf eingeleitet.

Auf die erste Zahnung des Antriebsstabes wirken letztendlich überwiegend seitliche Kräfte, welche durch den sich drehenden Antriebsstab auf die zweite Zahnung am Borstenträger übertragen werden. Es werden insbesondere praktisch keine Axialkräfte vom Bürstenkopf auf den Antriebsstab übertragen.

Dies hat den Vorteil, dass die Bewegungsfunktion des Bürstenkopfs auch bei hohen Belastungen auf den Bürstenkopf gewährleistet ist.

Der Borstenträger besteht insbesondere aus einer Hartkomponente oder enthält eine solche. Der Borstenträger kann z. B. aus Polyoxymethylen (POM) bestehen oder enthält dieses. Polyoxymethylen ist aufgrund der geringen Feuchteaufnahme auch unter wechselnden Umgebungsbedingungen sehr massstabil. Ferner zeichnet sich Polyoxymethylen durch eine hohe Abriebfestigkeit insbesondere im Bereich der Zahnung aus. Die Eigenschaften von Polyoxymethylen ermöglichen auch eine optimale Verankerung des nachfolgend noch näher beschriebenen Lagerstifts in der Lagerstiftaufnahme.

Neben dem genannten Kunststoff kann der Borstenträger auch einen oder mehrere Zusatzstoffe zur Modifikation der Materialeigenschaften enthalten. Der Borstenträger kann z. B. Fasern zur Verstärkung enthalten. Die Zusatzstoffe sind dabei in der matrixbildenden Hartkomponente eingebettet.

Ferner kann der Borstenträger auch gleitmodifiziert sein und einen oder mehrere Zusatzstoffe wie Molybdändisulfid, PTFE, und Kreide enthalten. Hinsichtlich der Steigerung der Verschleissfestigkeit erweist sich insbesondere eine PTFE-Modifizierung der Kunststoffkomponente als sehr effektiv. Der Verschleisskoeffizient kann so auf einen Drittel des Wertes für das nichtmodifizierte Polyoxymethylen gesenkt werden. Damit kann der Energieverbrauch gesenkt und der Verschleiss reduziert werden.

Weitere mögliche Zusatzstoffe werden im Abschnitt "Zusatzstoffe" näher beschrieben.

Da der Borstenträger über eine Auflagefläche am Aufsteckbürstengehäuse anliegt, ist die Materialpaarung zwischen Borstenträger und Aufsteckbürstengehäuse besonders wichtig. Eine sorgfältig gewählte Materialpaarung soll nämlich für einen geringen Verschleiss, d.h. Reibung, und entsprechend für eine lange Lebensdauer der Aufsteckbürste sowie für einen minimierten Stromverbrauch sorgen.

Die materielle Beschaffenheit des Aufsteckbürstenteils wurde bereits weiter oben beschrieben.

Der Borstenträger ist über einen Lagerstift drehbar am Gehäusekopf befestigt. Der Lagerstift hat neben der Ausbildung einer physischen Drehachse auch die Aufgabe, den Borstenträger am Gehäusekopf zu fixieren. Zur drehbaren Lagerung des Borstenträgers am Gehäusekopf ist der Lagerstift durch die Durchführöffnung am Gehäusekopf geführt. Der Lagerstift dreht im bestimmungsgemässen Gebrauch mit dem Bürstenkopf mit.

Der Lagerstift umfasst einen Stiftschaft sowie einen Stiftkopf, welcher einen gegenüber dem Stiftschaft breiteren Durchmesser aufweist. Der Stiftkopf steht insbesondere im Wesentlichen rechtwinklig vom Stiftschaft ab. Der Stiftschaft umfasst zum Stiftkopf hin einen ersten, zylindrischen Abschnitt mit glatter Oberfläche. Im Weiteren umfasst der Stiftschaft zum freien Ende hin einen zweiten Befestigungsabschnitt.

Der erste, zylindrische Abschnitt mit glatter Oberfläche dient als Gleitlager für den Lagerstift in der Lagerungshülse. Radial auftretende Kräfte auf den Borstenträger werden in diesem Lager aufgefangen. Die glatte Oberfläche des zylindrischen Abschnittes dient dazu, Abrieb und dadurch Beschädigungen an der Lagerhülse zu verhindern.

Der Befestigungsabschnitt weist eine strukturierte Oberfläche auf, welche eine drehfeste, insbesondere kraft- und/oder formschlüssige Verbindung mit dem Borstenträger ermöglichen soll.

Die strukturierte Oberfläche kann ein Rauhigkeitsmuster, wie eine Aufrauhung oder Riffelung, sein. Das Rauhigkeitsmuster dient der Erhöhung der Reibung zwecks Herstellung eines Reibschlusses.

Die strukturierte Oberfläche kann auch Verankerungselemente, wie kegelförmige Verankerungselemente, oder Widerhaken umfassen. Diese erlauben die Verankerung des Befestigungsabschnittes im Borstenträger.

Verankern bedeutet, dass der Befestigungsabschnitt in einer Einsteckrichtung in die Aufnahme am Borstenträger eingeführt werden kann. Das Herausziehen des Lagerstifts in Gegenrichtung ist allerdings nicht möglich oder nur unter Anwendung eines hohen Abzugsgewichts, z. B. von mehr als 10 kg, insbesondere von mehr als 13 kg.

So können im Befestigungsabschnitt auf einem zylindrischen Grundkörper Verankerungselemente in Form von mehreren hintereinander entlang der Stiftachse angeordneten, Kegelkörpern angeordnet sein, welche sich jeweils zum freien Ende des Stiftschafts verjüngen.

Die Kegelflächen können gegenüber der Stiftachse einen Winkel von 40° bis 80°, insbesondere von 50° bis 70°, einschliessen.

Der Innendurchmesser der Kegelkörper kann 0.3 mm bis 2 mm, insbesondere 0.5 mm bis 1.5 mm, betragen.

Die Länge des Kegelkörpers entlang der Stiftachse kann 0.5 mm bis 1 mm, insbesondere 0.65 mm bis 0.85 mm, betragen.

Die Verankerungselemente können identisch oder unterschiedlich aufgebaut sein.

Der Befestigungsabschnitt kann 2 bis 8, insbesondere 3 bis 6 Verankerungselemente umfassen.

Der Befestigungsabschnitt kann ferner ein den Verankerungselementen überlagertes Rauhigkeitsmuster der oben genannten Art aufweisen.

Der Durchmesser des Stiftkopfs kann 1 mm bis 3 mm, insbesondere 1.5 mm bis 2.5 mm, betragen. Der Durchmesser des Stiftschafts kann 0.5 mm bis 2.5 mm, insbesondere 1 mm bis 2 mm, betragen. Die Länge des Lagerstifts kann 6 mm bis 11 mm, insbesondere 8 mm bis 9.5 mm, betragen.

Der Lagerstift besteht insbesondere aus einem Metall, wie einem rostfreien Stahl. Die Materialwahl ist insofern von Bedeutung, als dass der Lagerstift im Kontakt mit Zahnpasta und anderen Mundreinigungsmitteln nicht korrodieren soll. Zudem sollen keine Substanzen an den Speichel abgegeben werden.

Der Lagerstift wird durch Drehen als Decolletageteil oder insbesondere durch Umformen hergestellt. Das Umformen kann durch Rollen erfolgen.

Der Lagerstift ist über eine Öffnung auf der Rückseite des Gehäusekopfs durch die Lagerungshülse am Gehäusekopf gesteckt und greift mit einem Befestigungsabschnitt in die Lagerstiftaufnahme am Borstenträger ein. Im Bereich der Öffnung auf der Rückseite des Gehäusekopfs ist eine Senkung vorgesehen, welche den Stiftkopf, insbesondere vollständig aufnimmt. Das heisst, der Stiftkopf ist in der Senkung insbesondere bündig mit der oder leicht versenkt zu der Aussenfläche des Gehäusekopfs angeordnet. Dies ist insofern von Bedeutung, als dass sich der Bürstenkopf während der Zahnpflege in der Mundhöhle befindet und daher jegliche Verletzungsgefahr durch vorstehende Teile vermieden werden muss.

Zwischen der Wandung der Senkung und dem Stiftkopf kann etwas radiales Spiel vorgesehen sein, z. B. 1/10 des Durchmessers des Stiftkopfes.

Der Lagerstift ist wie erwähnt drehfest mit dem Borstenträger verbunden. Die Aufnahme des Befestigungsabschnitts in der Lagerstiftaufnahme des Borstenträgers erfolgt insbesondere über einen Presssitz bzw. Reibschluss.

Der Befestigungsabschnitt des Lagerstifts kann gegenüber der Lagerstiftaufnahme am Borstenträger bezüglich des Durchmessers ein Übermass aufweisen, was zur Ausbildung eines Reibschlusses beiträgt. Das Übermass kann 0.05 mm bis 0.4 mm, insbesondere 0.1 mm bis 0.2 mm, betragen.

Es ist allerdings auch möglich, dass die Lagerstiftaufnahme gegenüber dem Lagerstift ein Übermass, z. B. von 1.5/10 mm des Durchmessers der Lagerstiftaufnahme aufweist.

Der Befestigungsabschnitt des Lagerstifts ist wie erwähnt ein vorderer Endabschnitt am Lagerstift. Die Länge des Befestigungsabschnittes kann 2 mm bis 5 mm, insbesondere 3 mm bis 4 mm, betragen. Die Länge des Befestigungsabschnittes kann der axialen Länge der Lagerstiftaufnahme entsprechen.

Die Länge des Presssitzes kann entsprechend 2.5 mm bis 5 mm, insbesondere 3 mm bis 4 mm, betragen.

Im montierten Zustand ist das freie Ende des Lagerstifts in der Lagerstiftaufnahme insbesondere so angeordnet, dass dieses dem Boden der Lagerstiftaufnahme anliegt oder ein Abstand zwischen dem Boden der Lagerstiftaufnahme und dem freien Ende des Lagerstifts ausgebildet wird. Dieser Abstand kann 0 mm bis 0.1 mm, vorzugsweise von 0.02 bis 0.08 mm betragen. Das heisst die Endflächen liegen plan aneinander oder es gibt einen definierten Spalt.

Die drehbare Lagerung des Borstenträgers erfolgt über den drehbar in der Lagerungshülse gelagerten Lagerstift.

Die Lagerungshülse am Gehäusekopf ist nun zwischen Stiftkopf und Borstenträger bzw. dessen Funktionseinheit angeordnet.

Der Lagerstift ist insbesondere mit radialem Spiel in der Lagerungshülse gelagert. Das axiale Spiel kann 0.01 mm bis 0.25 mm, insbesondere 0.02 mm bis 0.18 mm, betragen.

Der Lagerstift kann in Längsrichtung ebenfalls Spiel aufweisen, so dass der Bürstenkopf relativ zum Gehäusekopf entlang der Trägerdrehachse geringfügig verschiebbar ist. Das Spiel kann 0.02 mm bis 0.3 mm, insbesondere 0.05 mm bis 0.2 mm, betragen. Dadurch können Spannungen zwischen Bürstenkopf und Gehäusekopf vermieden werden.

Das Festlegelement dient der radialen Festlegung bzw. Ausrichtung des handteilseitigen Endabschnitts des Antriebsstabes. Ferner dient das Festlegelement der axialen Festlegung bzw. Fixierung und Positionierung des Antriebsstabes im Aufsteckbürstengehäuse, damit dieser nicht aus dem Aufsteckbürstengehäuse herausfallen kann.

Das Festlegelement ist insbesondere über die handteilseitige Aufnahmeöffnung am Aufsteckbürstengehäuse in den Gehäusehals eingeschoben und darin befestigt. Das Festlegelement wird insbesondere über eine Kraft- und/oder Formschlussverbindung im Gehäusehals befestigt. Die Befestigung kann lösbar oder nicht lösbar sein.

Das Festlegelement ist insbesondere als Festleghülse ausgebildet. Die Festleghülse bildet insbesondere einen durchgängigen Hülsenhohlraum aus.

Das Festlegelement dient insbesondere auch dazu, dass das Aufsteckbürstengehäuse gegenüber dem Handteil fixiert ist und nur der Antriebsstab und der Bürstenkopf bewegt werden.

Das Festlegelement umfasst insbesondere einen bürstenkopfseitigen Hülsenabschnitt zur Aufnahme und Abstützung des Endabschnittes des Antriebsstabes.

Der bürstenkopfseitige Hülsenabschnitt kann insbesondere auch axiale Kräfte des Antriebsstabes aufnehmen.

Der bürstenkopfseitige Hülsenabschnitt verfügt über genügend Toleranz, damit trotz Winkelabweichungen des Steuerstiftes ein ungehindertes Aufstecken des Aufsteckbürstenteils und insbesondere das Finden der Passung zwischen Steuerstift und Antriebsstab möglich ist.

Gemäss einer Weiterbildung bildet das Festlegelement im bürstenkopfseitigen Hülsenabschnitt eine innenliegende, ringförmige Querschnittsverengung in Form eines Innenrings aus. Die ringförmige Querschnittsverengung bildet eine zum Bürstenkopf weisende, ringförmige Innenanschlagfläche aus. Die Innenanschlagfläche ist insbesondere senkrecht zur Steuerdrehachse orientiert. Die ringförmige Querschnittsverengung bildet im Weiteren einen zylinderförmigen Aufnahmeabschnitt, insbesondere kreiszylinderförmige Aufnahmeabschnitt, zur Aufnahme des Anschlagzylinders des Antriebsstabes aus.

Der zylinderförmige Aufnahmeabschnitt dient der Vorzentrierung des Antriebstabes über den in diesen eingreifenden Anschlagzylinder des Antriebsstabs. Die eigentliche Zentrierung des Antriebsstabes erfolgt über die Einführung des Steuerstiftes in die Steuerstiftaufnahme des Antriebsstabes. Ferner wird auf diese Weise auch der Antriebsstab an seinen handteilseitigen Endabschnitt radial gesichert.

Der zylinderförmige Aufnahmeabschnitt ist konzentrisch zur Steuerdrehachse angeordnet. Der zylinderförmige Aufnahmeabschnitt kann eine axiale Länge von 0.5 mm bis 3 mm, insbesondere von 1.5 mm bis 2.5 mm, aufweisen.

Die Innenanschlagfläche kann eine radiale Breite von 0.25 mm bis 2 mm, insbesondere von 0.5 mm bis 1 mm, aufweisen. Die ringförmige Querschnittsverengung kann einen Innendurchmesser von 4 mm bis 7 mm, insbesondere von 5 mm bis 5.5 mm, ausbilden.

Der Antriebsstab ist nun über seine Anschlagschulter auf der Innenanschlagfläche des Festlegelementes drehbar gelagert und so mit der nötigen Toleranz axial gesichert. Die Anschlagschulter und Innenanschlagfläche bilden dabei insbesondere einen flächigen Gleitkontakt aus.

Allerdings besteht zwischen Anschlagzylinder und ringförmiger Querschnittsverengung insbesondere ein Spiel, damit der Anschlagzylinder in der ringförmigen Querschnittsverengung keinen Reibschluss ausbildet. Das heisst, der Aussendurchmesser des Anschlagzylinders ist kleiner als der (Innen-) Durchmesser des zylinderförmigen Aufnahmeabschnittes.

Folglich berühren sich die einander gegenüber liegende Innenfläche des zylinderförmigen Aufnahmeabschnittes und Aussenfläche des Anschlagzylinders im Betrieb nicht. Eine Berührung der genannten Flächen erfolgt höchstens im Rahmen der Vorzentrierung, wenn der Steuerstift noch nicht in die Steuerstiftaufnahme des Antriebsstabes eingeführt ist.

Der Antriebsstab wird folglich in seinem bürstenkopfseitigen Endabschnitt über den Lagerpinn am Aufsteckbürstengehäuse und in seinem handteilseitigen Endabschnitt über die Anschlagschulter am Festlegelement drehbar gelagert.

Die Aussenumfangsfläche des bürstenkopfseitigen Hülsenabschnittes des Festlegelements ist insbesondere mehrheitlich glatt ausgebildet.

Im Weiteren ist der Anspritzpunkt auf der Aussenumfangsfläche des bürstenkopfseitigen Hülsenabschnittes des Festlegelements angeordnet.

In der Wandung des bürstenkopfseitigen Hülsenabschnittes des Festlegelements können eine oder mehrere, insbesondere zwei, einander gegenüber liegende, federelastische Rastzungen angeordnet sein. Die Rastzungen können jeweils eine am Zungenende angeordnete, und nach aussen gerichteten Rastnase enthalten. Die Rastnase ist im montierten Zustand des Festlegelements in einer Rastkerbe, Rastnut oder Rastöffnung am Gehäusehals eingerastet und sorgt auf diese Weise für eine axiale Sicherung des Festlegelements.

Die wenigstens eine Rastzunge ist entsprechend in Richtung Bürstenkopf ausserhalb der nachfolgend noch beschriebenen Zapfenaufnahme angeordnet.

Der bürstenkopfseitigen Abschnittes des Festlegelements weist entsprechende Durchbrüche, insbesondere schlitzförmige Durchbrüche in der Hülsenwand auf, welche die Rastzungen freistellen. Die Durchbrüche sind zum freien Ende des Hülsenabschnitts hin entsprechend offen. Die Durchbrüche verlaufen in Längsrichtung des Festlegelements.

Die Rastzunge kann jeweils Teil einer nachfolgend noch beschriebenen Längsrippe am Aussenumfang des Festlegelements sein. Diese Längsrippe kann sich bis in den handteilseitigen Hülsenabschnitt, welches z. B. eine Zapfenaufnahme ausbildet, hinein erstrecken. Die Längsrippe kann als Montagehilfe beim Einführen des Festlegelementes in den Gehäusehals dienen.

In einer weiteren Ausführungsform ist die Wandung des bürstenkopfseitigen Hülsenabschnittes des Festlegelements reduziert bzw. soweit weggelassen, dass nur noch die federelastischen Rastzungen mit den darauf angebrachten Rastnasen vorhanden sind. Die Wandung kann dabei soweit fehlen, dass bis zur Innenanschlagfläche ein Leerraum entsteht. Dadurch kann erreicht werden, dass die Innenanschlagfläche im Bereich der fehlenden Wandung breiter ist und somit mehr Auflagefläche bietet.

Gemäss einer Weiterbildung des Festlegelements bildet dieses einen handteilseitigen Hülsenabschnitt mit einer Zapfenaufnahme zur Aufnahme des Kupplungszapfens des Handteils aus.

Das Festlegelement dient gemäss dieser Weiterbildung folglich auch der Verbindung des Aufsteckbürstenteils mit dem Handteil.

An der Aussenfläche des handteilseitigen Hülsenabschnitts können Längsrippen angeordnet sein, welche in Längsrichtung des Festlegelements verlaufen. Die Längsrippen können eine Breite von 0.2 mm bis 0.7 mm, insbesondere von 0.35 mm bis 0.55 mm, aufweisen. Die Längsrippen können eine Höhe von 0.5 mm bis 0.2 mm, insbesondere von 0.08 mm bis 0.12 mm, aufweisen. Die Länge der Längsrippen, welche für sämtliche Längsrippen insbesondere gleich ist, entspricht insbesondere ungefähr der Länge des handteilseitigen Hülsenabschnitts.

Das Festlegelement liegt insbesondere wenigstens teilweise über die Aussenfläche des handteilseitigen Hülsenabschnitts der Innenfläche des Gehäusehalses an.

Der handteilseitige Hülsenabschnitt bildet also als Kupplungsabschnitt die Schnittstelle zum Handteil aus. Die Innengeometrie der Zapfenaufnahme ist entsprechend an die Aussengeometrie des Kupplungszapfens angepasst.

Aussengeometrien von Kupplungszapfen am Handteil sowie Innengeometrien von hülsenartigen Kupplungsabschnitten am Aufsteckbürstenteil werden beispielsweise in der Veröffentlichungsschrift WO 2013/170390 ausführlich beschrieben.

Die Zapfenaufnahme kann im Bereich der Aufnahmeöffnung eine trichterartige Erweiterung aufweisen, welche als Einführhilfe für den Kupplungszapfen dient. Die trichterartige Erweiterung ist insbesondere im Bereich des nachfolgend noch beschriebenen Einschubbegrenzungsflansches angeordnet.

Die Zapfenaufnahme kann so genannte längslaufende Verdrängungsrippen aufweisen. "Längslaufend" bedeutet in Längsrichtung des Aufsteckbürstenteils.

Die Verdrängungsrippen werden unter Druck insbesondere plastisch deformiert und sorgen so für einen guten Presssitz.

Die Verdrängungsrippen dienen dem Festhalten bzw. Festklemmen des Kupplungszapfens in der Zapfenaufnahme. Die Verdrängungsrippen erlauben grössere Toleranzen zwischen Kupplungszapfen und Zapfenaufnahme, ohne dass die Reibschlussverbindung zwischen Kupplungszapfen und Zapfenaufnahme beeinträchtigt würde.

Die Länge der Verdrängungsrippen kann variabel sein und orientiert sich an der Innengeometrie der Zapfenaufnahme. In der Zapfenaufnahme können Verdrängungsrippen unterschiedlicher Länge angeordnet sein.

Die Breite der Verdrängungsrippen kann 0.1 mm bis 0.8 mm, insbesondere 0.3 mm bis 0.6 mm, betragen. Die Breite kann in Richtung Bürstenkopf zulaufend sein. Dank der geringen Breite wird eine zu starke Klemmung oder gar Blockierung des Kupplungszapfens in der Zapfenaufnahme verhindert, auch wenn zwischen der Basisinnengeometrie der Zapfenaufnahme und dem Kupplungszapfen kein Spiel vorhanden ist.

Die Höhe der Verdrängungsrippen kann 0.05 mm bis 0.4 mm, insbesondere 0.1 mm bis 0.25 mm, betragen. Die Höhe kann in Richtung Bürstenkopf abnehmen. Dank der geringen Höhe der Verdrängungsrippen wird eine Klemmung erreicht, auch wenn zwischen der Basisinnengeometrie der Zapfenaufnahme und dem Kupplungszapfen Spiel vorhanden ist.

Die Verdrängungsrippen sind insbesondere zur linken und rechten Seite der Körperpflegebürste hin angeordnet.

Die Aussenflächen der beiden Hülsenabschnitte sind jeweils insbesondere konisch ausgebildet und verjüngen sich zum Bürstenkopf hin. Dadurch wird die Einführbarkeit des Festlegelementes in die konisch ausgebildete Aufnahme des Gehäusehalses gewährleistet.

Auf der Aussenfläche des handteilseitigen Hülsenabschnittes kann eine Kerbe angeordnet sein. Diese dient der Aufnahme der Rastnase einer in einem ersten Aufnahmeabschnitt des Gehäusehalses angeordneten Rastzunge.

Weiter sind auf der Rückseite des Festlegelements insbesondere Geometrien geschaffen, die mit dem U-förmigen Schlitz der Rastzunge des Aufsteckbürstengehäuses korrespondieren.

So kann eine vorstehende Geometrie auf dem Festlegelement U-förmig ausgestaltet sein und so bei der Montage insbesondere komplett in den U-förmigen Schlitz eingeschoben werden.

Es kann auch eine vorstehende Geometrie auf dem Festlegelement in Form von einem oder mehreren Teilen der U-förmigen Geometrie ausgebildet sein, so dass bei der Montage insbesondere lediglich Teilgeometrien in den U-förmigen Schlitz eingeschoben werden.

Gemäss einer besonderen Ausführungsform werden am handteilseitigen Ende des Festlegelements zwei nebeneinander und voneinander beabstandet angeordnete Stumpen oder Vorsprünge geformt, die im montierten Zustand jeweils an den Endschenkeln des U-förmigen Schlitzes in diesen eingreifen.

Die Vorsprünge können jeweils eine Länge von 1 mm bis 5 mm, insbesondere von 1.5 mm bis 3 mm aufweisen. Weiter können die Vorsprünge in Montagerichtung einen rampenförmigen Anstieg aufweisen. Auf diese Weise wird das Einführen des Festlegelements in das Aufsteckbürstengehäuses und somit auch das Einfahren der Vorsprünge in die U-förmige Ausnehmung bzw. in dessen Endschenkel unterstützt.

Als weitere Elemente zum Rückhalt des Festlegeteils im Aufsteckbürstengehäuse können eine oder mehrere, insbesondere zwei Erhebungen vorgesehen sein, welche entlang des Umfangs des Festlegeteils angeordnet sind. Das heisst, ihre Längserstreckung ist quer zur Längsachse des Festlegeteils ausgerichtet.

Die Erhebungen sind insbesondere axial auf derselben Höhe im ersten Festlegeteil angeordnet.

Die Erhebungen rasten in entsprechende, bereits weiter oben beschriebene Nuten am Aufsteckbürstengehäuse ein, so dass beim Ineinanderschieben der Teile eine Verrastung erfolgt.

Die Erhebungen sind insbesondere auf den zwei seitlichen Wandungen zwischen den Rastzungen ausgebildet. Die Erhebungen liegen jeweils über einen Umfangsbereich von 50° bis 170°, insbesondere von 100° bis 160°, zwischen den Rastzungen.

Die Erhebungen selbst können unterteilt sein, sodass mehrere kleinere (Teil) Erhebungen ausgebildet werden.

Das Festlegelement weist an seinem handteilseitigen Ende im Bereich der Zapfenaufnahmeöffnung insbesondere einen ringförmigen Einschubbegrenzungsflansch auf. Der Aussenumfang des Einschubbegrenzungsflansches ist bündig mit dem anschliessenden Aussenumfang des Gehäusehalses, in welchen das Festlegelement eingeschoben ist. Der Einschubbegrenzungsflansch stellt sicher, dass das Festlegelement nicht vollständig in den Gehäusehals eingeschoben wird. Der Einschubbegrenzungsflansch bildet hierzu einen Anschlag aus, über welchen das Festlegelement an der Stirnendfläche der handteilseitigen Aufnahmeöffnung am Gehäusehals anschlägt.

Das heisst, die axiale Lage des Festlegelements kann durch das Einführen der Steuerdrehachse sowie des Kupplungszapfens des Handteils in den Kupplungsabschnitt nachträglich nicht mehr verändert werden.

Der Einschubbegrenzungsflansch kann zusätzlich an seiner Aussenfläche Identifikationsinformationen enthalten, welche die Identifikation des Aufsteckbürstenteils erlauben. Die Identifikationsinformation kann eine Farbcodierung sein. So können die Benutzer eines gemeinsamen Handteils ihr persönliches Aufsteckbürstenteil mittels der Farbcodierung an der Aussenfläche des Einschubbegrenzungsflansches zweifelsfrei identifizieren.

Das Aufsteckbürstengehäuse kann zur Herstellung eines besonders guten Kontrastes zwecks Farbcodierung weiss sein.

Der Aussendurchmesser des Einschubbegrenzungsflanschs kann 8 mm bis 18 mm, insbesondere 11 mm bis 15 mm, betragen.

Die Länge des Festlegelements kann 10 mm bis 30 mm, insbesondere 18 mm bis 24 mm, betragen.

Der Aussendurchmesser des Festlegelements im Anschluss an den Einschubbegrenzungsflansch kann 6 mm bis 15 mm, insbesondere 8.5 mm bis 12.5 mm, betragen.

Das Festlegelement kann aus einer Hartkomponente bestehen oder diese enthalten. Das Festlegelement besteht insbesondere aus Polypropylen (PP) oder enthält dieses. Polypropylen weist den Vorteil auf, dass dieses eine verhältnismässig weiche Hartkomponente ist und so der Verschleiss beim Kupplungszapfen des Handteils gering bleibt.

Um eine genügend hohe Auszugskraft gegenüber dem Kupplungszapfen zu gewährleisten, bedingt die Verwendung von Polypropylen allerdings, dass das Festlegelement vorzugsweise mit Reibschluss bzw. Presssitz montiert wird.

Das Festlegelement besteht insbesondere aus einem weicheren Material als der Kupplungszapfen. Der handteilseitige Hülsenabschnitt, welcher die Zapfenaufnahme ausbildet, ist insbesondere nachgiebig. Dies ist insofern von Bedeutung als dies eine optimale Klemmung des Kupplungszapfens in der Zapfenaufnahme gewährleistet.

Ferner gewährleistet eine solche Materialkombination auch, dass nicht der Kupplungszapfen des langlebigen Handteils sondern vielmehr die Zapfenaufnahme des vergleichsweise kurzlebigen Aufsteckbürstenteils durch das wiederholte Aufstecken und Abziehen abgenutzt wird.

Weiter kann der hand¬teilseitige Hülsenabschnitt auf der Aussenseite so geformt, dass er einer möglichen Schnittstelle entspricht.

Die Wahl unterschiedlicher Kunststoffkomponenten und gegebenenfalls von Zusatzstoffen zur Herstellung des Aufsteckbürstengehäuses, des Antriebsstabes, des Borstenträgers und des Festlegelement dient ganz allgemein insbesondere dem reibungsoptimierten Zusammenspiel der einzelnen Bauteile.

Wie weiter oben bereits erwähnt bilden der Borstenträger und die Borsten den so genannten Bürstenkopf aus. Die Borsten bilden am Trägerkörper ein Borstenfeld aus.

Die Borsten können konventionelle Borsten, d.h. extrudierte Borsten, sein. Die extrudierten Borsten können zylindrisch sein. Die Borstenenden können zylindrisch oder einseitig oder beidseitig zugespitzt sein. Eine Kombination von zylindrischen und zugespitzten Borsten in einem Borstenfeld ist ebenfalls möglich.

Die Borsten können ferner auch gespritzt sein. Gespritzten Borsten werden im Unterschied zu konventionellen, extrudierten Borsten mittels eines Spritzgiessverfahrens hergestellt.

Kombinationen von extrudierten und gespritzten Borsten in einem Borstenfeld sind ebenfalls möglich.

Neben Borsten kann der Bürstenkopf weitere Funktionselemente, wie Massageelemente oder Reinigungselemente enthalten. Diese können aus einer Weichkomponente bestehen.

Der Trägerkörper enthält auf der Vorderseite, insbesondere eine Mehrzahl von Borstenlöchern, welche jeweils ein Borstenbündel aufnehmen.

Der Trägerkörper enthält z. B. 18 bis 40 Borstenlöcher, insbesondere 22 bis 35 Borstenlöcher. Die Borstenlöcher können einen Durchmesser von 1 mm bis 1.7 mm, insbesondere von 1.2 mm bis 1.5 mm, aufweisen.

Die Borstenlöcher und entsprechend die Borsten können in drei Gruppen angeordnet sein. In Neutrallage des Borstenträgers beschreibt eine obere und untere Gruppe jeweils die Form eines Kreissegments. Die mittlere Gruppe besteht aus zwei parallelen Reihen von Borstenlöchern. Zwischen den Gruppen von Borstenlöchern können Gassen ausgebildet werden.

Die Anordnung der Borstenlöcher in drei Gruppen mit dazwischen liegenden Gassen erlaubt im Herstellprozess eine eindeutige Trennung der Borstenbündel. Dies wiederum ermöglicht die optimale Abrundung der Borstenenden auch bei unterschiedlich langen Borsten in den jeweiligen Gruppen.

Die Borsten der oberen und unteren Gruppen können die Borsten der mittleren Gruppe überragen. So kann die Borstenlänge der oberen und unteren Gruppe 5 mm bis 12 mm, insbesondere 7 mm bis 10 mm, betragen. Die Borstenlänge der mittleren Gruppe kann 5 mm bis 9 mm, insbesondere 6 mm bis 8 mm, betragen.

Das Borstenfeld kann bezüglich der Längsachse des Aufsteckbürstenteils symmetrisch aufgebaut sein. Die Symmetrie kann sich auf die Borstenart, die Borstenlänge und/oder die Borstenfarbe beziehen.

Die Borsteneigenschaften können über das Borstenfeld oder innerhalb einer Gruppe von Borsten variieren. Solche Eigenschaften können z. B. Farbe, Materialbeschaffenheit oder Borstenlänge sein.

Gemäss einer Ausführungsvariante enthält das Borstenfeld wenigstens eine äussere Reihe bzw. Kreis von Borstenbündeln, eine innere bzw. mittlere Reihe bzw. Kreis von Borstenbündeln sowie ein Zentrum mit mindestens einem Borstenbündel.

Das Borstenfeld kann insbesondere aus dem äusseren und mittleren Kreis sowie dem Zentrum von Borstenbündeln bestehen. Die Kreise von Borstenbündeln sind insbesondere konzentrisch um die Trägerdrehachse angeordnet.

In einer solchen Ausgestaltung können beispielsweise 8, 10, 12, 13, 14, 15 oder 16, vorzugsweise 12 Borstenbündel, auf dem äusseren Kreis angeordnet sein. Auf dem inneren Kreis können 5, 6, 7, 8 oder 9, vorzugsweise 6, Borstenbündel angeordnet sein. Im Zentrum können 1, 2, 3 oder 4, vorzugsweise 3, Borstenbündel angeordnet sein.

Die Borstenbündel im Zentrum, können, wenn 3 Borstenbündel vorgesehen sind, insbesondere auf einem gleichseitigen Dreieck angeordnet sein. Das heisst, die Zentren der 3 Borstenbündel bilden die Eckpunkte des gleichseitigen Dreiecks.

Das Zentrum der genannten Kreise, insbesondere der genannten beiden Kreise der Borstenbündel sowie das Zentrum des gleichseitigen Dreiecks sind insbesondere identisch.

In einer Weiterbildung kann vorgesehen sein, dass die Borstenbündel der äussersten Reihe bzw. Kreis von Borstenbündeln eine Neigung in Umfangrichtung aufweisen. Die senkrechte Höhe der Borsten parallel zur Trägerdrehachse kann 7 mm bis 12 mm, insbesondere 8.5 mm bis 11 mm, betragen

Gemäss einer Weiterbildung können Borstenbündel einer inneren, insbesondere mittleren Reihe bzw. Kreis von Borstenbündeln eine Neigung aufweisen, die jener der äussersten Reihe bzw. Kreis entgegen gesetzt ist. Die senkrechte Höhe der Borsten parallel zur Trägerdrehachse kann 6 mm bis 11 mm, insbesondere 8 mm bis 10 mm, betragen.

Die Neigung der Borstenbündel kann bezüglich der Trägerdrehachse einen Winkel von 5° bis 30°, insbesondere von 5° bis 10° oder 15° bis 20° aufweisen.

Gemäss einer Weiterbildung können die Borstenbündel im Zentrum bezüglich der Vorderseite des Trägerkörpers senkrecht stehen, d.h. parallel zur Trägerdrehachse verlaufen. Die senkrechte Höhe der Borsten parallel zur Trägerdrehachse kann 5 mm bis 11 mm, insbesondere 7 mm bis 10 mm, betragen.

Es ist möglich, dass innerhalb eines Borstenbündels unterschiedliche Borstenlängen vorgesehen sind. So kann innerhalb eines Borstenbündels eine Abstufung der Borsten vorgesehen sein. Die Abstufung kann 0.5 mm bis 5 mm, insbesondere 0.8 mm bis 3 mm, betragen.

Ferner ist es möglich, in den einzelnen Borstenbündeln Borsten mit unterschiedlichen Eigenschaften, z. B. bezüglich Materialbeschaffenheit, Borstentyp, Farbe, vorzusehen.

Gemäss einer Ausführungsvariante können mehrere bewegliche Trägerkörper in einem Aufsteckbürstenteil vorgesehen werden, welche jeweils ein Borstenfeld ausbilden. Die Trägerkörper können von gleicher oder unterschiedlicher Gestalt sein. Die Trägerkörper können dasselbe oder ein unterschiedliches Bewegungsmuster aufweisen.

Nachfolgend werden mögliche Eigenschaften der oben genannten Funktionselemente näher beschrieben, welche beispielsweise auf dem Borstenträger oder auf dem Aufsteckbürstengehäuse angeordnet sein können. Zum Teil wurden diese Eigenschaften bereits unter dem entsprechenden Abschnitt erwähnt.

Die Funktionselemente können eine Pflegefunktion, wie Reinigungs- und/oder Massagefunktion haben. Es können jeweils auch mehrere Funktionselemente kombiniert werden. Die Funktionselemente können ebenfalls eine Schrägstellung aufweisen.

Als Funktionselemente können konventionelle, d.h. extrudierte Borsten vorgesehen sein.

Als Funktionselemente können auch gespritzte Borsten, das heisst in einem Spritzgiessverfahren hergestellte Borsten, vorgesehen sein.

Das Funktionselement kann ein Zungenreiniger sein. Der Zungenreiniger kann aus einer Hartkomponente, einer Weichkomponente oder einer Kombination von Hartkomponente und Weichkomponente hergestellt sein. Entsprechend kann der Zungenreiniger gummielastische Eigenschaften aufweisen.

Der Zungenreiniger kann auch aus derselben Kunststoffkomponente hergestellt sein, wie die gespritzten Borsten.

Die Herstellung des Zungenreinigers erfolgt insbesondere im Spritzgiessverfahren.

Der Zungenreiniger ist vorzugsweise auf der Rückseite des Aufsteckbürstengehäuses insbesondere auf der Rückseite des Gehäusekopfs angeordnet.

Das Funktionselement kann auch ein Massageelement sein. Das Massageelement kann aus einer Weichkomponente bestehen. Entsprechend kann das Massageelement gummielastische Eigenschaften aufweisen. Das Massageelement kann durch Spritzgiessen im Mehrkomponentenspritzgussverfahren hergestellt sein.

Nachfolgend werden mögliche Eigenschaften der oben genannten konventionellen, d.h. extrudierten Borsten beschrieben, welche beispielsweise auf dem Borstenträger oder auf dem Aufsteckbürstengehäuse angeordnet sein können. Zum Teil wurden diese Eigenschaften bereits unter dem entsprechenden Abschnitt erwähnt.

Die beschriebenen Positionen, Stellungen, Neigungen der konventionellen Borsten bzw. Borstenbündel kann vollständig, einzelnen, regelmässig, unregelmässig durch andere Funktionselemente ersetzt werden.

Die konventionellen Borsten können aus einer Hartkomponente oder aus einer Weichkomponente bestehen. Die konventionellen Borsten können insbesondere aus Polyamid (PA) oder Polyester, wie Polybutylenterephthalat (PBT), hergestellt sein.

Die konventionellen Borsten können zylindrisch sein. Die konventionellen Borsten können einseitig oder beidseitig zugespitzt sein. Die konventionellen Borsten können insbesondere über ein chemisches Verfahren zugespitzt sein, insbesondere wenn diese aus einem Polyester, wie Polybutylenterephthalat (PBT), bestehen.

Die konventionellen Borsten können entlang ihrer Längsachse auch gewellt, verdreht, oder wendelförmig ausgebildet sein.

Die konventionellen Borsten können im Querschnitt rund, insbesondere kreisförmig, dreieckig, rechteckig, quadratisch, elliptisch, polygonförmig, trapezförmig, parallelogrammförmig oder rombusförmig sein.

Die konventionellen Borsten können für Anwendungen in der Mundhygiene einen grössten Durchmesser von 0.075 - 0.25 mm aufweisen. Die Querschnittsfläche kann 0.002 - 0.2 mm² betragen.

Die konventionellen Borsten können für Anwendungen in der Kosmetik einen grössten Durchmesser von 0.025 - 0.2 mm aufweisen. Die Querschnittsfläche kann 0.001 - 0.15 mm² betragen.

Die Herstellung erfolgt wie erwähnt mittels eines Extrusionsverfahrens aus einer Kunststoffkomponente oder mittels eines Coextrusionsverfahrens aus mehr als einer Kunststoffkomponente.

Die Oberfläche der konventionellen Borsten kann glatt oder texturiert sei.

Die konventionellen Borsten werden insbesondere in Borstenbündeln zusammengefasst auf dem Trägerkörper angebracht.

Im Gegensatz zu gespritzten Borsten oder Massage- und Reinigungselementen, welche mittels Spritzgiessen direkt am Trägerkörper oder am Aufsteckbürstengehäuse, hergestellt sind, werden konventionelle Borsten in einem ersten Schritt extrudiert, in einem zweiten Schritt nachbearbeitet, z. B. geschnitten, und in einem dritten Schritt am Trägerkörper angebracht. Das Anbringen der Borsten am Trägerkörper kann über ein an anderer Stelle noch näher beschriebenes Anker-Stanz-Verfahren, AFT- Verfahren, IMT- Verfahren etc., erfolgen.

Die Beborstung des Trägerkörpers kann, wie weiter oben bereits erwähnt, auf unterschiedliche Weise erfolgen. Entsprechend kann der Trägerkörper auch ganz unterschiedlich aufgebaut sein.

Ein erstes Beborstungsverfahren ist das so genannte konventionelle Anker-Stanz-Verfahren. Bei diesem Verfahren enthält der Trägerkörper Sacklöcher, welche der Aufnahme der Borstenbündel dienen. Die Sacklöcher werden insbesondere während des Spritzgiessens des Trägerkörpers hergestellt.

Die konventionellen Borsten werden bündelweise gefaltet und mittels Ankerplättchen in die Borstenlöcher gestanzt und so im Trägerkörper befestigt.

Im Weiteren sind auch ankerlose Verfahren wie AFT (Anchor Free Tufting), IMT (Inmould Tufting), AMR, PTt oder IAP (Integrated Anchorless Production) bekannt.

Eines dieser ankerlosen Beborstungsverfahren ist das so genannte AFT-Verfahren (Anchor Free Tufting). Bei diesem Verfahren werden die konventionelle Borsten, beziehungsweise die Borstenbündel, ohne Hilfe eines Ankers an einem Borstenverankerungskörper, z. B. einem Trägerplättchen, befestigt.

Die Borsten werden dabei bündelweise mit ihrem, dem freien Nutzende gegenüber liegenden Ende von der Vorderseite durch Durchlässe bzw. Öffnungen im Borstenverankerungskörper hindurchgeführt, so dass ein Endabschnitt der Borstenbündel über die Rückseite des Borstenverankerungskörpers hinausragt.

Die über die Rückseite des Borstenverankerungskörpers hinausragenden Endabschnitte der Borstenbündel werden durch Aufschmelzen, Verkleben oder Verschweissen mit dem Borstenverankerungskörper verbunden. Der Borstenverankerungskörper wird anschliessend mit den an diesem befestigten konventionellen Borsten in der Ausnehmung eines Basiselements befestigt, beispielsweise durch (Kunststoff-) Schweissen, wie Ultraschall-Schweissen oder Kleben. Die Ausnehmung im Basiselement ist dabei an die Geometrie des Borstenverankerungskörpers angepasst. Die Ausnehmung ist von einem umlaufenden, vorstehenden Rand umgeben.

Der Borstenverankerungskörper und Basiselement bilden zusammen den Trägerkörper aus.

Die Rückseite des Borstenverankerungskörpers wird als jene Seite bezeichnet, welche dem Basiselement zugewandt und gegebenenfalls mit diesem verbunden ist, und welches zur Rückseite der Körperpflegebürste gerichtet ist.

Die Vorderseite des Borstenverankerungskörpers wird entsprechend als jene Seite bezeichnet, aus welcher die Borsten mit ihren pflegewirksamen Borstenabschnitt austreten.

Beim AFT-Verfahren ist es wichtig, dass der Borstenverankerungskörper zentriert und horizontal gegenüber dem Basiselement befestigt wird. Andernfalls können im rotierenden/oszillierenden Betrieb Unwuchten entstehen, welche sich in nicht gewollte Bewegungen bzw. Vibrationen auswirken.

Im AFT-Verfahren ist es möglich, das Basiselement/Trägerkörper in Richtung des Borstenfeldes weniger dick zu gestalten. Dies, weil verglichen mit dem konventionellen Ankerstanzverfahren keine Borstenlöcher im Bauteil geformt werden müssen. Dadurch ist es möglich, dass die Lagerstiftaufnahme als Durchgangsloch anstatt als Sackloch ausgestaltet ist. Im fertigen Produkt ist die Öffnung dennoch nicht zu sehen, da der Borstenverankerungskörper darüber montiert wird und das Loch so verdeckt wird.

Gemäss einer von der oben beschriebenen Ausführungsform eines AFT-Verfahrens abweichenden, ersten Variante weist der Borstenverankerungskörper auf der Borstenverankerungsseite einen umlaufenden, in Richtung Basiselement vorstehenden Verbindungsrand auf, welcher entsprechend eine Ausnehmung umgibt. In der Ausnehmung sind die befestigten Borstenenden angeordnet. Der Borstenverankerungskörper bildet im Querschnitt eine Art U-Form aus.

Das Basiselement weist seinerseits einen umlaufenden Rand auf, welcher eine Verbindungskontaktfläche für die Stirnendfläche des vorstehenden Verbindungsrandes des Borstenverankerungskörpers ausbildet.

Der Borstenverankerungskörper ist nun über die der Verbindungkontaktfläche aufliegende Stirnendfläche des vorstehenden Verbindungsrandes mit dem Basiselement verbunden. Die Verbindungkontaktfläche und die Stirnendfläche sind insbesondere senkrecht zur Trägerdrehachse angeordnet.

Die Verbindung kann mittels (Kunststoff-)Schweissen, wie Ultraschall-Schweissen, oder Kleben erfolgen.

Auf der Stirnendfläche und/oder auf der Verbindungskontaktfläche kann ein oder können mehrere Aufschmelzelemente angeordnet sein. Diese stehen den genannten Flächen vor. Die Aufschmelzelemente werden beim Schweissen aufgeschmolzen und liefern so zusätzliches Kunststoffmaterial zur Herstellung einer Schweissverbindung.

Der umlaufende Rand des Basiselements fasst einen zum Borstenverankerungskörper hin weisenden, kegelstumpfförmigen Körper ein. Dieser beinhaltet, ausgehend vom umlaufenden Rand eine zum Zentrum hin geneigte Flanke sowie eine gegenüber dem umlaufenden Rand erhöhte, und von der geneigten Flanke eingeschlossene ebene Fläche auf. Der kegelstumpfförmige Körper dient der Zentrierung des Borstenverankerungskörpers auf dem Basiselement.

Der Borstenverankerungskörper liegt über die Stirnendfläche des vorstehenden Verbindungsrandes insbesondere nur am umlaufenden Rand dem Basiselement auf. Innerhalb des umlaufenden Randes kann zwischen Basiselement und Borstenverankerungskörper ein Hohlraum ausgebildet werden.

Gemäss einer Weiterbildung der ersten Variante können Borstenverankerungskörper und Basiselement Positionierungshilfen enthalten, welche erlauben den Borstenverankerungskörper in einer definierten Winkellage um die Trägerdrehachse auf dem Basiselement zu positionieren. Dies kann beispielsweise von Bedeutung sein, wenn das Borstenfeld bezüglich Anordnung der Borsten, Borstenlänge, Ausrichtung und Beschaffenheit der Borsten strukturiert ist.

Die Positionierungshilfen können aufeinander abgestimmte Paarungen von Ausnehmungen und Erhebungen sein, wobei jeweils eines der Elemente am Borstenverankerungskörper und das andere Element am Basiselement angeordnet ist.

Die Positionierungshilfen greifen nun beim Aufbringen des Borstenverankerungskörpers auf das Basiselement in der richtigen Winkellage ineinander. Die Positionierungshilfen sind entsprechend auf den einander zugewandten Seiten von Borstenverankerungskörper und Basiselement angeordnet.

So kann vorgesehen sein, dass die Stirnendfläche des Borstenverankerungskörpers und die Verbindungskontaktfläche des Basiselements zwecks Herstellung der Verbindung erst in der richtigen Winkellage des Borstenträgers aufeinander treffen.

So können beispielsweise die Ausnehmungen am Basiselement und die Erhebungen am Borstenverankerungskörper angeordnet sein. Eine umgekehrte Anordnung ist ebenfalls möglich. Möglich ist auch eine wechselseitige Anordnung von Erhebungen und Ausnehmungen.

Die Ausnehmungen und Erhebungen können gegengleich ausgebildet sein, so dass ein formschlüssiger Eingriff entsteht.

Es können beispielsweise 1 bis 5, insbesondere 1 bis 4 solcher Paarungen von Ausnehmungen und Erhebungen vorgesehen sein.

Zur Reduktion des Spiels des Borstenfeldes im Borstenverankerungskörper können auf dem Basiselement Spitzen, Stege, Halbkugeln auf kegelstumpfförmigem Körper etc. angebracht sein. Diese reduzieren den Bewegungsspielraum des Borstenfeldes im montierten Zustand und verhindern dadurch Geräusche.

Gemäss einer zweiten Variante weist der Borstenverankerungskörper auf der Borstenverankerungsseite ebenfalls einen umlaufenden, in Richtung Basiselement vorstehenden Verbindungsrand auf, welcher entsprechend eine Ausnehmung umgibt. In der Ausnehmung sind die befestigten Borstenenden angeordnet. Der Borstenverankerungskörper bildet im Querschnitt eine Art U-Form aus.

Im Gegensatz zur ersten Variante weist der umlaufende, vorstehende Verbindungsrand am Borstenverankerungskörper eine Stufe auf, welche ausgehend von einer Stirnendfläche eine entlang der Trägerdrehachse nach innen zurückversetzten Auflageschulter mit einer Schulterfläche ausbildet.

Das Basiselement weist seinerseits einen umlaufenden Rand auf, welcher eine Verbindungskontaktfläche für die Schulterfläche des vorstehenden Verbindungsrandes des Borstenverankerungskörpers ausbildet. Der Borstenverankerungskörper ist nun über die der Verbindungkontaktfläche aufliegende Schulterfläche mit dem Basiselement verbunden. Die Verbindungkontaktfläche und die Schulterfläche sind insbesondere senkrecht zur Trägerdrehachse angeordnet.

Die Verbindung kann mittels (Kunststoff-)Schweissen, wie Ultraschall-Schweissen, oder Kleben erfolgen.

Auf der Schulterfläche und/oder auf der Verbindungskontaktfläche kann ein oder können mehrere Aufschmelzelemente angeordnet sein. Diese stehen den genannten Flächen vor. Die Aufschmelzelemente werden beim Schweissen aufgeschmolzen und liefern so zusätzliches Kunststoffmaterial zur Herstellung einer Schweissverbindung.

Der Borstenverankerungskörpers übergreift nun mit einem umlaufenden, äusseren Verbindungsrandabschnitt, welcher endseitig in der Stirnendfläche und trägerseitig in der Auflageschulter mündet, aussenseitig die Verbindungskontaktfläche des Basiselements. Der Borstenverankerungskörper überlappt mit seinem äusseren Verbindungsrandabschnitt mit der Umfangsfläche des Basiselements.

Der äussere Verbindungsrandabschnitt dient der Zentrierung des Borstenverankerungskörpers auf dem Basiselement. Der äussere Verbindungsrandabschnitt bildet hierzu eine zur Umfangsfläche des Basiselements zugewandte Zentrierfläche aus. Die Zentrierfläche kann parallel zur Trägerdrehachse verlaufen.

Die Umfangsfläche des Basiselements, welche dem äusseren Verbindungsrandabschnitt des Borstenverankerungskörpers gegenüber liegt, kann in Richtung Borstenverankerungskörper konisch verjüngend ausgebildet sein.

Gemäss einer Abwandlung der zweiten Variante ist die Umfangsfläche am Basiselement, welche dem äusseren Verbindungsrandabschnitt des Borstenverankerungskörpers gegenüber liegt, in Richtung Borstenverankerungskörper konisch verjüngend ausgebildet, wobei die Umfangsfläche eine Verbindungskontaktfläche ausbildet.

Die Zentrierfläche des äusseren Verbindungsrandabschnitts weist ebenfalls eine Neigung auf, welche mit der Neigung der Umfangsfläche korrespondiert. Auf diese Weise wird beim Anbringen des Borstenverankerungskörpers auf dem Basiselement eine flächige Verbindung zwischen Zentrierfläche und Umfangsfläche ausgebildet.

Die bereits oben beschriebenen Aufschmelzelemente können in der Umfangsfläche und/oder in der Auflagefläche angeordnet sein.

Die Stufe mit der Auflageschulter kann gemäss dieser abgewandelten Ausführungsform schmäler ausgeführt sein.

Auch die oben beschriebene zweite Variante und deren Abwandlung können Positionierhilfen zum Festlegen einer definierten Winkellage des Borstenverankerungskörpers aufweisen. Zu dieser Thematik wird auf die Beschreibung zur ersten Variante verwiesen.

Die Funktionseinheit kann zusätzlich als Positionierhilfe beim Schweissprozess zwischen Basiselement und Borstenverankerungskörper dienen. Insbesondere kann die Lagerstiftaufnahme als Positionierhilfe während dem Schweissprozess zwischen Basiselement und Borstenverankerungskörper dienen. Da beim Schweissprozess zwischen Basiselement und Borstenverankerungskörper Kräfte auftreten können ist es sinnvoll die Funktionseinheit mittels Abstützungen auf der Schweissanlage derart zu sichern, dass während dem Schweissprozess keine ungewollten Deformationen an der Funktionseinheit auftreten können.

Ein weiteres, ankerloses Verfahren ist das so genannte IMT- (In Mould Tufting) Verfahren. Bei diesem Verfahren werden konventionelle Borsten in einer Spritzgussmaschine zur Verankerung mittels Kunststoff umspritzt.

Hierzu werden die einzelnen Borstenbündel an ihren befestigungsseitigen Enden miteinander verschmolzen.

Anschliessend wird ein mit den oben genannten Borstenbündeln versehener Borstenverankerungskörper in die Kavität einer Spritzgussform eingelegt, in welcher anschliessend, zur Verankerung der Borstenbündel eine Kunststoffkomponente eingespritzt wird. Diese bildet zusammen mit dem Borstenverankerungskörper den Trägerkörper aus.

In einer Abwandlung dieses Verfahrens können auch lediglich die oben genannten Borstenbündel wenigstens mit ihren befestigungsseitigen Endabschnitten in die Kavität einer Spritzgussform eingelegt, in welcher anschliessend, zur Verankerung der Borstenbündel eine Kunststoffkomponente eingespritzt wird, welche den Trägerkörper ausbildet.

Dieses abgewandelte Verfahren kann auch zweistufig ausgeführt werden, indem die oben genannten Borstenbündel in einem ersten Schritt unter Ausbildung eines Borstenverankerungskörpers in einem Spritzgiesswerkzeug mit einer ersten Kunststoffkomponente umspritzt werden. In einem zweiten Schritt wird der Borstenverankerungskörper unter Ausbildung des vollständigen Trägerkörpers mit einer zweiten Kunststoffkomponente in einem Spritzgiesswerkezug umspritzt. Dieses Verfahren wird auch IAP (Integrated Anchorless Production) bezeichnet.

Ein weiteres, ankerloses Beborstungsverfahren ist das so genannte AMR-Verfahren. Bei diesem Verfahren werden die konventionellen Borsten beziehungsweise die Borstenbündel in die Durchgangslöcher eines Borstenverankerungskörpers hindurchgeführt. Die auf der Rückseite aus dem Borstenverankerungskörper austretenden Borstenbündel werden mittels Verschmelzen mit dem Borstenverankerungskörper verbunden. In einem weiteren Schritt wird die Rückseite mit der Borstenschmelze in einem Spritzgiesswerkzeug mit einer Weichkomponente überspritzt.

Ein weiteres, ankerloses Beborstungsverfahren ist das so genannte PTt-Verfahren. Bei diesem Verfahren werden die konventionellen Borsten, beziehungsweise die Borstenbündel, ebenfalls ohne Hilfe eines Ankers am Trägerkörper befestigt.

Die Borsten werden dabei bündelweise mit ihrem dem freien Nutzende gegenüber liegenden Ende durch Durchlässe einer Halte-/Pressvorrichtung geführt. Die Borstenbündel werden anschliessend jeweils an ihren Endabschnitten, welche im Trägerkörper verankert werden sollen, bündelweise verschmolzen.

In einem weiteren Schritt wird der bereits vorgängig spritzgegossene Trägerkörper parallel dazu mindestens teilweise auf Glasübergangstemperatur erwärmt. Die verschmolzenen Borstenbündel werden dann mittels einer Halte-/Pressvorrichtung in Sacklöcher bzw. Ausnehmungen im Trägerkörper eingeführt. Die Borstenbündel werden unter Ausübung von Druck durch die Halte-/Pressvorrichtung in den Sacklöchern bzw. Ausnehmungen fixiert. Bei diesem Vorgang werden die Sacklöcher verkleinert, was zu einer Verankerung der Borstenbündel führt.

Dieses Verfahren weist allerdings die Problematik auf, dass durch die Erwärmung des Trägerkörpers auf die Glasübergangstemperatur ohne besondere Massnahmen die auf dessen Rückseite angeordnete Funktionseinheit mit der Lagerstiftaufnahme, der zweiten Zahnung und den seitlichen Anschlägen Schaden nehmen bzw. verformt werden kann.

Eine Verformung der Funktionseinheit darf nämlich nicht vorkommen, weil ansonsten die mit geringen Toleranzen auf die Funktionseinheit ausgelegten Bauteile, wie Lagerstift, Antriebsstab oder Gehäusekopf nicht mehr optimal zusammenwirken können.

Als Massnahme gegen eine unerwünschte Verformung kann die Funktionseinheit während der Beborstung beispielsweise thermisch isoliert werden. Dies kann über Einlegeteile oder Zwischenelemente erfolgen. Damit wird die Funktionseinheit nicht erwärmt oder weniger erwärmt.

Die Funktionseinheit kann als Positionierhilfe beim Beborstungsprozess dienen. Insbesondere kann die Lagerstiftaufnahme als Positionierhilfe während dem Beborstungsprozess dienen. Da beim Beborstungsprozess Kräfte und thermische Verformung auftreten können ist es sinnvoll die Funktionseinheit mittels Abstützungen auf der Beborstungsanlage derart zu sichern, dass während dem Beborstungsprozess keine ungewollten Deformationen an der Funktionseinheit auftreten können. Dazu können formsymmetrische Abstützelemente in die Funktionseinheit eingefahren werden. Insbesondere kann es notwendig sein, die Lagerstiftaufnahme mittel eingefahrenem Stift zu sichern. Zusätzlich kann es notwendig sein die zweite Zahnung am Borstenträger mittels Abstützung zu sichern.

Es kann auch vorgesehen sein, den Borstenträger aus zwei verschiedenen Hartkomponenten herzustellen, welche unterschiedliche Schmelztemperaturen haben. So können beispielsweise der Trägerkörper aus einer ersten Hartkomponente mit niedrigerem Schmelzpunkt und die Funktionseinheit aus einer zweiten Hartkomponente mit höherem Schmelzpunkt hergestellt sein.

Ein solcher Trägerkörper kann in einem Zweikomponentenspritzgiessverfahren hergestellt werden.

Eine weitere Option kann darin bestehen, den Trägerkörper von der Vorderseite auf die gewünschte Glasübergangstemperatur zu erwärmen und gleichzeitig die Funktionseinheit von der Rückseite zu kühlen.

Im Weiteren können auch Stützgeometrien eingebracht werden, welche die Geometrie der Funktionseinheit stützen, so dass trotz Erwärmung keine Verformungen auftreten.

Die oben beschriebenen Möglichkeiten zur Verhinderung der Deformation der Funktionseinheit während der Beborstung können natürlich auch miteinander kombiniert werden. So kann beispielsweise ein Stützstift in die Lagerstiftaufnahme eingeführt werden, um diese zu stützen. Ferner kann insbesondere auch eine Stützgeometrie für die erste Zahnung vorgesehen sein, welche für die Formhaltung der ersten Zahnung sorgt.

Gemäss einem weiteren Verfahren kann die Beborstung des Trägerkörpers auch durch Eindrehen der Borsten in Ausnehmungen erfolgen.

Die folgenden Bauteile werden, wie zum Teil bereits weiter oben beschrieben, insbesondere mittels eines Spritzgiessverfahrens in einem Spritzgiesswerkzeug hergestellt:
- Aufsteckbürstengehäuse
- Antriebsstab
- Festlegelement
- Borstenträger, d.h. Trägerkörper mit Funktionseinheit

Die oben genannten Bauteile sind insbesondere einteilig hergestellt. Die oben genannten Bauteile können aus einer einzigen Kunststoffkomponente bestehen.

Das dazugehörige Spritzgiessverfahren kann ein Heisskanalverfahren oder Kaltkanalverfahren sein.

Umfassen die Bauteile mehrere Kunststoffkomponenten, so können diese mittels eines Mehrkomponentenspritzgiessverfahrens hergestellt sein. Eine besondere Variante dieses Verfahren ist das sogenannte Co-Injection Verfahren wie es in der Veröffentlichungsschrift WO 2013/020 237 beispielsweise beschrieben wird.

Das Mehrkomponentenspritzgiessverfahrens zeichnet sich unter anderem dadurch aus, dass sich die Kunststoffkomponenten über einen Material- bzw. Stoffschluss und/oder über einen Formschluss miteinander verbinden.

Die Herstellung einer Formschlussverbindung zwischen zwei Kunststoffkomponenten kann insbesondere durch ein Schwundverhalten der zuletzt gespritzten Kunststoffkomponente beim Abkühlen begünstigt werden.

Die im Rahmen dieser Beschreibung erwähnten Hartkomponenten können sein:
- Styrolpolymerisate wie Styrolacrylnitril (SAN), Polystyrol (PS), Acrylnitrylbutadienstyrol (ABS), Styrolmethylmethacrylate (SMMA) oder Styrolbutadien (SB);
- Polyolefine wie Polypropylen (PP) oder Polyethylen (PE) beispielsweise auch in den Formen high density Polyethylen (HDPE) oder low density Polyethylen (LDPE) [Polyethylen kann je nach Verarbeitung als Hartkomponente oder Weichkomponente eingesetzt werden];
- Polyester wie Polyethylenterephtalat (PET) in Form von säuremodifiziertem Polyethylenterephtalat (PETA) oder glykolmodifiziertem Polyethylenterephtalat (PETG), Polybutylenterephthalat (PBT), säuremodifiziertes Polycyclohexylenedimethyleneterephthalate (PCT-A) oder glykolmodifiziertes Polycyclohexylenedimethyleneterephthalate (PCT-G);
- Cellulosederivate wie Celluloseacetat (CA), Celluloseacetobutyrat (CAB), Cellulosepropionat (CP), Celluloseacetatphtalat (CAP) oder Cellulosebutyrat (CB);
- Polyamide (PA) wie PA 6.6, PA 6.10 oder PA 6.12;
- Polymethylmethacrylat (PMMA);
- Polycarbonat (PC);
- Polyoxymethylen (POM);
- Polyvinylchlorid (PVC);
- Polyurethan (PUR) [Polyurethan kann je nach Verarbeitung und Modifikation als Hartkomponente oder Weichkomponente eingesetzt werden];
- Polyamid (PA).

Als Hartkomponente wird insbesondere Polypropylen (PP) eingesetzt.

Das E-Modul der Hartkomponente beträgt beispielsweise 1000 - 2400 N/mm², insbesondere 1300 - 1800 N/mm².

Hartkomponenten finden insbesondere Einsatz in Trägerstrukturen. Dies können z.B. das Griffkörpergehäuse des Handteils, das Aufsteckbürstenteil oder der Trägerkörper sein.

Werden in einem Mehrkomponentenspritzgiessverfahren mehrere Hartkomponenten eingesetzt oder werden verschiedene Hartkomponenten mit Ultraschallschweissen miteinander verbunden, so bilden diese untereinander insbesondere vorzugsweise einen Materialschluss aus.

Es ist auch denkbar, dass in einem Mehrkomponentenspritzgiessverfahren mehrere Hartkomponenten eingesetzt werden, welche untereinander keinen Materialschluss eingehen. Bei solchen Komponenten-Paarungen wird ein Formschluss vorgesehen. Der Formschluss kann Hinterschnitte, Durchbrüche und/oder, teilweise oder vollständige Umspritzungen umfassen. Der Formschluss kann durch ein Schwundverhalten der zuletzt gespritzten Hartkomponente beim Abkühlen begünstigt werden. Beispiele für mögliche Paarungen von Hartkomponenten, welche keinen Materialschluss eingehen sind Polypropylen-Polyester oder Polypropylen-Styrolacrylnitril.

Die im Rahmen dieser Beschreibung erwähnten Weichkomponenten können sein:
- Thermoplastische Styrol-Elastomere (TPE-S), wie Styrol-Ethylen-Butylen-Styrol-Copolymer (SEBS) oder Styrol-Butadien-Styrol-Copolymer (SBS);
- Thermoplastische Polyurethan-Elastomere (TPE-U);
- Thermoplastische Polyamid-Elastomere (TPE-A);
- Thermoplastische Polyolefin-Elastomere (TPE-O);
- Thermoplastische Polyester-Elastomere (TPE-E);
- Silikone;
- Polyethylen (PE) [Polyethylen kann je nach Verarbeitung und Modifikation als Hartkomponente oder Weichkomponente eingesetzt werden];
- Polyurethan (PU) [Polyurethan kann je nach Verarbeitung und Modifikation als Hartkomponente oder Weichkomponente eingesetzt werden];

Als Weichkomponente werden insbesondere thermoplastische Elastomere (TPE's) und ganz besonders thermoplastische Styrol-Elastomere (TPE-S) eingesetzt.

Die Weichkomponente weist insbesondere eine Shore A Härte von kleiner 90, vorzugsweise von kleiner 50, besonders bevorzugt von kleiner 30, auf.

Die Weichkomponente bildet mit den Komponente(n) welche sie überspritzt vorzugsweise einen Materialschluss.

Die im Rahmen dieser Beschreibung erwähnten gespritzten Borsten können aus folgenden Komponenten sein:
- Thermoplastische Polyurethan-Elastomere (TPE-U);
- Thermoplastische Polyester-Elastomere (TPE-E);
- Thermoplastische Polyamid-Elastomere (TPE-A).

Die gespritzten Borsten bestehen insbesondere aus thermoplastischen Polyurethan-Elastomeren TPE-U. Diese können zwecks Erzielung besserer Fliesseigenschaften, oder einer schnelleren Erstarrung, d.h. schnelleren Kristallisation, modifiziert sein. Die schnellere Erstarrung wird insbesondere durch eine Modifikation erzielt, dank welcher sich die Molekülketten schon bei vergleichsweise hohen Temperaturen verbinden.

Die Komponenten für gespritzte Borsten haben insbesondere eine Shore D Härte von 0 bis 100, insbesondere 30 - 80. Für gespritzte Borsten werden spezielle Formen von Weichkomponenten eingesetzt, welche in der Regel höhere Shore Härten aufweisen als die Weichkomponenten von weichelastischen Reinigungs- bzw. Massageelementen oder Handgriffzonen, wie Daumenauflage, oder Zungenreiniger.

Im Rahmen eines Mehrkomponentenspritzgiessverfahren gehen die Komponenten für gespritzte Borsten in der Regel mit den anderen eingesetzten Weich- und/oder Hartkomponenten keinen Materialschluss ein. Folglich wird für allfällige Verbindungen mit anderen Hart- bzw. Weichkomponenten ein Formschluss vorgesehen. Der Formschluss kann Elemente wie Hinterschnitte, Durchbrüche und/oder teilweise oder vollständige Umspritzungen umfassen. Die Formschlussverbindung kann durch das Schwundverhalten der zuletzt gespritzten Komponente für gespritzte Borsten während der Abkühlung begünstigt werden.

Als Kunststoffkomponenten (Hart- oder Weichkomponente) können auch Biokunststoffe eingesetzt werden, welche aus nachwachsenden Rohstoffen hergestellt werden. Solche Rohstoffe können sein, Mais, Hanf, Zucker, Rizinusöl, Palmöl, Kartoffeln, Weizen, Zuckerrohr, Kautschuk, Holz, Castor Pflanze/ Wunderbaum.

Aus diesen Rohstoffen lassen sich die zur Herstellung von Biokunstoffen wichtigen Grundstoffe, wie Cellulose, Stärke, Milchsäure (PLA), Glucose, Chitin oder Chitosan gewinnen.

Im Weiteren können als Kunststoffkomponenten (Hart- oder Weichkomponente) auch wasserlösliche Polymere eingesetzt werden.

Den Kunststoffkomponenten (Hart- oder Weichkomponente) können, wie schon an verschiedenen Stellen erwähnt, Zusatzstoffe beigemengt sein, welche in Kombination mit der Kunststoffkomponente für besondere Eigenschaften des daraus hergestellten Bauteils sorgen. Solche Eigenschaften können sein: Verstärkung des Bauteils, Erhöhen der Abriebfestigkeit oder Verbesserung der Gleiteigenschaften, bzw. Herabsetzen des Reibkoeffizienten.

Die Zusatzstoffe können Glasfasern (Verstärkung des Bauteils), Glaskugeln (Verstärkung des Bauteils), Kreide (Verbesserung der Gleiteigenschaften) oder PFTE (Verbesserung der Gleiteigenschaften) sein.

Die Kunststoffkomponente bildet dabei die Kunststoffmatrix, welche die Zusatzstoffe aufnimmt.

Die Montage des Aufsteckbürstenteils erfolgt insbesondere auf einem Montagedorn. Dieser kann eine Montagehilfe in der Form eines Kupplungszapfens des Handteils aufweisen, für welche die Aufsteckbürste hergestellt wird.

In einem ersten Schritt wird nun das Festlegelement mit seinem handteilseitigen Hülsenabschnitt auf den Montagedorn montiert.

In einem zweiten Schritt wird der Antriebsstab auf den Montagedorn montiert. Der Montagedorn ist so ausgelegt, dass der Antriebsstab auf dem Montagedorn relativ zum Festlegelement und entsprechen auch relativ zum nachfolgend montierten Aufsteckbürstengehäuse in der korrekten Winkellage um die Steuerdrehachse positioniert ist.

In einem dritten Schritt wird das Aufsteckbürstengehäuse über den Antriebsstab und das Festlegelement auf dem Montagedorn montiert. Bei diesem Schritt rastet das Festlegelement mit seinen Rastzungen im Aufsteckbürstengehäuse ein und wird so darin fixiert. Ferner wird auch der Antriebsstab über das Festlegelement und den in der Pinnaufnahme eingefahrene Lagerpinn im Aufsteckbürstengehäuse fixiert.

In einem vierten Schritt wird der bereits beborstete Bürstenkopf in der Borstenträgeraufnahme des Gehäusekopfs montiert. Bei diesem Vorgang wird der Bürstenkopf mit seiner Funktionseinheit in die Borstenträgeraufnahme eingeführt, wobei die Zahnungen des Bürstenkopfs und des Antriebsstabes ineinander greifen.

Anschliessend wird der Lagerstift von der Rückseite des Gehäusekopfs eingeführt und mit seinem Verankerungsabschnitt in die Lagerstiftaufnahme am Bürstenkopf gepresst. Der Bürstenkopf ist nun drehfest mit dem Lagerstift verbunden und über den Lagerstift drehbar im Gehäusekopf gelagert.

Dank der vorliegenden Erfindung lassen sich Aufsteckbürstenteile für unterschiedliche Modelle von Pflegebürsten aus vergleichsweise wenig Spritzgiessteilen herstellen. Dadurch fallen weniger Herstellschritte / Montageschritte an und es werden weniger Spritzgiesswerkzeuge benötigt, was sich positiv auf die Herstellungskosten auswirkt.

Im Weiteren fallen durch die Teilereduktion auch weniger Montageschritte an, was die Montage effizienter gestaltet.

So wird beispielsweise zur Befestigung des Bürstenkopfes lediglich ein einzelner Lagerstift benötigt, welcher ohne weitere Befestigungsmittel den Bürstenkopf mit dem Gehäusekopf verbindet.

Elektrische Zahnbürsten, wie sie beispielsweise hier vorliegen, sind oftmals mit elektronischen Funktionen ausgestattet, die dem Benutzer eine bessere Mundhygiene beziehungsweise eine bessere Anwendung der Zahnbürste ermöglichen. Ferner sollen solche Funktionen auch eine falsche Handhabung der Zahnbürste, welche zu Schäden an Zahnfleisch und Zähnen führen kann, vermeiden.

Ein Beispiel einer solchen Funktion ist die Anpressdruckkontrolle, eine Funktion, die dem Benutzer während der Anwendung signalisiert, wenn er mit der Zahnbürste zu viel Druck auf die Zähne ausübt. Hierzu wird z. B. ein (oberer) Grenzwert für den Anpressdruck festgelegt, dessen Überschreitung von der Zahnbürste angezeigt wird.

Die nachfolgend beschriebene Funktion einer Anpressdruckkontrolle ist zusammen mit einer Steuereinheit realisiert und kann sowohl für oszillierende wie auch für Schallzahnbürsten (wie eingangs erklärt und definiert) auf gleiche Weise umgesetzt werden.

Die Steuereinheit ist dabei insbesondere in der Zahnbürste untergebracht. Die Steuereinheit kann allerdings auch auf einem Mobilgerät untergebracht sein, welches entsprechende Messwerte, z. B. Stromverbrauch, von der Zahnbürste empfängt.

Die Messung des effektiven Anpressdrucks mittels der Steuereinheit bringt mit sich, dass verschiedenste Faktoren der eigentlichen elektrischen Zahnbürste bzw. des Handteils und der Aufsteckbürste berücksichtigt werden müssen. Beispielsweise sind die verschiedenen Komponenten für den Betrieb wie z.B. Motor, Getriebe und natürlich auch das Aufsteckbürstenteil mit Toleranzen versehen, es gibt verschiedene Reibungswerte zwischen den Komponenten etc. Weiter sind die Aufsteckbürstenteile in der Anwendung beispielsweise Zahnpasta und Speichel ausgesetzt, und die Aufsteckbürstenteile haben im Gebrauch auch einen gewissen Verschleiss.

Das bedeutet schlussendlich, dass keine starre, nicht dynamische Funktion realisiert werden kann. Jedes Gerät ist zu jedem Zeitpunkt und in jeder Aufsteckbürstenkombination individuell bezüglich seiner Eigenschaften, wie Anpressdruck.

Die vorliegende erfindungsgemässe Funktion stützt darauf ab, dass unterschiedliche Anpressdrücke einen unterschiedlichen Stromverbrauch verursachen. Der Stromverbrauch bezieht sich dabei auf den Stromverbrauch des Motors zum Antreiben der Bürstenkopfbewegung.

Konkret korreliert der Stromverbrauch mit dem mechanischen Drehmoment und dieses korreliert mit dem Anpressdruck. Die Beziehung zwischen Anpressdruck und Stromverbrauch ist auf diese Weise gegeben. Die Beziehung zwischen Anpressdruck und Stromverbrauch lässt sich in einer Kennlinie wiedergeben. Die Beziehung zwischen Anpressdruck und Stromverbrauch ist insbesondere linear.

Bei der Herstellung der Zahnbürste wird die Kennlinie des Anpressdrucks gegenüber dem Stromverbrauch der Zahnbürste definiert. Die Kennlinie stellt eine Gerade mit einem Startpunkt und einer Steigung dar, wobei der Startpunkt dem Leerlaufbetrieb entspricht, in welchem kein Anpressdruck herrscht.

Die später zur Ermittlung des Anpressdruckes benötigte Grösse ist lediglich die Steigung der Kennlinie, da der Startpunkt, d.h. der Stromverbrauch beim Leerlaufbetrieb, später bei der Benutzung der Zahnbürste laufend neu bestimmt wird. Dies aufgrund der oben erwähnten zeitlich veränderlichen Faktoren, wie Verschleiss, Reibungswerte, etc., welche einen Einfluss auf die Eigenschaften der Zahnbürste bzw. deren Komponenten und somit auf die Beziehung zwischen Anpressdruck und Stromverbrauch haben.

Zur Bestimmung der Steigung werden zwei Punkte der Geraden gemessen. Zum einen ist dies der Stromverbrauch im Leerlauf des Handgeräts mit Aufsteckbürstenteil und zum anderen der Stromverbrauch des Handgeräts mit Aufsteckbürstenteil im belasteten Zustand (Anpressdruck wird ausgeübt). Der belastete Zustand entspricht in diesem Fall insbesondere dem (oberen) Grenzwert zum Auslösen des Anpressdrucksignals (d.h. dem maximal zulässigen Anpressdruck).

Diese Messungen werden in einer Messvorrichtung vorgenommen, an welche das Handgerät angeschlossen oder eingelegt wird. Die Messvorrichtung simuliert dabei vorzugsweise die Aufsteckbürste und entsprechend den Anpressdruck. Dadurch kann umgangen werden, dass sich die verwendete Aufsteckbürste abnutzt und einen falschen Basiswert (Steigung der Kennlinie) ergibt.

Die gemessene Grösse, d.h. die Steigung der Geraden, wird in der Zahnbürste bzw. der Steuereinheit hinterlegt bzw. gespeichert und ist eine gerätespezifische Grösse.

Die Festlegung der Steigung der Kennlinie geschieht also vor dem Verkauf der Zahnbürste. Sie kann als Teil des Fertigungsprozesses betrachtet werden.

Bei der Anwendung der Zahnbürste wird nun laufend, d.h. insbesondere bei jedem (Neu)Start der Zahnbürste, der Startpunkt der Geraden im Stromverbrauch - Anpressdruck Diagramm (Kennlinie) bestimmt. Dieser entspricht jeweils dem tiefsten gemessenen Stromverbrauch im (Leerlauf) Betrieb. Laufend ausgelesen, da sich der tiefste Stromverbrauch (Leerlaufbetrieb) auch im Betrieb ändert. Dies, da sich beispielsweise auch die Reibungswerte laufend ändern.

Der Startpunkt wird insbesondere jeweils beim Starten der elektrischen Zahnbürste bestimmt. Beim Starten der Zahnbürste wird dieser Wert nämlich einen unbelasteten Wert darstellen, da die Zahnbürste im Normalfall nicht belastet gestartet wird, also im Leerlaufbetrieb ist (Startpunkt).

Durch die Festlegung des Startpunkts der Geraden wird gleichzeitig der Punkt, d.h. Stromverbrauch, für die Auslösung der Anpressdrucksignalisierung definiert. Dies geschieht durch Anwendung der Kennlinie mit der vordefinierten Steigung und Auslesen des Stromverbrauchs beim Schnittpunkt mit dem (oberen) Grenzwert für den Anpressdruck.

Steht nun fest, bei welchem Stromverbrauch der besagte Grenzwert für den Anpressdruck erreicht ist, lässt sich durch fortwährendes Messen des Stromverbrauchs während der Benutzung der Zahnbürste, der Anpressdruck bezüglich Erreichen des (oberen) Grenzwertes überwachen.

Das heisst, die Gerade mit der vorgängig in der Messvorrichtung bestimmten Steigung wird durch den am Gerät ermittelten (Stromverbrauchs-) Messwert bei unbelastetem Startbetrieb gelegt. Daraus lässt sich der Stromverbrauch, welcher für die Auslösung der Anpressdrucksignalisierung notwendig ist ableiten und mit dem tatsächlichen Stromverbrauch vergleichen.

Im Betrieb wird nun laufend der Stromverbrauch gemessen. Wird nun der Punkt für die Auslösung der Anpressdrucksignalisierung (Überschreitung eines Grenzwertes des Anpressdruckes) überschritten, so wird ein Signal ausgegeben.

Auf diese Weise kann der Anpressdruck in den verschiedensten Betriebs- und Produktzuständen zuverlässig detektiert und das Erreichen bzw. die Überschreitung dem Nutzer signalisiert werden werden.

Die Anpressdrucksignalisierung kann über das Gerät, d.h. Zahnbürste, erfolgen. Die Anpressdrucksignalisierung kann auch über ein Mobilgerät, z. B. mit Display, erfolgen, welches mit der Zahnbürste insbesondere drahtlos verbunden ist.

Beispiele für die Anpressdrucksignalisierung sind beispielsweise im visuellen Bereich Leuchten einer Lampe, Anzeige auf einem Display, im akustischen Bereich sind es Töne oder im mechanischen Bereich eine Veränderung der Betriebsfrequenz der elektrischen Zahnbürste (Vibration).

Der Grenzwert des Anpressdrucks liegt zwischen 150g und 600g, vorzugsweise zwischen 200g und 400g.

Das oben beschriebene Verfahren betreffend Anpressdruckkontrolle bzw. Anpressdrucksignalisierung ist übrigens grundsätzlich auf Körperpflegebürsten anwendbar.

Das erfindungsgemässe Aufsteckbürstenteil findet Verwendung für elektrische Körperpflegebürsten, wie Gesichtsbürsten, und ganz besonders für elektrische Zahnbürsten. Allerdings kann das erfindungsgemässe Aufsteckbürstenteil auch, Verwendung finden für elektrische Haushaltsbürsten.

Im Folgenden wird der Erfindungsgegenstand anhand von Ausführungsbeispielen, welche in den beiliegenden Zeichnungen dargestellt sind, näher erläutert. Es zeigen jeweils:
- Figur 1a:: eine Ansicht einer elektrischen Zahnbürste gemäss Erfindung von der Seite;
- Figur 1b:: eine Ansicht der elektrischen Zahnbürste gemäss Figur 1a von der Rückseite;
- Figur 1c:: eine perspektivische Ansicht der elektrischen Zahnbürste gemäss Figur 1a von der Vorderseite;

- Figur 2a:: eine Ansicht eines Aufsteckbürstenteil für eine elektrische Zahnbürste gemäss Figur 1a-1c von der Vorderseite;
- Figur 2b:: eine Ansicht des Aufsteckbürstenteils gemäss Figur 2a von der Seite;
- Figur 2c:: eine Ansicht des Aufsteckbürstenteils gemäss Figur 2a von der Rückseite;
- Figur 2d:: eine perspektivische Ansicht des Aufsteckbürstenteils gemäss Figur 2a von der Rückseite;
- Figur 2e:: eine Ansicht des Aufsteckbürstenteils gemäss Figur 2a von unten;
- Figur 2f:: eine perspektivische Ansicht des Aufsteckbürstenteils gemäss Figur 2a von der Vorderseite;
- Figur 2g:: eine Ansicht des Aufsteckbürstenteils gemäss Figur 2a von oben;
- Figur 3a:: eine perspektivische Ansicht eines Aufsteckbürstengehäuses für ein Aufsteckbürstenteil gemäss Figur 2a-2g von der Vorderseite;
- Figur 3b:: eine perspektivische Ansicht des Aufsteckbürstengehäuses gemäss Figur 3a von der Rückseite;
- Figur 3c:: eine Ansicht des Aufsteckbürstengehäuses gemäss Figur 3a von der Vorderseite;
- Figur 3d:: eine Ansicht des Aufsteckbürstengehäuses gemäss Figur 3a von der Seite;
- Figur 3e:: eine Ansicht des Aufsteckbürstengehäuses gemäss Figur 3a von der Rückseite;
- Figur 3f:: eine Querschnittsansicht des Aufsteckbürstengehäuses gemäss Figur 3a entlang der Ebene A-A in Figur 3c;
- Figur 3g:: eine Querschnittsansicht des Aufsteckbürstengehäuses gemäss Figur 3a entlang der Ebene B-B in Figur 3d;
- Figur 4a:: eine perspektivische Ansicht eines Lagerstifts für ein Aufsteckbürstenteil gemäss Figur 2a-2g;
- Figur 4b:: eine Ansicht des Lagerstifts gemäss Figur 4a von der Seite;
- Figur 5a:: eine perspektivische Ansicht eines Festlegelements für ein Aufsteckbürstenteil gemäss Figur 2a-2g von schräg unten;
- Figur 5b:: eine weitere perspektivische Ansicht des Festlegelementes gemäss Figur 5a von schräg oben;
- Figur 5c:: eine Ansicht des Festlegelementes gemäss Figur 5a von vorne;
- Figur 5d:: eine Ansicht des Festlegelementes gemäss Figur 5a von der Seite;
- Figur 5e:: eine Ansicht des Festlegelementes gemäss Figur 5a von hinten;
- Figur 5f:: eine Frontalansicht des Festlegelementes gemäss Figur 5a von oben;
- Figur 5g:: eine weitere Frontalansicht des Festlegelementes gemäss Figur 5a von unten;
- Figur 6a:: eine perspektivische Ansicht eines Antriebstabes für ein Aufsteckbürstenteil gemäss Figur 2a-2g von schräg unten;
- Figur 6b:: eine perspektivische Ansicht des Antriebstabes gemäss Figur 6a von schräg oben;
- Figur 6c:: eine Frontalansicht des Antriebstabes gemäss Figur 6a von oben;
- Figur 6d:: eine weitere Frontalansicht des Antriebstabes gemäss Figur 6a von unten;
- Figur 6e:: eine Ansicht des Antriebstabes gemäss Figur 6a von vorne;
- Figur 6f:: eine weitere Ansicht des Antriebstabes gemäss Figur 6a von der Seite;
- Figur 6g:: eine weitere Ansicht des Antriebstabes gemäss Figur 6a von hinten;
- Figur 7a:: eine perspektivische Ansicht eines Bürstenkopfs für ein Aufsteckbürstenteil gemäss Figur 2a-2g von schräg hinten;
- Figur 7b:: eine weitere perspektivische Ansicht des Bürstenkopfs gemäss Figur 7a von schräg vorne;
- Figur 7c:: eine Ansicht des Bürstenkopfs gemäss Figur 7a von der Seite;
- Figur 7d:: eine Ansicht des Bürstenkopfs gemäss Figur 7a von vorne;
- Figur 7e:: eine weitere Ansicht des Bürstenkopfs gemäss Figur 7a von hinten;
- Figur 8a:: eine Ansicht des auf das Handteil aufgesteckten Aufsteckbürstenteils gemäss Figur 2a-2g von vorne;
- Figur 8b:: eine Ansicht des Aufsteckbürstenteils gemäss Figur 8a von der Seite;
- Figur 8c:: eine perspektivische Ansicht des Aufsteckbürstenteils gemäss Figur 8a von schräg hinten ohne Aufsteckbürstengehäuse;
- Figur 8d:: eine Querschnittsansicht des Aufsteckbürstenteils gemäss Figur 8a entlang der Ebene A-A;
- Figur 8e:: eine Querschnittsansicht des Aufsteckbürstenteils gemäss Figur 8b entlang der Ebene B-B;
- Figur 8f:: eine Querschnittsansicht des Aufsteckbürstenteils gemäss Figur 8b entlang der Ebene E-E;
- Figur 9:: eine Ansicht eines Bürstenkopfs gemäss Erfindung von vorne;
- Figur 10a:: eine Querschnittsansicht einer ersten Ausführungsvariante eines Bürstenkopfs entlang der Ebene A-A gemäss Figur 9;
- Figur 10b:: eine perspektivische Ansicht des Bürstenkopfs gemäss Figur 10a von schräg hinten;
- Figur 10c:: eine perspektivische Ansicht des Bürstenkopfs gemäss Figur 10a von schräg vorne;
- Figur 10d:: eine Detailansicht B gemäss Figur 10a;
- Figur 11a:: eine Explosionsansicht einer zweiten Ausführungsvariante eines Bürstenkopfs von schräg hinten;
- Figur 11b:: die Explosionsansicht des Bürstenkopfs gemäss Figur 11a von schräg vorne;
- Figur 11c:: eine Querschnittsansicht des Bürstenkopfs gemäss Figur 11a entlang der Ebene A-A gemäss Figur 9;
- Figur 11d:: eine Detailansicht B gemäss Figur 11c;
- Figur 12a:: eine Explosionsansicht einer dritten Ausführungsvariante eines Bürstenkopfs von schräg hinten;
- Figur 12b:: die Explosionsansicht des Bürstenkopfs gemäss Figur 12a von schräg vorne;
- Figur 12c:: eine Querschnittsansicht des Bürstenkopfs gemäss Figur 12a entlang der Ebene A-A gemäss Figur 9;
- Figur 12d:: eine Detailansicht B gemäss Figur 12c;
- Figur 13a:: eine Explosionsansicht einer vierten Ausführungsvariante eines Bürstenkopfs von schräg hinten;
- Figur 13b:: die Explosionsansicht des Bürstenkopfs gemäss Figur 13a von schräg vorne;
- Figur 13c:: eine Querschnittsansicht des Bürstenkopfs gemäss Figur 13a entlang der Ebene A-A gemäss Figur 9;
- Figur 13d:: eine Detailansicht B gemäss Figur 13c;
- Figur 14a:: eine Ansicht einer weiteren Ausführungsform eines Bürstenkopfs gemäss Erfindung von vorne;
- Figur 14b:: eine Querschnittsansicht des Bürstenkopfs entlang der Ebene A-A gemäss Figur 14a;
- Figur 14c:: eine perspektivische Ansicht des Bürstenkopfs gemäss Figur 14a von schräg hinten;
- Figur 14d:: eine perspektivische Ansicht des Bürstenkopfs gemäss Figur 14a von schräg vorne;
- Figur 15a:: eine perspektivische Ansicht einer weiteren Ausführungsform eines Bürstenkopfs gemäss Erfindung von schräg vorne;
- Figur 15b:: eine Ansicht des Bürstenkopfs gemäss Figur 15a von der Seite;
- Figur 15c:: eine Ansicht des Bürstenkopfs gemäss Figur 15a von vorne;
- Figur 16a:: eine perspektivische Ansicht eines Aufsteckbürstengehäuses für ein Aufsteckbürstenteil gemäss Figur 2a-2g von der Vorderseite;
- Figur 16b:: eine perspektivische Ansicht des Aufsteckbürstengehäuses gemäss Figur 16a von der Rückseite;
- Figur 16c:: eine Ansicht des Aufsteckbürstengehäuses gemäss Figur 16a von der Vorderseite;
- Figur 16d:: eine Ansicht des Aufsteckbürstengehäuses gemäss Figur 16a von der Seite;
- Figur 16e:: eine Ansicht des Aufsteckbürstengehäuses gemäss Figur 16a von der Rückseite;
- Figur 16f:: eine Querschnittsansicht des Aufsteckbürstengehäuses gemäss Figur 16a entlang der Ebene A-A in Figur 16c;
- Figur 16g:: eine Querschnittsansicht des Aufsteckbürstengehäuses gemäss Figur 16a entlang der Ebene B-B in Figur 16d;
- Figur 17a:: eine perspektivische Ansicht eines Festlegelements für ein Aufsteckbürstenteil gemäss Figur 2a-2g von schräg unten;
- Figur 17b:: eine weitere perspektivische Ansicht des Festlegelementes gemäss Figur 17a von schräg oben;
- Figur 17c:: eine Ansicht des Festlegelementes gemäss Figur 17a von vorne;
- Figur 17d:: eine Ansicht des Festlegelementes gemäss Figur 17a von der Seite;
- Figur 17e:: eine Ansicht des Festlegelementes gemäss Figur 17a von hinten;
- Figur 17f:: eine Frontalansicht des Festlegelementes gemäss Figur 17a von oben;
- Figur 17g:: eine weitere Frontalansicht des Festlegelementes gemäss Figur 17a von unten;
- Figur 18a:: eine perspektivische Ansicht eines Antriebstabes für ein Aufsteckbürstenteil gemäss Figur 2a-2g von schräg unten;
- Figur 18b:: eine perspektivische Ansicht des Antriebstabes gemäss Figur 18a von schräg oben;
- Figur 18c:: eine Frontalansicht des Antriebstabes gemäss Figur 18a von oben;
- Figur 18d:: eine weitere Frontalansicht des Antriebstabes gemäss Figur 18a von unten;
- Figur 18e:: eine Ansicht des Antriebstabes gemäss Figur 18a von vorne;
- Figur 18f:: eine weitere Ansicht des Antriebstabes gemäss Figur 18a von der Seite;
- Figur 18g:: eine weitere Ansicht des Antriebstabes gemäss Figur 18a von hinten.

Die vorliegende Erfindung ist nicht auf die in den Figuren dargestellten Ausführungsformen beschränkt. Die anhand der Figuren gezeigten Ausführungsformen sind lediglich beispielhaft.

Im Rahmen der Erfindung können die einzelnen Merkmale und die dazugehörigen Funktionen von einzelnen Ausführungsformen mit anderen Ausführungsformen kombiniert werden, sofern technisch sinnvoll, ohne den Rahmen dieser Erfindung zu verlassen. Die gemachten Beschreibungen für spezifische Figuren lassen sich selbstverständlich auch auf andere Figuren übertragen, die gleiche oder ähnliche Ausprägungen zeigen, und in welchen die Ausprägungen nicht im gleichen Detail beschrieben sind.

Grundsätzlich sind in den Figuren gleiche Teile mit gleichen Bezugszeichen versehen.

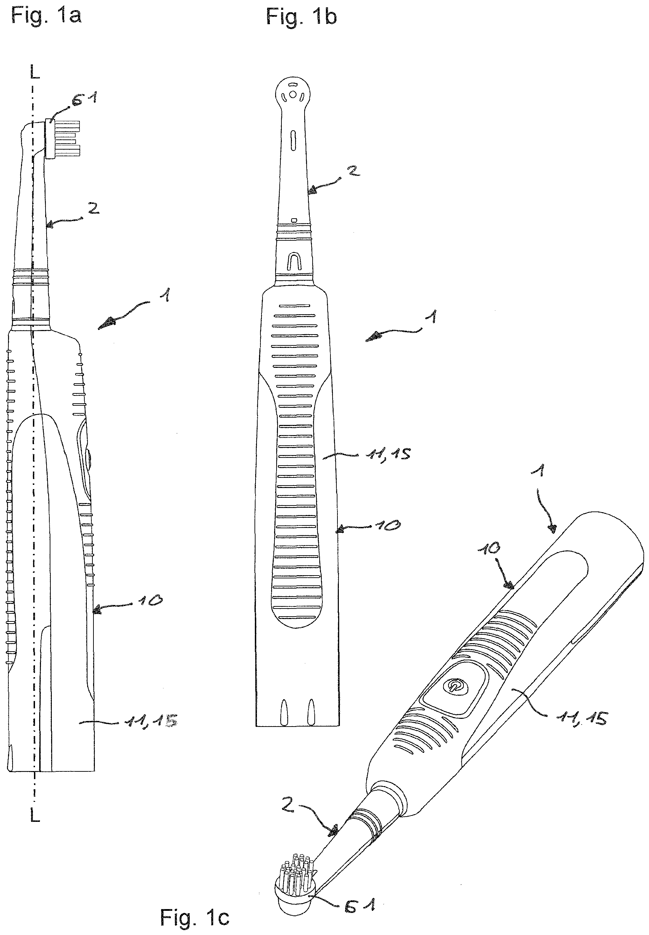

Die **Figuren 1a bis 1c** zeigen eine elektrische Zahnbürste 1 gemäss Erfindung. Diese setzt sich zusammen aus einem Handteil 10 sowie aus einem wieder lösbar auf das Handteil 10 aufsteckbaren Aufsteckbürstenteil 2. Das Aufsteckbürstenteil 2 umfasst unter anderem einen oszillierend drehbar gelagerten Bürstenkopf 61.

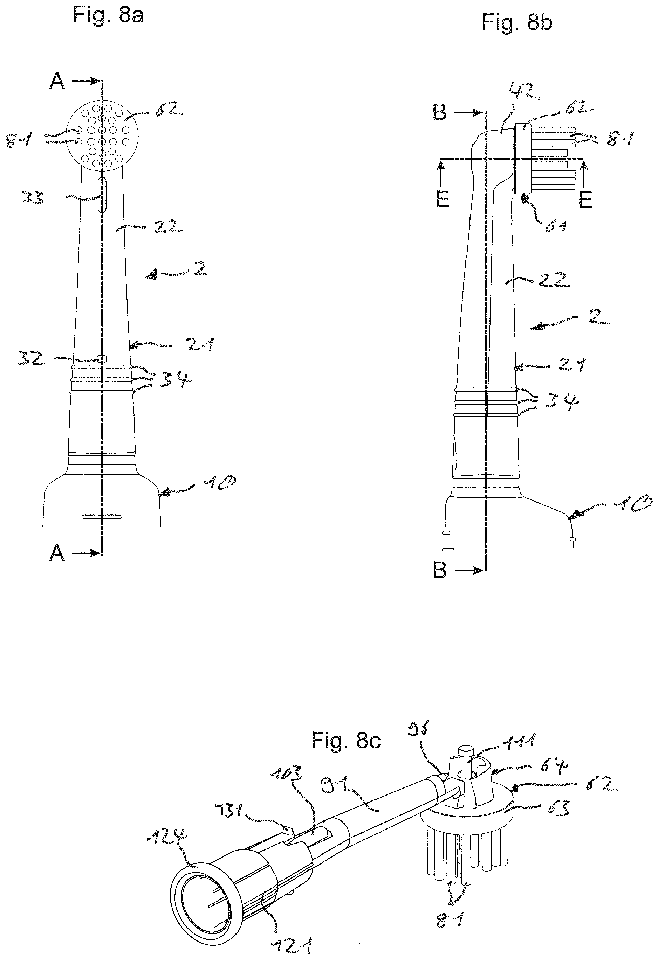

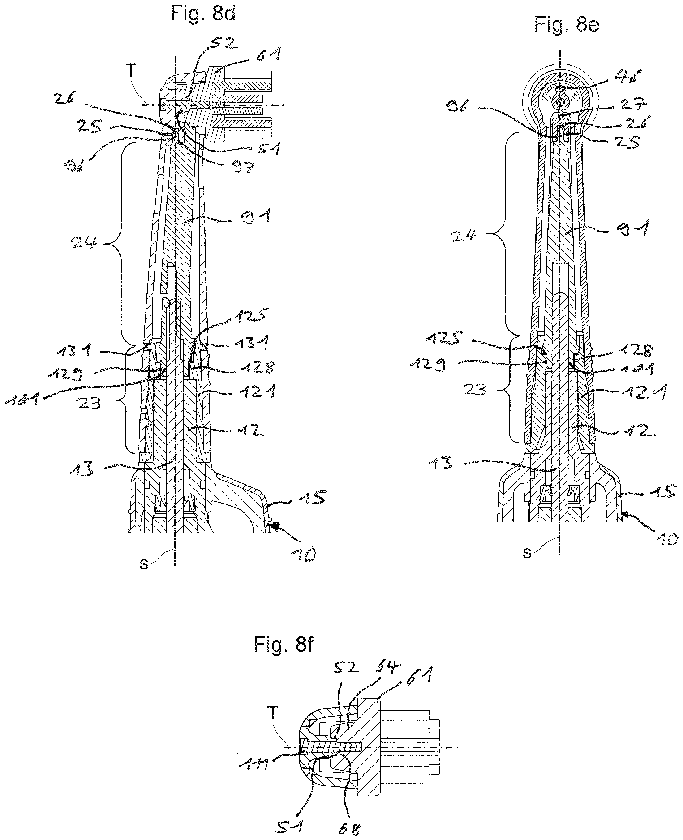

Das Handteil 10 umfasst unter anderem einen Griffkörper 11 mit einem Griffkörpergehäuse 15. In den Figuren 8d und 8e können der Querschnittsansicht im Weiteren noch der Kupplungszapfen 12 sowie der aus dem Kupplungszapfen 12 austretende Steuerstift 13 und das Griffkörpergehäuse 15 entnommen werden.

Die elektrische Zahnbürste 1 weist eine Längsachse L auf.

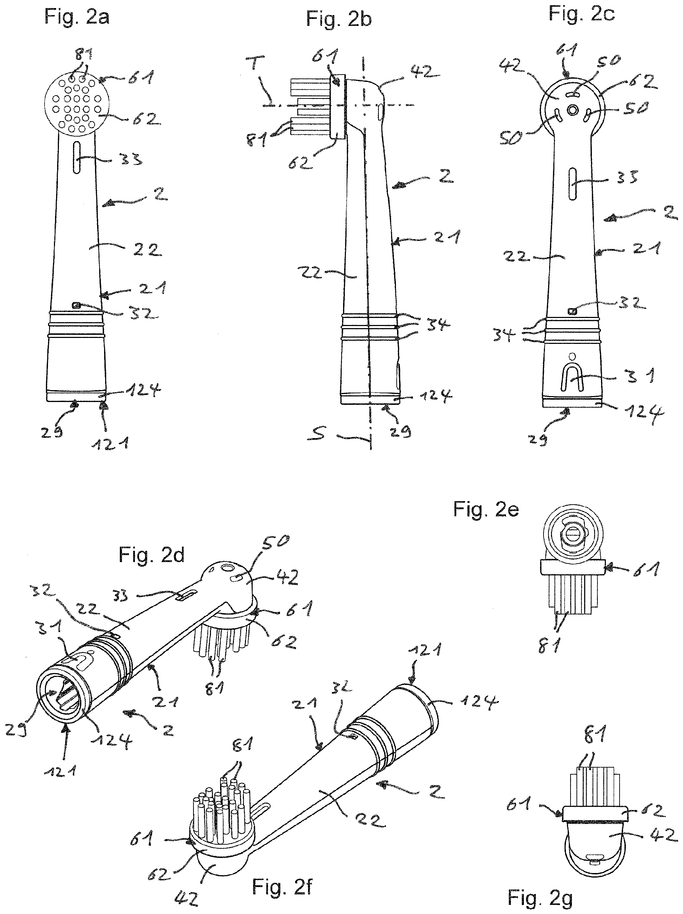

Die **Figuren 2a bis 2g** zeigen ein Aufsteckbürstenteil 2 mit einem oszillierend drehbaren Bürstenkopf 61, wie es in einer elektrischen Zahnbürste 1 gemäss Figur 1a-1c bzw. Figur 8a-8f eingesetzt werden kann.

Das Aufsteckbürstenteil 2 umfasst im Weiteren ein Aufsteckbürstengehäuse 21 mit einem Gehäusekopf 42 und einem Gehäusehals 22. Der Gehäusehals 22 ist konisch ausgebildet und verjüngt sich zum Bürstenkopf 61 hin.

Sowohl im Gehäusehals 22 als auch im Gehäusekopf 42 sind in der Gehäusewand jeweils schlitzartige Durchgangsöffnungen 33, 50 vorgesehen. Diese dienen dem Wasserdurchfluss beim Reinigen des Aufsteckbürstenteils 2.

So ist im Gehäusehals 22 zum Gehäusekopf 42 hin je eine schlitzartige Durchgangsöffnung 33 auf der Vorderseite und auf der Rückseite des Aufsteckbürstenteils 2 vorgesehen.

Im Weiteren sind auf der Rückseite des Gehäusekopfs 42 drei schlitzartige Durchgangsöffnungen 50 angeordnet. Die drei Durchgangsöffnungen 50 sind bogenförmig ausgestaltet und konzentrisch um die Trägerdrehachse T angeordnet.

An der Aussenseite des Gehäusehalses 22 sind drei ringförmige Abzugsrippen 34 angeordnet. Die konzentrisch zur Steuerdrehachse S angeordneten Abzugsrippen 34 bilden eine Griffhilfe aus und geben dem Benutzer den nötigen Halt zum Abziehen des Aufsteckbürstenteils 2 vom Handteil 10.

Im Weiteren ist auf der Rückseite in der Gehäusewand des Gehäusehalses 22 zu einer handteilseitigen Aufnahmeöffnung 29 hin eine federelastische Rastzunge 31 mit einer Rastnase angeordnet. Die Rastzunge 31 ist über einen U-förmigen Schlitz in der Gehäusewand freigelegt. Die Rastzunge 31 dient der axialen Sicherung eines über die handteilseitige Aufnahmeöffnung 29 in den Gehäusehals 22 eingeschobenen Festlegelementes 121.

Der Bürstenkopf 61 bildet ein auf einem Borstenträger 62 angeordnetes, dreiteiliges Borstenfeld mit Pflegeborsten 81 aus. Ein in Neutrallage des Bürstenkopfs 61 oberer und unterer Teil des Borstenfeldes sind in Form eines Kreissegments ausgebildet. Ein mittlerer Teil des Borstenfeldes besteht aus zwei parallelen Reihen von Pflegeborsten 81. Die Pflegeborsten 81 der oberen und unteren Teile des Borstenfeldes überragen die Pflegeborsten 81 des mittleren Teils.

In die handteilseitigen Aufnahmeöffnung 29 des Gehäusehalses 22 ist ein Festlegelement 121 eingeschoben und im Gehäusehals fixiert. Das Festlegelement 121 weist an seinem handteilseitigen Ende einen ringförmigen Einschubbegrenzungsflansch 124 auf. Der Aussenumfang des Einschubbegrenzungsflansches 124 ist im montierten Zustand bündig mit dem anschliessenden Aussenumfang des Gehäusehalses 22, in welchen das Festlegelement 121 eingeschoben ist.

Der Einschubbegrenzungsflansch 124 hat unter anderem die Funktion einer Einschubbegrenzung, welche verhindern soll, dass das Festlegelement 121 zu weit in den Gehäusehals 22 hinein geschoben wird. Die Einschubbegrenzung wird dadurch bewirkt, indem der Einschubbegrenzungsflansch 124 des Festlegelements 121 an der die handteilseitige Aufnahmeöffnung 29 umgebenden Stirnendfläche 28 anschlägt/anliegt.

Das in den Gehäusehalses 22 eingeschobene Festlegelement 121 dient der radialen Festlegung bzw. Ausrichtung des handteilseitigen Endabschnitts des Antriebsstabes 91. Ferner dient das Festlegelement 121 der axialen Festlegung bzw. Fixierung und Positionierung des Antriebsstabes 91 im Gehäusehals 22, damit dieser nicht aus dem Gehäusehals 22 herausfallen kann.

Im Weiteren bildet das Festlegelement 121 einen handteilseitigen Hülsenabschnitt 123 mit einer Zapfenaufnahme 127 aus, welcher die Funktion eines Kupplungsabschnittes zur Aufnahme des Kupplungszapfens 12 des Handteils 10 hat.

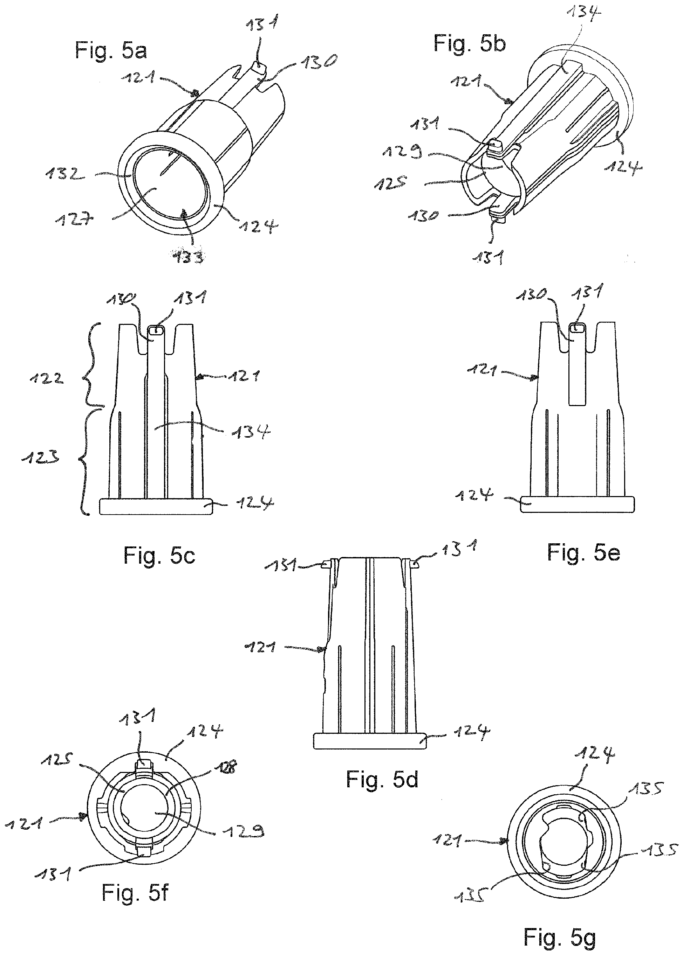

Das Festlegelement wird im Zusammenhang mit den Figuren 5a-5g noch näher beschrieben.

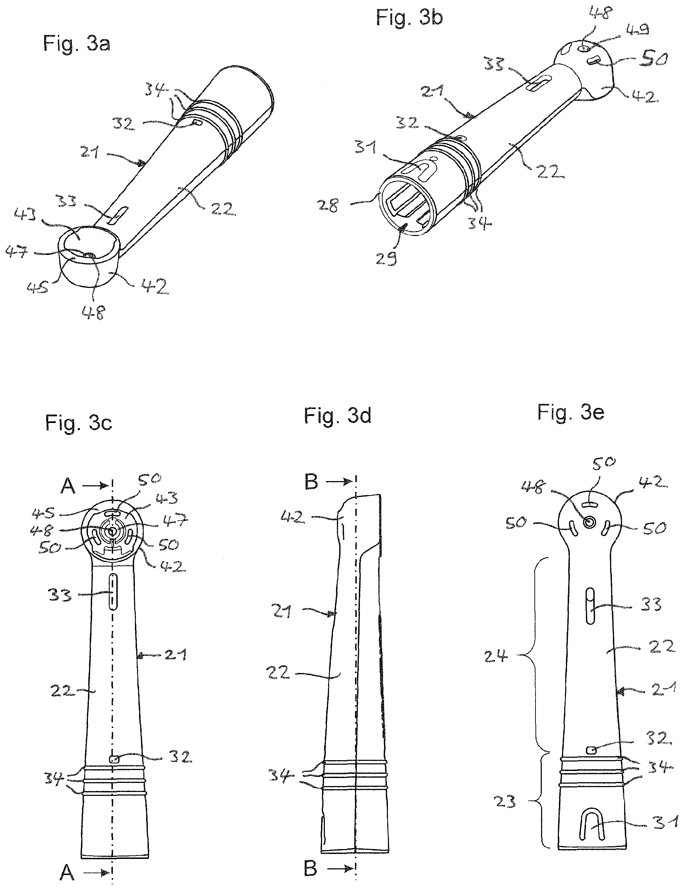

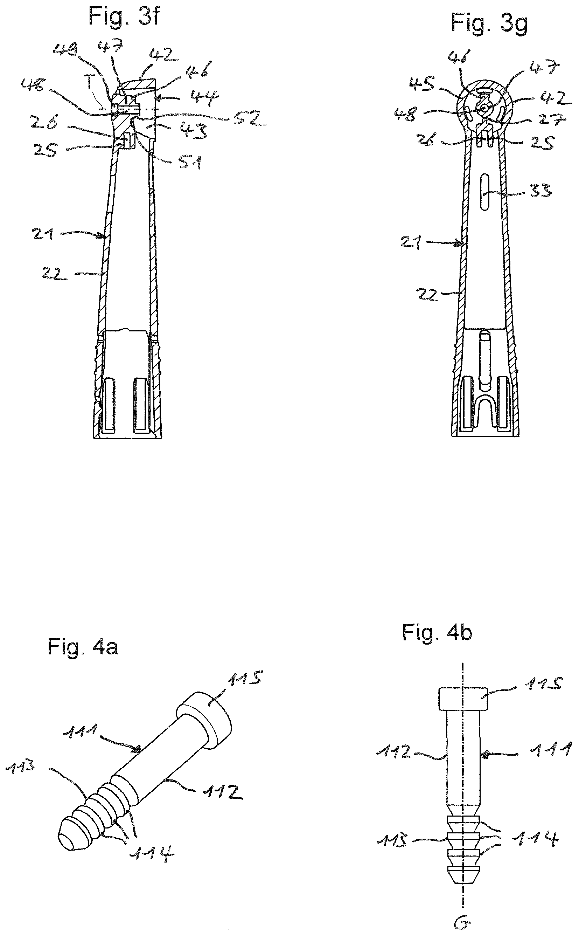

Die **Figuren 3a bis 3g** zeigen ein Aufsteckbürstengehäuse 21 mit einem Gehäusehals 22 und einen bürstenkopfseitig an den Gehäusehals anschliessenden Gehäusekopf 42.

Der Gehäusehals 22 ist ein rohrförmiger Körper mit einer durchgängigen Aufnahme, welche handteilseitig in der Aufnahmeöffnung 29 endet und bürstenkopfseitig in der Borstenträgeraufnahme 43 des Gehäusekopfes 42 mündet.

Der Gehäusehals 22 dient der Aufnahme des Antriebsstabes 91 sowie des Festlegelementes 121 (siehe auch Figuren 8d und 8e).

Der Gehäusehals 22 umfasst einen an die handteilseitige Aufnahmeöffnung 29 in Richtung Bürstenkopf 61 anschliessenden handteilseitigen, ersten Aufnahmeabschnitt 23 zur Aufnahme des Festlegelements 121. Im Weiteren schliesst an den ersten Aufnahmeabschnitt 23 in Richtung Bürstenkopf 61 ein bürstenkopfseitiger, zweiter Aufnahmeabschnitt 24 zur Aufnahme des Antriebsstabes 91 an (siehe auch Figuren 8d und 8e).

Am bürstenkopfseitigen Ende des zweiten Aufnahmeabschnittes 24 ist ein Pinnaufnahmekörper 25 mit einer Pinnaufnahme 26 zur Aufnahme des Lagerpinns 96 eines weiter unten noch beschriebenen Antriebstabes 91 angeordnet. Der Pinnaufnahmekörper 25 ist an der rückseitigen Gehäusewand angeordnet und ragt von dieser in den zweiten Aufnahmeabschnitt 24 hinein. Ferner ragt der Pinnaufnahmekörper 25 mit einem Längsabschnitt in die Borstenträgeraufnahme 43 des Gehäusekopfs 42.

Die Pinnaufnahme 26 ist als Sackloch ausgebildet und weist eine in der Steuerdrehachse S liegende Längsachse auf. Die Pinnaufnahme 26 bildet eine handteilseitige Pinnaufnahmeöffnung aus.

Im Übergang vom ersten zum zweiten Aufnahmeabschnitt 23, 24 sind in der Gehäusewand des Gehäusehalses 22 zwei, einander gegenüber liegende Durchgangsöffnungen 32 angeordnet. Diese dienen der Aufnahme der Rastnasen 131 auf den Rastzungen 130 am Festlegelement 121, welche weiter unten noch näher beschrieben werden (siehe auch Figur 8d).

Des Weiteren sind sowohl im Gehäusehals 22 als auch im Gehäusekopf 42 die bereits zu den Figuren 2a-2g beschriebenen schlitzartigen Durchgangsöffnungen 33, 50 in der Gehäusewand des Aufsteckbürstengehäuses 21 dargestellt, welche dem Wasserdurchfluss zum Reinigen des Aufsteckbürstenteils 2 dienen.

Ferner sind an der Aussenseite des Gehäusehalses 22 die bereits zu den Figuren 2a-2g beschriebenen Abzugsrippen 34 dargestellt.

Der Gehäusekopf 42 bildet eine becherförmige Borstenträgeraufnahme 43 aus, welche zur Vorderseite hin über eine Trägeraufnahmeöffnung 44 offen ist. Die Borstenträgeraufnahme 43 dient dazu, die weiter unten noch beschriebene Funktionseinheit 64 des Borstenträgers 62 aufzunehmen.

Die Trägeraufnahmeöffnung 44 wird von einer umlaufenden Stirnendfläche 45 begrenzt, welche entlang ihres kreisförmigen Aussenumfanges unterschiedliche Breiten aufweist. Die unterschiedlichen Breiten der Stirnendfläche 45 basieren auf unterschiedlichen Wanddicken im Gehäusekopf 42.

In der Borstenträgeraufnahme 43 ist eine Lagerungshülse 47 mit einer Durchführöffnung 48 zum Hindurchführen eines nachfolgend noch beschriebenen Lagerstiftes 111 von der Rückseite des Gehäusekopfs 42 her angeordnet.

Die Lagerungshülse 47 bildet eine zur Vorderseite gerichtete umlaufende, kreisringförmige Anschlagschulter 51 aus, welche einen zylinderförmigen Endabschnitt 52 der Lagerungshülse umschliesst. Die Anschlagschulter 51 liegt mit einer zum Bürstenkopf 61 gerichteten Stirnendfläche des Begrenzungsnockens 46 in einer Ebene.

Der zylinderförmige Endabschnitt 52 der Lagerungshülse 47 greift in eine nachfolgend noch beschriebene Zylinderaufnahme 70 an der Funktionseinheit 64 ein und liegt mit der Stirnendfläche 69 an einer ebenfalls nachfolgend beschriebenen Auflageschulter 68 auf, welche eine Lagerstiftaufnahme 65 umgibt (siehe auch Figur 8f). Auf der Rückseite des Gehäusekopfes ist eine Senkung 49 zur Aufnahme des Stiftkopfs 115 des Lagerstifts 111 vorgesehen.

In der Borstenträgeraufnahme 43 ist ein, querschnittlich trapezförmig ausgebildeter Begrenzungsnocken 46 angeordnet, welcher sich von seinem freien Ende (auf der oberen Seite) zu seiner Basis an der Lagerungshülse 47 hin verjüngt. Der Begrenzungsnocken 46 ist an der Aussenwand der Lagerungshülse 47 angeordnet und ist mit dieser verbunden. Der Begrenzungsnocken 46 ist ausgehend von der Lagerungshülse 47 entlang der Steuerdrehachse S zum äussersten Kopfende hin gerichtet. Der Begrenzungsnocken 46 ist ferner mit der rückseitigen Gehäusewand verbunden.

Zwischen Lagerungshülse 47 und dem bereits erwähnten Pinnaufnahmekörper 25 ist eine Verbindungsrippe 27 angeordnet, welcher die genannten Elemente miteinander verbindet. Die Verbindungsrippe 27 ist ferner mit der rückseitigen Gehäusewand verbunden.

Der Pinnaufnahme 26 des Pinnaufnahmekörpers 25, die Verbindungsrippe 27, die Durchführöffnung 48 der Lagerungshülse 47 und der Begrenzungsnocken 46 sind in einer gemeinsamen Ebene angeordnet, in welcher auch die Steuerdrehachse S liegt.

Der Lagerstift 111 gemäss den **Figuren 4a und 4b** umfasst einen Stiftschaft 112 und einen Stiftkopf 115 mit einem gegenüber dem Stiftschaft 112 grösseren Durchmesser. Der Stiftschaft 112 beinhaltet in einem Endabschnitt einen Verankerungsabschnitt 113 mit einer Mehrzahl von entlang der Lagerstiftachse G angeordneten, kegelförmigen Verankerungselementen 114, welche sich in Richtung des freien Schaftendes jeweils verjüngen.

Die Verankerungselemente 114 dienen der axialen und drehfesten Verankerung des Verankerungsabschnittes 113 in der Lagerstiftaufnahme 65 am Borstenträger 62.

Im montieren Zustand ist der Lagerstift 111 von der Rückseite des Gehäusekopfs 42 her durch die Lagerungshülse 47 beziehungsweise die Durchführöffnung 48 hindurch in die Borstenträgeraufnahme 43 geführt und greift mit seinem Verankerungsabschnitt 113 in die Lagerstiftaufnahme 65 des Borstenträgers 62. Der Stiftkopf 115 ist in der Senkung 49 am Gehäusekopf 42 eingelassen (siehe Figur 8f).

Das Festlegelement 121 gemäss den **Figuren 5a-5g** ist hülsenförmig ausgestaltet und bildet einen durchgängigen Hülsenhohlraum aus.

Das Festlegelement 121 umfasst einen bürstenkopfseitigen, ersten Hülsenabschnitt 122 zur Aufnahme und Abstützung des handteilseitigen Endabschnitts des Antriebsstabs 91.

Der erste Hülsenabschnitt 122 weist eine innen liegende, ringförmige Querschnittsverengung 128 in Form eines Innenringes aus. Die ringförmige Querschnittsverengung 128 bildet eine zum Bürstenkopf 61 weisende, ringförmige Innenanschlagfläche 125 aus. Die Innenanschlagfläche 125 ist senkrecht zur Steuerdrehachse S orientiert. Die ringförmige Querschnittsverengung 128 bildet im Weiteren einen zylinderförmigen Aufnahmeabschnitt 129 zur Aufnahme des weiter unten noch beschriebenen Anschlagzylinders 101 des Antriebsstabes 91 aus.

Der zylinderförmige Aufnahmeabschnitt 129 dient der Vorzentrierung des Antriebstabes 91 über den in diesen eingreifenden Anschlagzylinder 101 des Antriebsstabs 91. Der Durchmesser des zylinderförmigen Aufnahmeabschnitt 129 ist grösser als jener des in diesen eingreifenden Anschlagzylinders 101.

Auf diese Weise ist der Anschlagzylinder 101 mit Spiel im zylinderförmigen Aufnahmeabschnitt 129 geführt, wodurch zwischen den seitlichen Zylinderflächen keine Reibung auftritt.

Die Innenanschlagfläche 125 dient der Lagerung einer den Anschlagzylinder 101 umlaufenden Anschlagschulter 102 am Antriebsstab 91 (siehe Figur 8d und 8e).

In der Hülsenwand des ersten Hülsenabschnitts 122 sind zwei einander gegenüber liegende Rastzungen 130 mit jeweils einer nach aussen gerichteten Rastnase 131 angeordnet. Die in Richtung Bürstenkopf 61 gerichteten Rastzungen 130 sind über schlitzartige Durchbrüche aus der Hülsenwand freigelegt. Die Rastzungen 130 bzw. die Rastnasen 131 dienen der axialen Sicherung des Festlegelements 121 am Gehäusehals 22 indem die genannten Rastnasen 131 in die bereits erwähnten Durchgangsöffnungen 32 am Gehäusehals 22 eingreifen (siehe Figur 8d).

Im Weiteren enthält das Festlegelement 121 einen handteilseitigen, zweiten Hülsenabschnitt 123 mit einer Zapfenaufnahme 127 zur Aufnahme des Kupplungszapfens 12 des Handteils 91. Der zweite Hülsenabschnitt 123 bildet also einen Kupplungsabschnitt aus.

Das Festlegelement 121 dient folglich auch der Verbindung des Aufsteckbürstenteils 2 mit dem Handteil 10. Die Zapfenaufnahme 127 weist eine an die Querschnittsgeometrie des Kupplungszapfens 12 angepasst Innengeometrie auf.

Die Zapfenaufnahme 127 weist im Bereich der Zapfenaufnahmeöffnung 133 eine trichterartige Erweiterung 132 auf, welche als Einführhilfe für den Kupplungszapfen 12 dient.

Die Zapfenaufnahme 127 weist ferner Verdrängungsrippen 135 auf, welche dazu dienen einen gut ausgeprägten Presssitz herzustellen. Die Verdrängungsrippen 135 verlaufen parallel Längsachse L der Körperpflegebürste bzw. zur Aufsteckrichtung. Die Aussenflächen der Hülsenabschnitte 122, 123 sind konisch ausgebildet und verjüngen sich zum Bürstenkopf 61 hin. Dadurch wird die Einführbarkeit des Festlegelementes 121 in den konisch ausgebildeten Gehäusehals 22 gewährleistet.

Im Übergangsbereich vom handteilseitigen zum bürstenseitigen Hülsenabschnitt kann in Richtung bürstenseitigen Hülsenabschnitt eine verstärkte Verjüngung ausgebildet sein, welche in Form einer Stufe oder einer ringförmig umlaufenden Konusfläche ausgeführt ist.

Die Aussenfläche des Festlegelements 121 kann ferner Rippen 134 aufweisen, welche sich über beide Hülsenabschnitte 122, 123 erstrecken. Die Rippen 134 sind im Wesentlichen parallel zur Längsrichtung L der Körperpflegebürste ausgerichtet. Die Rippen können zum bürstenseitigen, ersten Hülsenabschnitt 122 hin in die Rastzungen 130 übergehen.

Im Weiteren weist das Festlegelement 121 an seinem handteilseitigen Ende im Bereich der Zapfenaufnahmeöffnung 133 einen ringförmigen Einschubbegrenzungsflansch 124 auf, welcher bereits weiter oben beschrieben wurde. Der Einschubbegrenzungsflansch 124 stellt, wie bereits erwähnt, sicher, dass das Festlegelement 121 nicht vollständig in den Gehäusehals 22 eingeschoben wird.

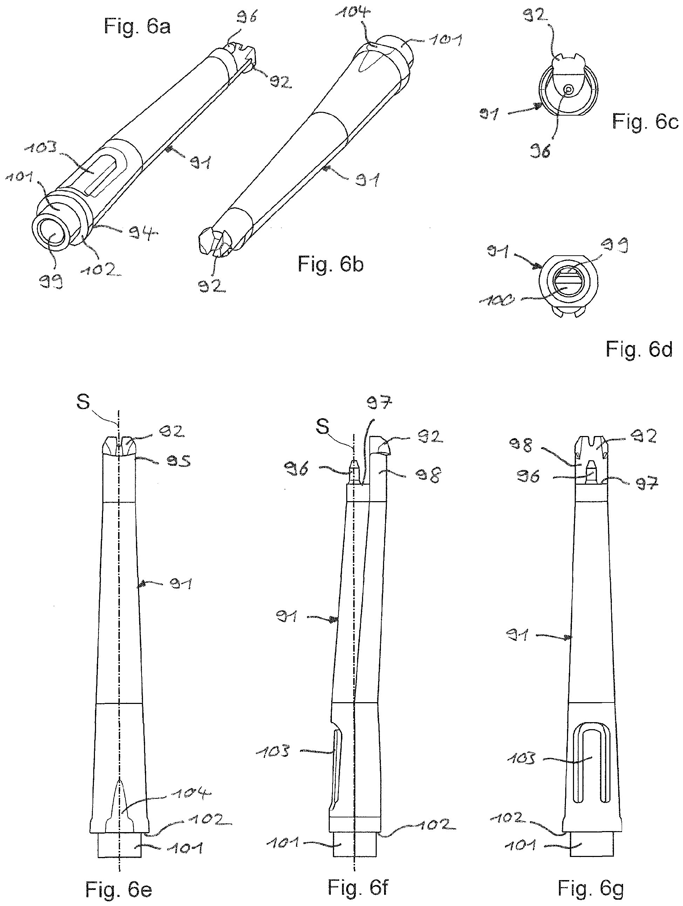

Der Antriebsstab 91 gemäss den **Figuren 6a-6g** weist einen handteilseitigen Endabschnitt 94 sowie einen bürstenkopfseitigen Endabschnitt 95 auf.

Der Antriebsstab 91 bildet am handteilseitigen Endabschnitt 94 eine Steuerstiftaufnahme 99 zur Aufnahme des Endabschnitts des Steuerstiftes 13 aus. Der Antriebsstab 91 ist in diesem Abschnitt rohrförmig ausgebildet. Die Längsachse der Steuerstiftaufnahme 99 liegt auf der Steuerdrehachse S.

Die Steuerstiftaufnahme 99 weist einen kreiszylinderförmigen Basisquerschnitt auf. Im bürstenkopfseitigen Endabschnitt weist die Steuerstiftaufnahme 99 bezogen auf den kreisförmigen Basisquerschnitt eine kreissegmentförmige Querschnittsverengung 100 auf. Diese gewährleistet eine formschlüssige Aufnahme des Steuerstiftes 13 in der Steuerstiftaufnahme 99 und somit eine Drehsicherung (siehe Figur 8d und 8e).

Im Weiteren enthält der Antriebsstab 91 im Bereich der Steuerstiftaufnahme 99 eine in der Wand der Steuerstiftaufnahme 99 angeordnete federelastische Andrückzunge 103. Diese drückt gegen den in die Steuerstiftaufnahme 99 eingeführten Steuerstift 13 und klemmt diesen in der Steuerstiftaufnahme 99.

Die Andrückzunge 103 ist mittels eines schlitzförmigen Durchbruchs aus der Wand der Steuerstiftaufnahme 99 freigelegt.

Im Weiteren weist der Antriebsstab 91 im handteilseitigen Endabschnitt 94 in Verlängerung der Steuerstiftaufnahme 99 einen ringförmigen Anschlagzylinder 101, in Form eines Hohlzylinders auf. Der Anschlagzylinder 101 weist einen geringeren Aussendurchmesser auf als der Aussendurchmesser des daran anschliessenden Aufnahmeabschnitts des Antriebsstabes 91 mit der Steuerstiftaufnahme 99. Entsprechend wird im Übergang vom Aufnahmeabschnitt zum Anschlagzylinder 101 eine umlaufende Anschlagschulter 102 ausgebildet.

Die Funktion des Anschlagzylinders 101 und der dazugehörigen Anschlagschulter 102 wurde bereits im Zusammenhang mit der Beschreibung des Festlegelementes 121 erörtert.

Zur Übertragung einer vom Steuerstift 13 in den Antriebsstab 91 eingebrachten oszillierende Drehbewegung vom Antriebsstab 91 auf den Bürstenkopf 61 enthält der Antriebsstab 91 an seinem bürstenkopfseitigen Endabschnitt eine erste Zahnung 92 mit zwei Zähnen 92.1 für den Eingriff in eine zweite Zahnung 66 am Borstenträger 62 des Bürstenkopfs 61, welcher weiter unten beschrieben wird.

Die erste Zahnung 92, welche zur Vorderseite gerichtet ist, bildet mit der zweiten Zahnung 66 des Borstenträgers 62 hierzu eine Antriebsverzahnung aus.

Die Stirnendflächen der zwei Zähne 92.1 der ersten Zahnung 92, über welche der Eingriff mit den Zähnen 66.1 der zweiten Zahnung 66 erfolgt, weisen gegenüber der Steuerdrehachse S eine Neigung auf.

Der Antriebsstab 91 bildet an seinem bürstenkopfseitigen Endabschnitt 95 im Weiteren einen Lagerpinn 96 aus, dessen Längsachse in der Steuerdrehachse S verläuft. Der Lagerpinn 96 ist im montierten Zustand, wie bereits erwähnt, in der Pinnaufnahme 26 des Aufsteckbürstengehäuses 21 drehbar gelagert (siehe Figur 8d und 8e).

Der Antriebsstab 91 ist folglich mit seinem bürstenkopfseitigen Endabschnitt 95 über den Lagerpinn 96 am Aufsteckbürstengehäuse 21 und mit seinem handteilseitigen Endabschnitt 94 über den Anschlagzylinder 101 mit Anschlagschulter 102 am Festlegelement 121 drehbar gelagert und sowohl axial als auch radial gesichert (siehe Figur 8c sowie Figur 8d und 8e).

Der Antriebsstab 91 bildet nun in einem bürstenkopfseitigen Endabschnitt 95 eine Querschnittsaussparung aus, welche zum handteilseitigen Endabschnitt hin durch eine Lagerpinnschulter 97 begrenzt wird. der Lagerpinn 96 ist nun auf dieser Lagerpinnschulter 97 angeordnet.

Die oben genannte erste Zahnung 92 ist am bürstenkopfseitigen Ende eines sich ausgehend von der Lagerpinnschulter 97 in Richtung bürstenkopfseitiges Ende erstreckenden Stabfortsatzes 98 angeordnet. Der Stabfortsatz 98 verläuft parallel zum Lagerpinn 96. Zwischen Stabfortsatz 98 und Lagerpinn 96 ist eine Aussparung vorgesehen.

Der Lagerpinn 96 umfasst eine kegelförmige Basis, über welche dieser mit der Lagerpinnschulter 97 verbunden ist.

An die kegelförmige Basis schliesst ein zylindrischer Mittelabschnitt sowie ein kegelartig zulaufender, freier Endabschnitt an (siehe insbesondere Figur 6f und 6g).

Der Lagerpinn 96 ist von der Vorderseite betrachtet hinter der ersten Zahnung 92 angeordnet.

Der Antriebsstab 91 weist im Weiteren eine Krümmung auf (siehe Figur 6f). So verläuft ein erster handteilseitiger Längsabschnitt des Antriebsstabes 91, umfassend den handteilseitigen Endabschnitt 94, parallel zur Steuerdrehachse S, während ein zweiter bürstenkopfseitiger Längsabschnitt gegenüber der Steuerdrehachse S zur Vorderseite hin geneigt ist.

Ein bürstenkopfseitiger Endabschnitt 95 verläuft allerdings gegenüber der Steuerdrehachse S wieder parallel. Das heisst, der gekrümmte Abschnitt ist zwischen dem handteilseitigen Längsabschnitt des Antriebsstabes 91, umfassend den handteilseitigen Endabschnitt 94 und dem bürstenkopfseitigen Endabschnitt 95 angeordnet.

Der Antriebsstab 91 weist auf seiner Vorderseite im Bereich der Steuerstiftaufnahme 99 im Weiteren eine Abflachung 104 am Aussenumfang auf. Die Abflachung 104 dient als Montagehilfe und erleichtert die korrekte Ausrichtung bzw. Positionierung des Antriebsstabes 91 bezüglich seiner Drehlage vor der Montage.

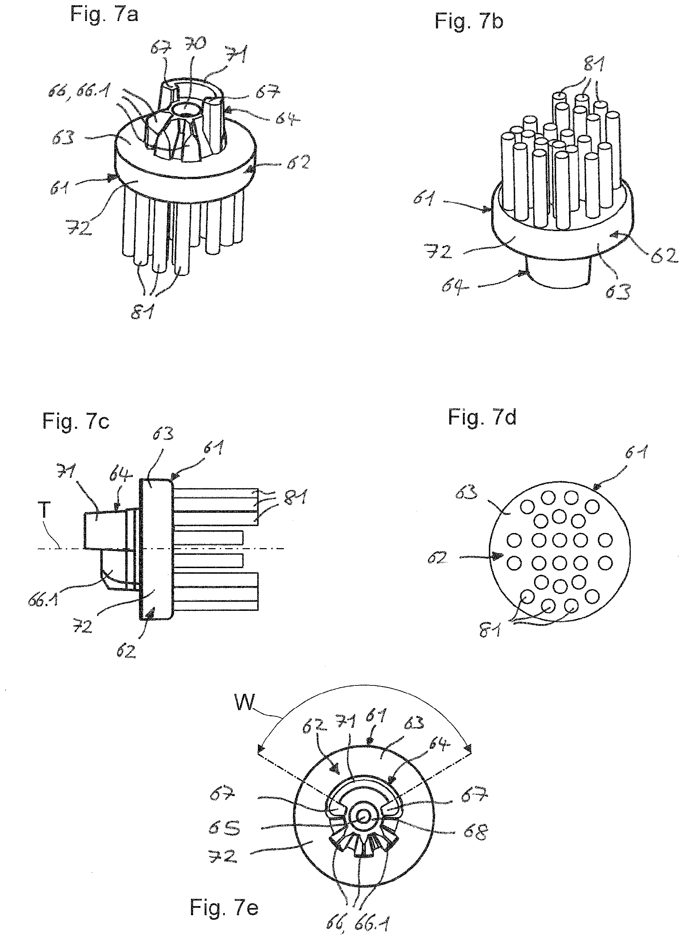

Der Bürstenkopf 61 gemäss den **Figuren 7a-7e** umfasst einen Borstenträger 62 sowie auf der Vorderseite des Borstenträgers 62 angeordnete Pflegeborsten 81.

Der Borstenträger 62 wiederum umfasst einen Trägerkörper 72 sowie eine auf der Rückseite des Trägerkörpers 72 angeordnete Funktionseinheit 64.

Der Trägerkörper 72 beinhaltet einen Borstenverankerungskörper 63, an welchem die Pflegeborsten 81 verankert bzw. befestigt sind.

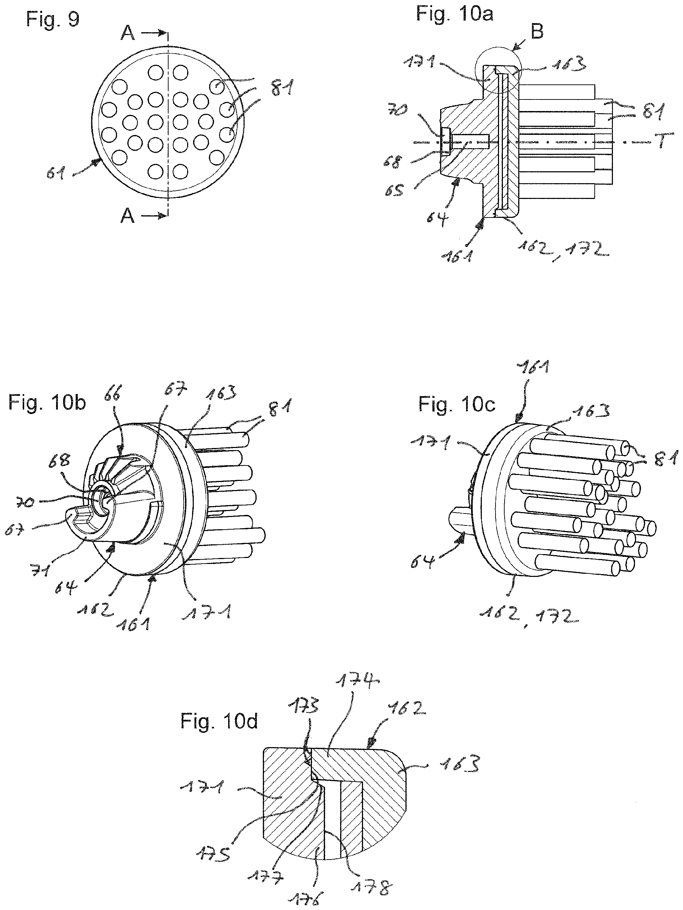

Die Pflegeborsten 81 können auf unterschiedliche Weise im Borstenverankerungskörper 63 verankert sein. Entsprechend kann auch der Trägerkörper 72 unterschiedlich aufgebaut sein. Besondere Ausführungsformen von Trägerkörpern 72 mit Borstenverankerungskörper 63 sowie auf diesem verankerten Pflegeborsten 81 oder Funktionselementen werden weiter unten anhand der Figuren 10 bis 15 näher beschrieben.

Die Funktionseinheit 64 umfasst unter anderem die zweite Zahnung 66. Die zweite Zahnung 66 besteht aus drei Zähnen 66.1, welche auf der Rückseite des Borstenverankerungskörpers 63 angeordnet sind. Die Zähne 66.1 sind ausgehend von der Trägerdrehachse T strahlenförmig bzw. radial verlaufend angeordnet.

Die Stirnendflächen der zweiten Zähne 66.1, über welche der Eingriff der ersten Zähne 92.1 erfolgt, weisen gegenüber der Trägerdrehachse T eine Neigung auf.

Die Funktionseinheit 64 enthält im Weiteren eine Drehwinkelbeschränkungseinrichtung für den Bürstenkopf mit zwei seitlichen Anschläge 67 für den bereits weiter oben beschriebenen Begrenzungsnocken 46. Die seitlichen Anschläge 67 sind oberhalb von der zweiten Zahnung 66 angeordnet.

Im montierten Zustand des Bürstenkopfs 61 ist der Begrenzungsnocken 46 zwischen den beiden seitlichen Anschlägen 67 angeordnet. Der Borstenträger 62 ist nun lediglich um einen definierten Drehwinkel W drehbar, welcher durch das Anschlagen der seitlichen Anschläge 67 am Begrenzungsnocken 46 definiert wird. In der Neutrallage liegt der Begrenzungsnocken 46 exakt zwischen den beiden seitlichen Anschlägen 67.

Die seitlichen Anschläge 67 sind über eine kreisbogenförmige Führungswand 71 miteinander verbunden. Die Führungswand 71 ist konzentrisch zur Trägerdrehachse T bzw. zur Lagerstiftaufnahme 65 angeordnet.

Die seitlichen Anschläge 67 und die kreisbogenförmige Führungswand 71 überragen die zweite Zahnung 66 entlang der Trägerdrehachse T.

Die Funktionseinheit 64 umfasst im Weiteren eine zur Rückseite hin offene Lagerstiftaufnahme 65 zur Aufnahme des Verankerungsabschnitts 113 des bereits weiter oben beschriebenen Lagerstifts 111. Die Lagerstiftaufnahme 65 ist als Sackloch ausgebildet. Das heisst, die Lagerstiftaufnahme 65 ist zur Vorderseite des Trägerkörpers 72 nicht offen, sondern endet vielmehr im Borstenverankerungskörper 63.

Die seitlichen Anschläge 67 sind in der Neutrallage des Borstenträgers 62 seitlich von der Lagerstiftaufnahme 65 angeordnet (in Bezug auf die Längsachse L). Die Längsachse der Lagerstiftaufnahme 65 liegt in der Trägerdrehachse T.

Die Funktionseinheit 64 bildet im Weiteren eine ringförmige Auflageschulter 68 aus, welche die Öffnung Lagerstiftaufnahme 65 umgibt. Die ringförmige Auflageschulter 68 wird durch eine ringförmige Wand begrenzt, welche eine Zylinderaufnahme 70 ausbildet. Die ringförmige Auflageschulter 68 dient der Auflage des Borstenträgers 62 an der Lagerungshülse 47 des Gehäusekopfs 42.

Der Borstenträger 62 liegt hierzu über die Auflagefläche der Auflageschulter 68 der Stirnendfläche des zylinderförmigen Endabschnittes 52 der Lagerungshülse 47 an. Die Zylinderaufnahme 70 mit der ringförmigen Wand übergreift im montierten Zustand den zylinderförmigen Endabschnittes 52 der Lagerungshülse 47 und sorgt so für eine ausreichende Zentrierung des Borstenträgers 62 am Gehäusekopf 42 vor der Montage des Lagerstifts 111 (siehe Figuren 8f).

Die erfindungsgemässe Konstruktion weist den Vorteil auf, dass Anpresskräfte, welche auf den Bürstenkopf 61 wirken, über die ringförmige Auflageschulter 68 in die Lagerungshülse 47 und auf diese Weise in den Gehäusekopf 42 eingeleitet werden.

Die Figuren 10 bis 13 zeigen verschiedene Ausführungsvarianten von Bürstenköpfen 161, 261, 361, bei welchen die Beborstung jeweils mittels des so genannten AFT-Verfahrens erfolgt ist. Das AFT-Verfahren wurde bereits im allgemeinen Beschreibungsteil ausführlich beschrieben und wird daher an dieser Stelle nicht mehr beschrieben.

Da die Vorderansicht eines Bürstenkopfs für sämtliche der in den Figuren vorliegender Patentanmeldung dargestellten Ausführungsbeispiele von Bürstenköpfen dieselbe ist, wird hinsichtlich des Verweises auf die Querschnittsansicht entlang der Ebene A-A in Figur 9 darauf verzichtet, für jede Ausführungsform eine separate Vorderansicht eines Bürstenkopfs darzustellen.

Es wird diesbezüglich vielmehr auf die Figur 9 verwiesen, welche eine Vorderansicht eines Bürstenkopfes 61 zeigt, wie sie für sämtliche der in den Figuren der vorliegenden Patentanmeldung dargestellten Ausführungsbeispielen von Bürstenköpfen zutrifft.

Da die Funktionseinheit 64 der Ausführungsvarianten gemäss den Figur 10-13 jeweils identisch ausgebildet ist, und diese der Funktionseinheit 64 gemäss dem Ausführungsbeispiel nach Figur 7a-7e entspricht, wird die Funktionseinheit 64 an dieser Stelle nicht mehr beschrieben. Es wird vielmehr auf die Beschreibung zu den Figuren 7a-7e verwiesen.

Die genannten Ausführungsvarianten nach Figur 10-13 umfassen jeweils einen Trägerkörper 172, 272, 372, welcher sich aus einem Basiselement 171, 271, 371 und einem auf dieses aufgesetzten und mit dem Basiselement 171, 271, 371 verbundenen Borstenverankerungskörper 163, 263, 363 zusammensetzt.

Der Borstenverankerungskörper 163, 263, 363 weist auf seiner, der Vorderseite gegenüber liegenden Borstenverankerungsseite einen umlaufenden, in Richtung Basiselement 171, 271, 371 vorstehenden Verbindungsrand 174, 274, 374 auf, welcher entsprechend eine Vertiefung einfasst. In der Vertiefung sind die am Borstenverankerungskörper 163, 263, 363 verankerten Borstenenden angeordnet. Der Borstenverankerungskörper 163, 263, 363 bildet einen U-förmigen Querschnitt aus.

Auf der Rückseite des erwähnten Basiselementes 171, 271, 371 ist die bereits genannten Funktionseinheit 64 angeordnet.

Das Basiselement 171, 271, 371 weist seinerseits einen umlaufenden Rand 175, 275, 375 auf, welcher eine Verbindungskontaktfläche zum vorstehenden Verbindungsrand 174, 274, 374 des Borstenverankerungskörpers 163, 263, 363 ausbildet.

Gemäss der Ausführungsvariante nach **Figur 10a-10d** ist die Verbindungskontaktfläche des umlaufende Randes 175 des Basiselements 171 eben ausgebildet und senkrecht zur Trägerdrehachse T angeordnet.

Der umlaufende, vorstehende Verbindungsrand 174 am Borstenverankerungskörper 163 bildet eine ebene Stirnendfläche aus, welche ebenfalls senkrecht zur Trägerdrehachse T angeordnet ist. Der Borstenverankerungskörper 163 ist nun über die der Verbindungkontaktfläche aufliegende Stirnendfläche des vorstehenden Verbindungsrandes 174 mit dem Basiselement 171 verbunden.

Die Verbindung zwischen der Stirnendfläche und der Verbindungskontaktfläche erfolgt mittels (Kunststoff-)Schweissen, wie Ultraschall-Schweissen.

Hierzu sind auf der Stirnendfläche Aufschmelzelemente 173 angeordnet. Die Aufschmelzelemente 173 stehen der Stirnendfläche vor und werden beim Schweissen aufgeschmolzen. Auf diese Weise liefern die Aufschmelzelemente 173 zusätzliches Kunststoffmaterial zur Herstellung der Schweissverbindung. Die Aufschmelzelemente 173, 273, 373 sind schematisch dargestellt, damit diese auch im verschmolzenen Zustand sichtbar sind.

Der umlaufende Rand 175 des Basiselements 171 fasst einen zum Borstenverankerungskörper 163 hin gerichteten, kegelstumpfförmigen Körper 176 ein. Dieser zeichnet sich durch eine, ausgehend vom umlaufenden Rand 175 zum Zentrum hin geneigte Flanke 177 sowie eine gegenüber dem umlaufenden Rand 175 erhöhte, und von der geneigten Flanke 177 eingeschlossene ebene Fläche 178 auf. Der kegelstumpfförmige Körper 176 dient der Zentrierung des Borstenverankerungskörpers 163 auf dem Basiselement 171.

Der Borstenverankerungskörper 163 liegt dem Basiselement 171 lediglich über die Stirnendfläche des vorstehenden Verbindungsrandes 174 am umlaufenden Rand 175 auf. Innerhalb des umlaufenden Randes 175 wird zwischen dem Basiselement 171 und Borstenverankerungskörper 163 ein Hohlraum ausgebildet.

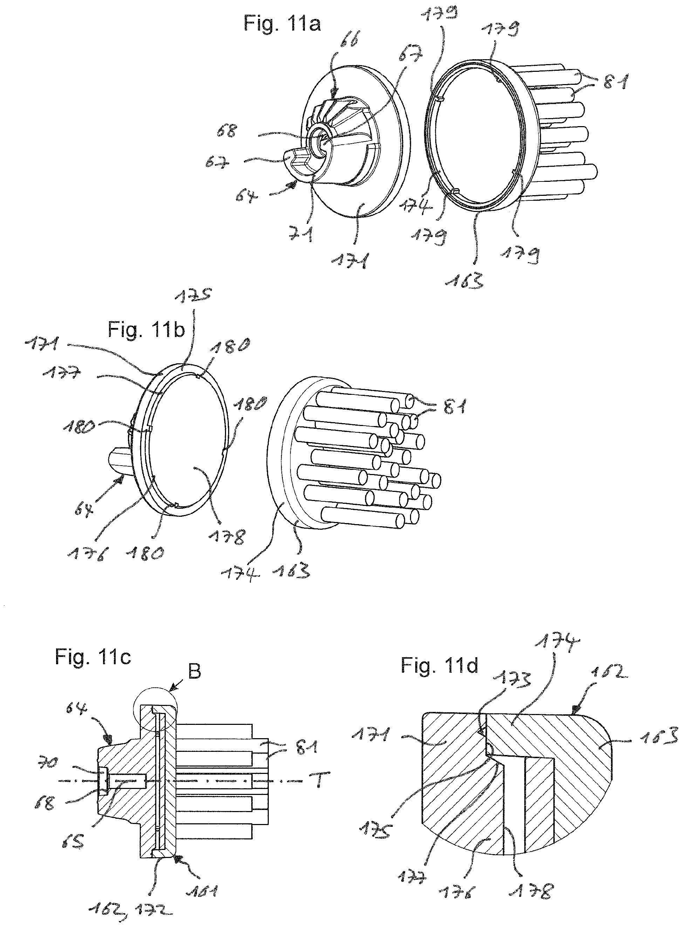

Gemäss einer Weiterbildung der Ausführungsvariante nach Figur 10a-10c sind am Borstenverankerungskörper 163 und Basiselement 171 so genannte Positionierungshilfen 179, 180 angeordnet, welche erlauben den Borstenverankerungskörper 163 in einer definierten Winkellage um die Trägerdrehachse T auf dem Basiselement 171 zu positionieren (siehe **Figuren 11a-11d**).

Die Positionierungshilfen sind aufeinander abgestimmte Paarungen von Positionierrippen 179 und Positionierkerben 180, welche beim Aufbringen des Borstenverankerungskörpers 163 auf das Basiselement 171 in der richtigen Winkellage formschlüssig ineinandergreifen.

So sind eine Mehrzahl von Positionierrippen 179 entlang des Innenumfangs des vorstehenden Verbindungsrandes 174. d. h. auf seiner Innenseite, am Borstenverankerungskörper 163 sowie eine Mehrzahl von Positionierkerben 180 entlang des Aussenumfangs des kegelstumpfförmigen Körpers 176 in seiner geneigten Flanke am Basiselement 171 angeordnet.

Die beschriebenen Positionierungshilfen 179, 180 haben die Eigenschaft, dass die Stirnendfläche des vorstehenden Verbindungsrandes 174 des Borstenverankerungskörpers 163 und die Verbindungskontaktfläche des umlaufenden Randes 175 des Basiselements 171 zwecks Herstellung der Verbindung erst in der richtigen Winkellage, das heisst, wenn die Positionierungshilfen 179, 180 ineinandergreifen, aufeinander treffen.

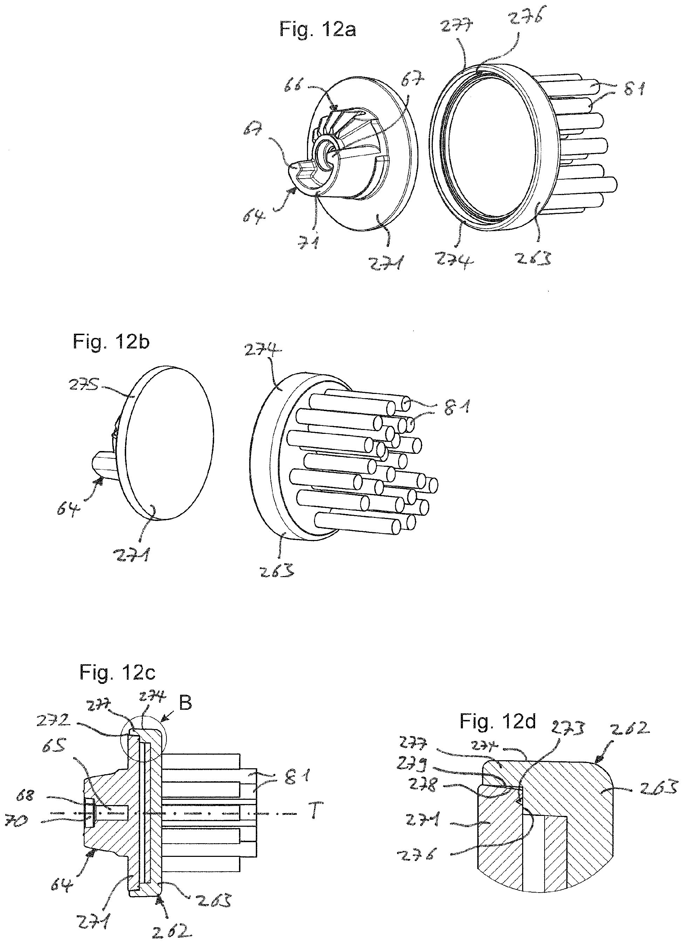

Gemäss der Ausführungsvariante nach **Figur 12a-12d** ist die Verbindungskontaktfläche des umlaufende Randes 275 des Basiselements 271 ebenfalls eben ausgebildet und senkrecht zur Trägerdrehachse T angeordnet.

Im Gegensatz zur Ausführungsvariante nach Figur 10a-10d weist der umlaufende, vorstehende Verbindungsrand 274 am Borstenverankerungskörper 263 eine zur Trägerdrehachse T gerichtete, umlaufende Stufe auf, welche ausgehend von einer Stirnendfläche eine entlang der Trägerdrehachse T nach innen zurückversetzten Auflageschulter 276 mit einer Schulterfläche ausbildet. Die Schulterfläche ist eben ausgebildet und senkrecht zur Trägerdrehachse T angeordnet.

Das Basiselement 271 weist seinerseits einen umlaufenden Rand 275 auf, welcher eine Verbindungskontaktfläche für die Schulterfläche am vorstehenden Verbindungsrand 274 des Borstenverankerungskörpers 263 ausbildet, die senkrecht zur Trägerdrehachse T angeordnet ist. Der Borstenverankerungskörper 263 ist nun über die an der Verbindungskontaktfläche des umlaufenden Randes 275 aufliegende Schulterfläche der Auflageschulter 276 mit dem Basiselement 271 verbunden.

Der Borstenverankerungskörper 263 liegt dem Basiselement 271 lediglich über die Schulterfläche der Auflageschulter 276 am vorstehenden Verbindungsrand 274 über den umlaufenden Rand 275 auf. Innerhalb des umlaufenden Randes 275 wird zwischen dem Basiselement 271 und Borstenverankerungskörper 263 ein Hohlraum ausgebildet.

Die Verbindung zwischen der Schulterfläche und der Verbindungskontaktfläche erfolgt mittels (Kunststoff-)Schweissen, wie Ultraschall-Schweissen.

Hierzu sind auf der Schulterfläche der Auflageschulter 276 Aufschmelzelemente 273 angeordnet. Die Aufschmelzelemente 273 stehen der Schulterfläche vor und werden beim Schweissen aufgeschmolzen. Auf diese Weise liefern die Aufschmelzelemente 273 zusätzliches Kunststoffmaterial zur Herstellung der Schweissverbindung.

Im Weiteren übergreift der Borstenverankerungskörper 263 mit einem umlaufenden, äusseren Verbindungsrandabschnitt 277, welcher endseitig von einer Stirnendfläche und trägerseitig von der Auflageschulter 276 begrenzt wird, aussenseitig die Verbindungskontaktfläche des Basiselements 271. Der Borstenverankerungskörper 263 überlappt mit seinem äusseren Verbindungsrandabschnitt 277 mit einer Umfangsfläche 279 des Basiselements 271.

Der äussere Verbindungsrandabschnitt 277 dient der Zentrierung des Borstenverankerungskörpers 263 auf dem Basiselement 271, indem dieser eine zur Umfangsfläche 279 des Basiselements 217 zugewandte Zentrierfläche 278 ausbildet, welche parallel zur Trägerdrehachse T ausgerichtet ist.

Die Umfangsfläche 279 des Basiselements 271, welche dem äusseren Verbindungsrandabschnitt 277 des Borstenverankerungskörpers 263 bzw. dessen Zentrierfläche 278 gegenüber liegt, ist in Richtung Borstenverankerungskörper 263 konisch verjüngend ausgebildet.

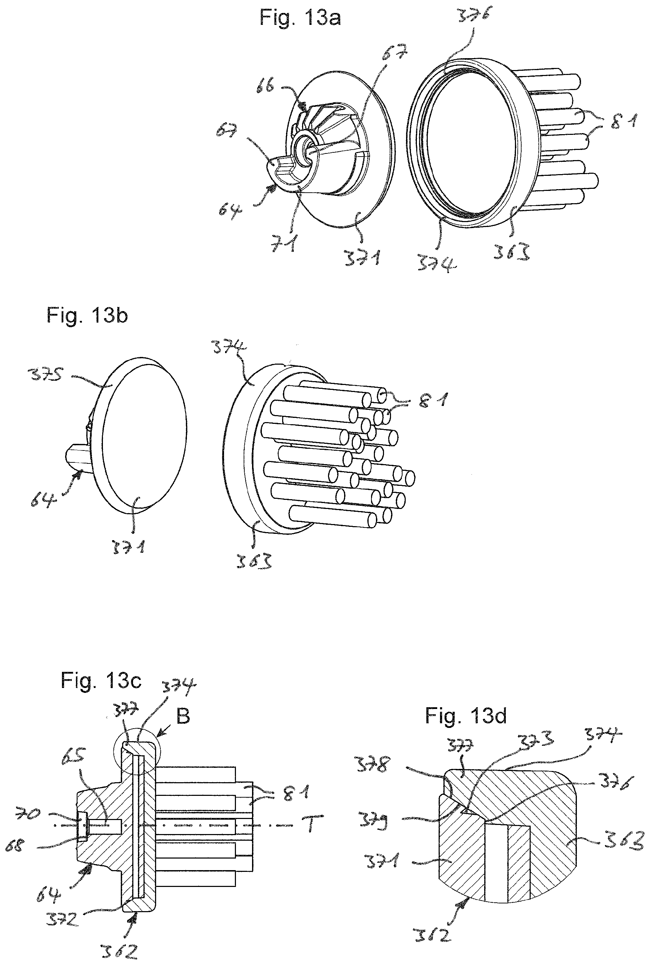

Gemäss der Ausführungsvariante nach Figur **13a-13d****,** welche einer Abwandlung der Ausführungsvariante nach Figur 12a-12d entspricht, ist die Umfangsfläche am Basiselement 371, welche dem äusseren Verbindungsrandabschnitt 377 des Borstenverankerungskörpers 363 bzw. dessen Zentrierfläche 378 gegenüber liegt, in Richtung Borstenverankerungskörper 363 ebenfalls konisch verjüngend ausgebildet, wobei die Umfangsfläche 379 des Basiselementes 371 eine Verbindungskontaktfläche ausbildet.

Die Zentrierfläche 378 des äusseren Verbindungsrandabschnitts 377 weist ebenfalls eine Neigung auf, welche mit der Neigung der Umfangsfläche 379 am Basiselement 371 korrespondiert. Auf diese Weise wird beim Anbringen des Borstenverankerungskörpers 363 auf dem Basiselement 371 eine flächige Verbindung zwischen Zentrierfläche 378 und Umfangsfläche 379 ausgebildet.

Die Verbindung zwischen der Zentrierfläche 378 und Umfangsfläche 379 erfolgt auch hier mittels (Kunststoff-)Schweissen, wie Ultraschall-Schweissen. In der Umfangsfläche 379 sind hierzu die bereits weiter oben beschriebenen Aufschmelzelemente 373 angeordnet.

Analog zur Ausführungsvariante nach Figur 12a-12c weist der umlaufende, vorstehende Verbindungsrand 374 am Borstenverankerungskörper 363 eine zur Trägerdrehachse T gerichtete, umlaufende Stufe auf, welche ausgehend von einer Stirnendfläche eine entlang der Trägerdrehachse T nach innen zurückversetzten Auflageschulter 376 mit einer Schulterfläche ausbildet. Die Schulterfläche ist eben ausgebildet und senkrecht zur Trägerdrehachse T angeordnet. Im Gegensatz zur Ausführungsvariante nach Figur 12a-12c ist die Auflageschulter 376 hier allerdings wesentlich schmäler ausgebildet.

Das Basiselement 371 weist seinerseits einen, an die Umfangsfläche anschliessenden, umlaufenden Rand 375 auf, welcher eine Verbindungskontaktfläche für die Schulterfläche an der Auflageschulter 376 am vorstehenden Verbindungsrand 374 des Borstenverankerungskörpers 263 ausbildet. Diese ist senkrecht zur Trägerdrehachse T angeordnet.

Der Borstenverankerungskörper 363 ist nun über die der Verbindungskontaktfläche aufliegende Schulterfläche der Auflageschulter zusätzlich mit dem Basiselement 371 verbunden. Die Verbindung entspricht einer oben genannten Schweissverbindung.

Innerhalb des umlaufenden Randes 375 des Basiselements 371 wird zwischen dem Basiselement 371 und dem Borstenverankerungskörper 363 ebenfalls ein Hohlraum ausgebildet.

Auch die oben beschriebene zweite Variante und deren Abwandlung können Positionierhilfen zum Festlegen einer definierten Winkellage des Borstenverankerungskörpers aufweisen.

Selbstverständlich ist es bei allen Lösungen gemäss den Figuren 10 bis 13 möglich, die Zentrierung mehrstufig auszuführen. Das heisst, dass beispielsweise mehrere kegelstumpfförmige Körper nacheinander mit verschiedenen Durchmessern und Höhen realisiert werden können, oder dass zusätzlich zu einer Zentrierungsart noch eine Zentrierung über einen kegelstumpfförmigen Körper erfolgen kann.

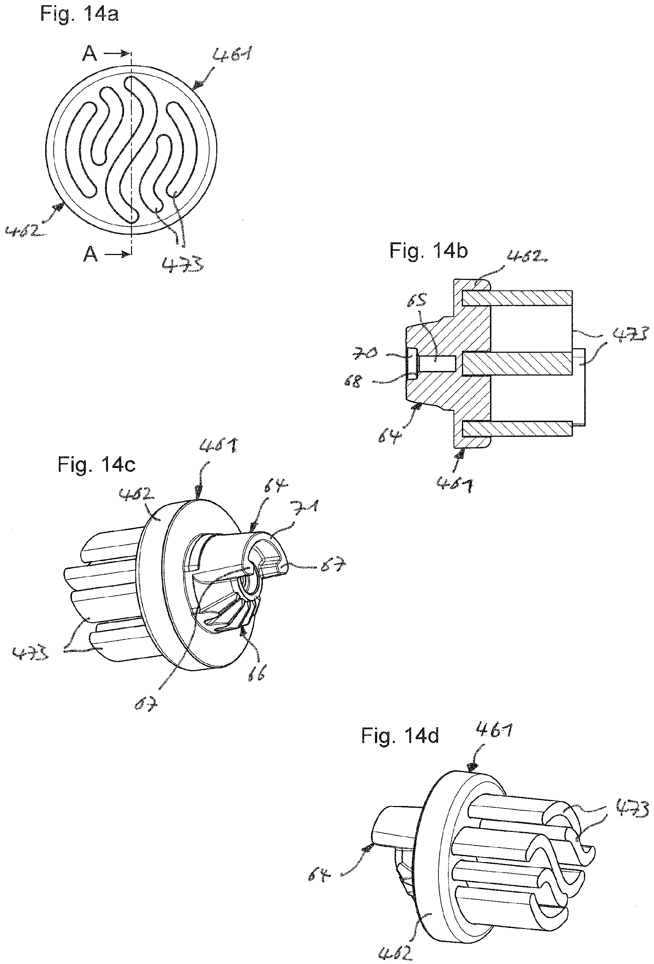

Der Bürstenkopf 461 gemäss der Ausführungsform nach Figur **14a-14d** zeichnet sich durch flächige, lamellenförmige Pflegeelemente 473 aus, welche im Borstenträger 462 verankert sind. Die lamellenförmige Pflegeelemente 473 sind in Draufsicht wellenförmig oder bogenförmig ausgebildet.

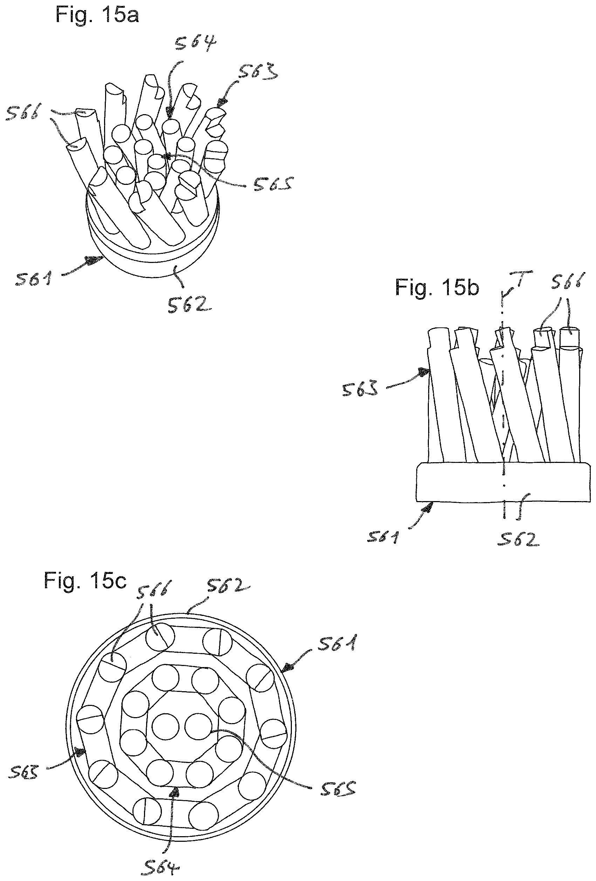

Der Bürstenkopf 561 gemäss der Ausführungsform nach Figur **15a-15c** zeichnet sich dadurch aus, dass sich das Borstenfeld aus einem aussen liegenden, ersten Kreis 563 von Borstenbündeln 566, einem innerhalb des ersten Kreises 563 liegenden, zweiten Kreis 564 von Borstenbündeln 566 sowie einem Zentrum 565 mit zwei Borstenbündeln 566 zusammensetzt. Die beiden Kreise 563, 564 von Borstenbündeln sind konzentrisch um die Trägerdrehachse T angeordnet.

Die Borstenbündel 566 des aussen liegenden ersten Kreises 563 weisen eine Neigung in Umfangrichtung relativ zur Trägerdrehachse T von 17° auf.

Die Borstenbündel 566 des innerhalb des ersten Kreises 563 liegenden, zweiten Kreises 564 weisen ebenfalls eine Neigung in Umfangrichtung relativ zur Trägerdrehachse T von 8° auf. Allerdings ist die Neigung der Borstenbündel 566 des zweiten Kreises 564 der Neigung der Borstenbündel 566 des ersten Kreises entgegen gesetzt.

Die beiden Borstenbündel im Zentrum sind parallel zur Trägerdrehachse T ausgerichtet.

Die Borstenlänge ist innerhalb des einzelnen Borstenbündels des aussenliegenden Kreises 563 von Borstenbündeln unterschiedlich, derart dass im pflegeseitigen Ende der Borstenbündel 566 eine Stufe ausgebildet wird.

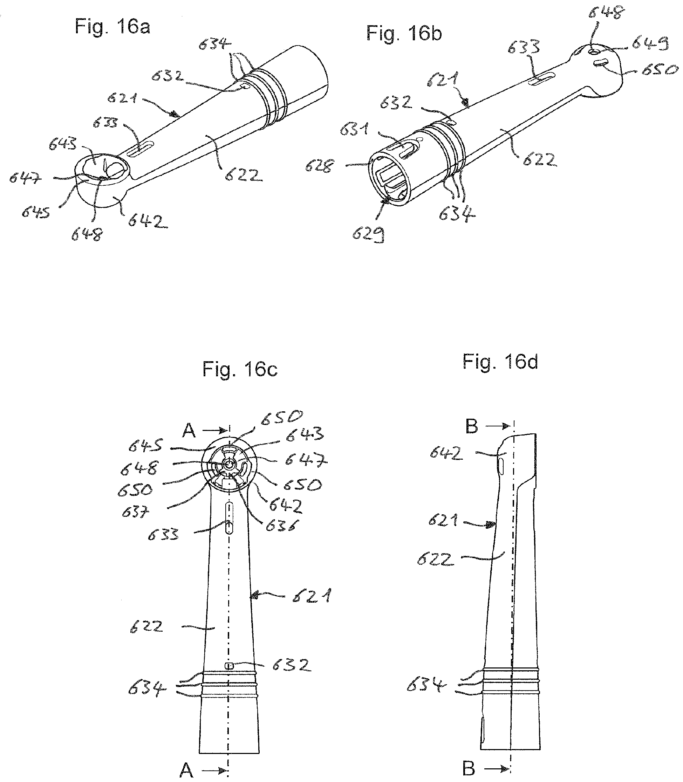

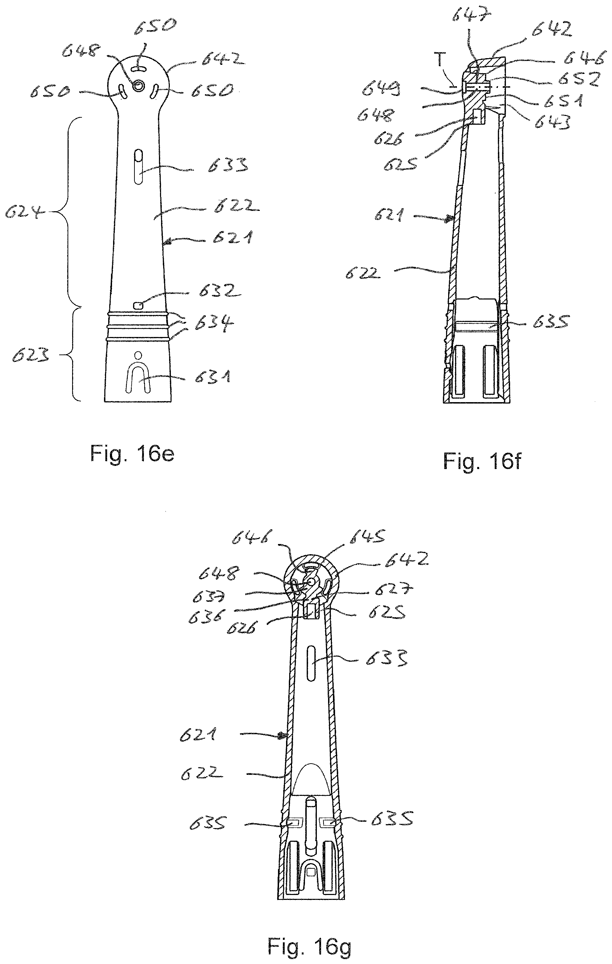

Die **Figuren 16a bis 16g** zeigen ein weiteres Aufsteckbürstengehäuse 621 mit einem Gehäusehals 622 und einen bürstenkopfseitig an den Gehäusehals anschliessenden Gehäusekopf 642. Die Ausgestaltung entspricht mit Ausnahme von bestimmten, weiter unten erläuterten Abweichung im Grundsatz den Figuren 3a bis 3g.

Der Gehäusehals 622 ist ein rohrförmiger Körper mit einer durchgängigen Aufnahme, welche handteilseitig in der Aufnahmeöffnung 629 endet und bürstenkopfseitig in der Borstenträgeraufnahme 643 des Gehäusekopfes 642 mündet.

Der Gehäusehals 622 dient der Aufnahme des Antriebsstabes 91, 891 sowie des Festlegelementes 121, 721 (siehe auch Figuren 8d und 8e).

Der Gehäusehals 622 umfasst einen an die handteilseitige Aufnahmeöffnung 629 in Richtung Bürstenkopf 61 anschliessenden handteilseitigen, ersten Aufnahmeabschnitt 623 zur Aufnahme des Festlegelements 121. Im Weiteren schliesst an den ersten Aufnahmeabschnitt 623 in Richtung Bürstenkopf 61 ein bürstenkopfseitiger, zweiter Aufnahmeabschnitt 624 zur Aufnahme des Antriebsstabes 91, 891 an (siehe auch Figuren 8d und 8e).

Am bürstenkopfseitigen Ende des zweiten Aufnahmeabschnittes 624 ist ein Pinnaufnahmekörper 625 mit einer Pinnaufnahme 626 zur Aufnahme des Lagerpinns 96, 896 eines bereits beschriebenen Antriebstabes 91, 891 angeordnet. Der Pinnaufnahmekörper 625 ist an der rückseitigen Gehäusewand angeordnet und ragt von dieser in den zweiten Aufnahmeabschnitt 624 hinein. Ferner ragt der Pinnaufnahmekörper 625 mit einem Längsabschnitt in die Borstenträgeraufnahme 643 des Gehäusekopfs 642.

Die Pinnaufnahme 626 ist als Sackloch ausgebildet und weist eine in der Steuerdrehachse S liegende Längsachse auf. Die Pinnaufnahme 626 bildet eine handteilseitige Pinnaufnahmeöffnung aus.

Im Übergang vom ersten zum zweiten Aufnahmeabschnitt 623, 624 sind in der Gehäusewand des Gehäusehalses 622 zwei, einander gegenüber liegende Durchgangsöffnungen 632 angeordnet. Diese dienen der Aufnahme der Rastnasen 131, 731 auf den Rastzungen 130, 730 am Festlegelement 121, 721 (siehe auch Figur 8d).

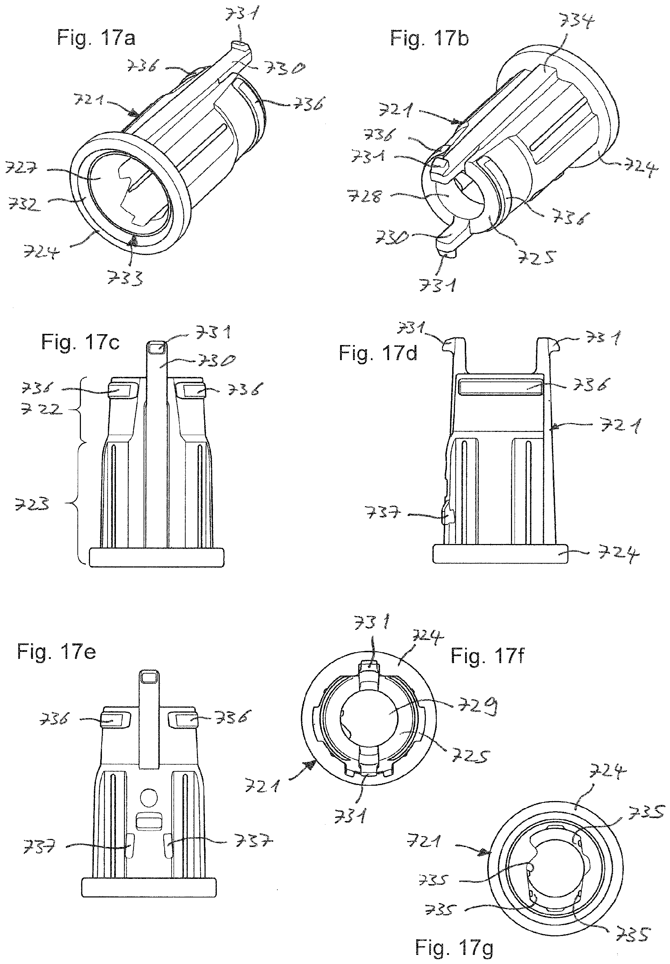

Im ersten Aufnahmeabschnitt können weitere eine oder mehrere Nuten um den Umfang angeordnet sein, welche im ersten Aufnahmeabschnitt in Richtung des zweiten Aufnahmeabschnitts liegen, gezeigt in den Figuren 16g und 16f. Vorzugsweise werden zwei Nuten 635 ausgebildet, die axial an derselben Stelle bzw. auf gleicher Höhe im Aufsteckbürstengehäuse 621 angebracht sind und jeweils einen Teil des Umfangs abdecken. Diese spielen im montierten Zustand mit Erhebungen 736 zusammen, welche im alternativen Festlegelement 721 ausgeformt sind (siehe Figuren 17a bis 17g). Zusammen führen sie dazu, dass das ganze stabiler montiert ist.

Des Weiteren sind sowohl im Gehäusehals 622 als auch im Gehäusekopf 642 die bereits zu den Figuren 2a-2g beschriebenen schlitzartigen Durchgangsöffnungen 633, 650 in der Gehäusewand des Aufsteckbürstengehäuses 621 dargestellt, welche dem Wasserdurchfluss zum Reinigen des Aufsteckbürstenteils 2 dienen.

Ferner sind an der Aussenseite des Gehäusehalses 622 die bereits zu den Figuren 2a-2g beschriebenen Abzugsrippen 634 dargestellt.

Der Gehäusekopf 642 bildet eine becherförmige Borstenträgeraufnahme 643 aus, welche zur Vorderseite hin über eine Trägeraufnahmeöffnung 644 offen ist. Die Borstenträgeraufnahme 643 dient dazu, die bereits beschriebene Funktionseinheit 64 des Borstenträgers 62 aufzunehmen.

Die Trägeraufnahmeöffnung 644 wird von einer umlaufenden Stirnendfläche 645 begrenzt, welche entlang ihres kreisförmigen Aussenumfanges unterschiedliche Breiten aufweist. Die unterschiedlichen Breiten der Stirnendfläche 645 basieren auf unterschiedlichen Wanddicken im Gehäusekopf 642.

In der Borstenträgeraufnahme 643 ist eine Lagerungshülse 647 mit einer Durchführöffnung 648 zum Hindurchführen eines bereits beschriebenen Lagerstiftes 111 von der Rückseite des Gehäusekopfs 642 her angeordnet.

Die Lagerungshülse 647 bildet eine zur Vorderseite gerichtete umlaufende, kreisringförmige Anschlagschulter 651 aus, welche einen zylinderförmigen Endabschnitt 652 der Lagerungshülse umschliesst. Die Anschlagschulter 651 liegt mit einer zum Bürstenkopf 61 gerichteten Stirnendfläche des Begrenzungsnockens 646 in einer Ebene.

Der zylinderförmige Endabschnitt 652 der Lagerungshülse 647 greift in die oben beschriebene Zylinderaufnahme 70 an der Funktionseinheit 64 ein und liegt mit der Stirnendfläche 69 an einer ebenfalls nachfolgend beschriebenen Auflageschulter 68 auf, welche eine Lagerstiftaufnahme 65 umgibt (siehe auch Figur 8f).

Auf der Rückseite des Gehäusekopfes ist eine Senkung 649 zur Aufnahme des Stiftkopfs 115 des Lagerstifts 111 vorgesehen.

In der Borstenträgeraufnahme 643 ist ein, querschnittlich trapezförmig ausgebildeter Begrenzungsnocken 646 angeordnet, welcher sich von seinem freien Ende (auf der oberen Seite) zu seiner Basis an der Lagerungshülse 647 hin verjüngt. Der Begrenzungsnocken 646 ist an der Aussenwand der Lagerungshülse 647 angeordnet und ist mit dieser verbunden. Der Begrenzungsnocken 646 ist ausgehend von der Lagerungshülse 647 entlang der Steuerdrehachse S zum äussersten Kopfende hin gerichtet. Der Begrenzungsnocken 646 ist ferner mit der rückseitigen Gehäusewand verbunden.

Zwischen Lagerungshülse 647 und dem bereits erwähnten Pinnaufnahmekörper 625 ist eine Verbindungsrippe 627 angeordnet, welcher die genannten Elemente miteinander verbindet. Die Verbindungsrippe 627 ist ferner mit der rückseitigen Gehäusewand verbunden. Die Verbindungsrippe 627 ist als pfeilförmiges Element aus Pfeilschaft 636 und Pfeilspitze 637 geformt. Dies bringt automatisch eine grössere (Stirn)Endfläche, welche auch als Abstützung oder als Kippbegrenzung für den Bürstenkopf gilt.

Der Pinnaufnahme 626 des Pinnaufnahmekörpers 625, die Verbindungsrippe 627, die Durchführöffnung 648 der Lagerungshülse 647 und der Begrenzungsnocken 646 sind in einer gemeinsamen Ebene angeordnet, in welcher auch die Steuerdrehachse S liegt.

Das alternative Festlegelement 721 gemäss den **Figuren 17a-17g** ist hülsenförmig ausgestaltet und bildet einen durchgängigen Hülsenhohlraum aus. Die Ausgestaltung entspricht mit Ausnahme von bestimmten, weiter unten erläuterten Abweichung im Grundsatz den Figuren 5a bis 5g.

Das Festlegelement 721 umfasst einen bürstenkopfseitigen, ersten Hülsenabschnitt 722 zur Aufnahme und Abstützung des handteilseitigen Endabschnitts des Antriebsstabs 91, 891.

Der erste Hülsenabschnitt 722 weist eine ringförmige Querschnittsverengung 728 in Form eines Innenringes aus. Die ringförmige Querschnittsverengung 728 bildet eine zum Bürstenkopf 61 weisende, ringförmige Anschlagfläche 725 aus. Die Anschlagfläche 725 ist senkrecht zur Steuerdrehachse S orientiert. Die ringförmige Querschnittsverengung 728 bildet im Weiteren einen zylinderförmigen Aufnahmeabschnitt 729 zur Aufnahme des beschriebenen Anschlagzylinders 101, 801 des Antriebsstabes 91, 891 aus.

Der zylinderförmige Aufnahmeabschnitt 729 dient der Vorzentrierung des Antriebstabes 91, 891 über den in diesen eingreifenden Anschlagzylinder 101, 801 des Antriebsstabs 91, 891. Der Durchmesser des zylinderförmigen Aufnahmeabschnitt 729 ist grösser als jener des in diesen eingreifenden Anschlagzylinders 101, 801.

Auf diese Weise ist der Anschlagzylinder 101, 801 mit Spiel im zylinderförmigen Aufnahmeabschnitt 729 geführt, wodurch zwischen den seitlichen Zylinderflächen keine Reibung auftritt.

Die Anschlagfläche 725 dient der Lagerung einer um den Anschlagzylinder 101, 801 umlaufenden Anschlagschulter 102, 802 am Antriebsstab 91, 891 (siehe Figur 8d und 8e).

In der Verlängerung der Hülsenwand des ersten Hülsenabschnitts 722 sind zwei einander gegenüber liegende Rastzungen 730 mit jeweils einer nach aussen gerichteten Rastnase 731 angeordnet. Die in Richtung Bürstenkopf 61 gerichteten Rastzungen 730 sind freigestellt und liegen in der Verlängerung der Hülsenwand. Die Rastzungen 730 bzw. die Rastnasen 731 dienen der axialen Sicherung des Festlegelements 721 am Gehäusehals 22, 622 indem die genannten Rastnasen 731 in die bereits erwähnten Durchgangsöffnungen 32, 632 am Gehäusehals 22, 622 eingreifen (siehe Figur 8d).

Als weitere Elemente zum Rückhalt des Festlegeteils 621 im Aufsteckbürstengehäuse sind Erhebungen 736 gestaltet, welche am Umfang des Festlegeteils 721 axial auf gleicher Höhe angeordnet sind und in entsprechende Nuten 635 am Aufsteckbürstengehäuse 621 einrasten. Diese werden beim Ineinanderschieben der Teile ineinander verrastet. Diese sind axial ungefähr über der ringförmigen Querschnittsverengung 728 mit dem zylinderförmigen Aufnahmeabschnitt 729 angebracht.

Im Weiteren enthält das Festlegelement 721 einen handteilseitigen, zweiten Hülsenabschnitt 723 mit einer Zapfenaufnahme 727 zur Aufnahme des Kupplungszapfens 12 des Handteils 10. Der zweite Hülsenabschnitt 723 bildet also einen Kupplungsabschnitt aus.

Das Festlegelement 721 dient folglich auch der Verbindung des Aufsteckbürstenteils 2 mit dem Handteil 10. Die Zapfenaufnahme 727 weist eine an die Querschnittsgeometrie des Kupplungszapfens 12 angepasst Innengeometrie auf.

Die Zapfenaufnahme 727 weist im Bereich der Zapfenaufnahmeöffnung 733 eine trichterartige Erweiterung 732 auf, welche als Einführhilfe für den Kupplungszapfen 12 dient.

Die Zapfenaufnahme 727 weist ferner Verdrängungsrippen 735 auf, welche dazu dienen einen gut ausgeprägten Presssitz herzustellen. Die Verdrängungsrippen 735 verlaufen parallel Längsachse L der Körperpflegebürste bzw. zur Aufsteckrichtung.

Die Aussenflächen der Hülsenabschnitte 722, 723 sind konisch ausgebildet und verjüngen sich zum Bürstenkopf 61 hin. Dadurch wird die Einführbarkeit des Festlegelementes 721 in den konisch ausgebildeten Gehäusehals 22, 622 gewährleistet.

Im Übergangsbereich vom handteilseitigen zum bürstenseitigen Hülsenabschnitt kann in Richtung bürstenseitigen Hülsenabschnitt eine verstärkte Verjüngung ausgebildet sein, welche in Form einer Stufe oder einer ringförmig umlaufenden Konusfläche ausgeführt ist.

Die Aussenfläche des Festlegelements 721 kann ferner Rippen 734 aufweisen, welche sich über beide Hülsenabschnitte 722, 723 erstrecken. Die Rippen 734 sind im Wesentlichen parallel zur Längsrichtung L der Körperpflegebürste ausgerichtet. Die Rippen können zum bürstenseitigen, ersten Hülsenabschnitt 722 hin in die Rastzungen 730 übergehen.

Weiter sind auf der Rückseite des Festlegelements 721 Geometrien geschaffen, die mit dem U-förmigen Schlitz der Rastzunge 31, 631 des Aufsteckbürstengehäuses korrespondieren. Es sind zwei Stumpen bzw. Vorsprünge 737 am handteilseitigen Ende des Festlegelements 721 geformt, die im montierten Zustand am Ende des U-förmigen Schlitzes anliegen. Weiter können diese Stumpen mit einer Rampe versehen sein, sodass das Einführen des Festlegelements in das Aufsteckbürstengehäuses und somit auch das Einfahren der Stumpen in die U-förmige Ausnehmung unterstützt wird.

Im Weiteren weist das Festlegelement 721 an seinem handteilseitigen Ende im Bereich der Zapfenaufnahmeöffnung 733 einen ringförmigen Einschubbegrenzungsflansch 724 auf, welcher bereits weiter oben beschrieben wurde. Der Einschubbegrenzungsflansch 724 stellt, wie bereits erwähnt, sicher, dass das Festlegelement 721 nicht vollständig in den Gehäusehals 22, 622 eingeschoben wird.

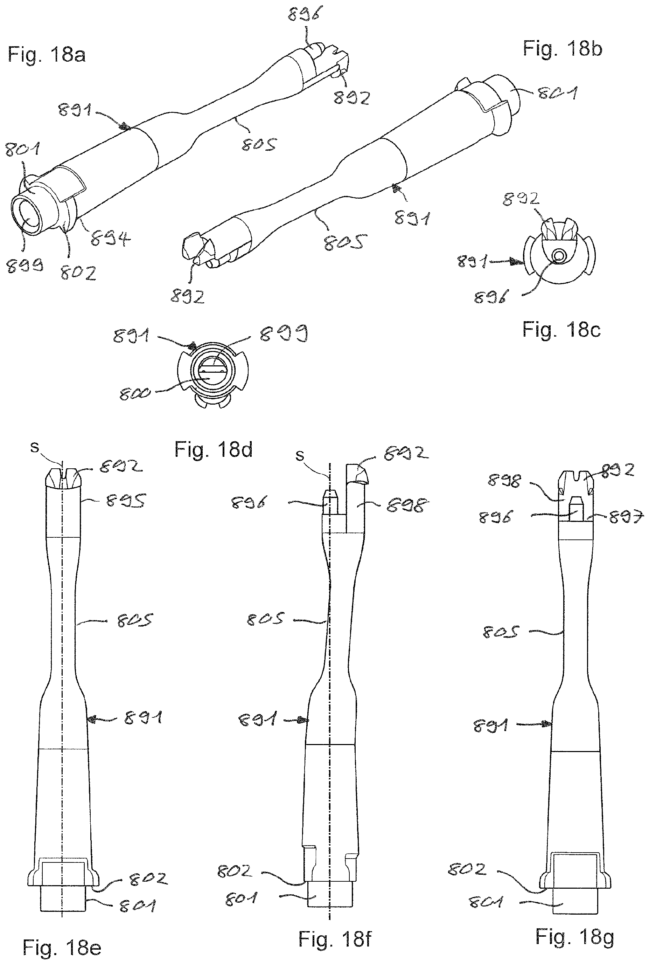

Der Antriebsstab 891 gemäss den **Figuren 18a-18g** weist einen handteilseitigen Endabschnitt 894 sowie einen bürstenkopfseitigen Endabschnitt 895 auf. Die Ausgestaltung entspricht mit Ausnahme von bestimmten, weiter unten erläuterten Abweichung im Grundsatz den Figuren 6a bis 6g.

Der Antriebsstab 891 bildet am handteilseitigen Endabschnitt 894 eine Steuerstiftaufnahme 899 zur Aufnahme des Endabschnitts des Steuerstiftes 13 aus. Der Antriebsstab 891 ist in diesem Abschnitt rohrförmig ausgebildet. Die Längsachse der Steuerstiftaufnahme 899 liegt auf der Steuerdrehachse S.

Die Steuerstiftaufnahme 899 weist einen kreiszylinderförmigen Basisquerschnitt auf. Im bürstenkopfseitigen Endabschnitt weist die Steuerstiftaufnahme 899 bezogen auf den kreisförmigen Basisquerschnitt eine kreissegmentförmige Querschnittsverengung 800 auf. Diese gewährleistet eine formschlüssige Aufnahme des Steuerstiftes 13 in der Steuerstiftaufnahme 899 und somit eine Drehsicherung (siehe Figur 8d und 8e).

Im Weiteren weist der Antriebsstab 891 im handteilseitigen Endabschnitt 894 in Verlängerung der Steuerstiftaufnahme 899 einen ringförmigen Anschlagzylinder 801, in Form eines Hohlzylinders auf. Der Anschlagzylinder 801 weist einen geringeren Aussendurchmesser auf als der Aussendurchmesser des daran anschliessenden Aufnahmeabschnitts des Antriebsstabes 891 mit der Steuerstiftaufnahme 899. Entsprechend wird im Übergang vom Aufnahmeabschnitt zum Anschlagzylinder 801 eine umlaufende Anschlagschulter 802 ausgebildet.

Die Funktion des Anschlagzylinders 801 und der dazugehörigen Anschlagschulter 802 wurde bereits im Zusammenhang mit der Beschreibung des Festlegelementes 121, 721 erörtert.

Zur Übertragung einer vom Steuerstift 13 in den Antriebsstab 891 eingebrachten oszillierende Drehbewegung vom Antriebsstab 891 auf den Bürstenkopf 61 enthält der Antriebsstab 891 an seinem bürstenkopfseitigen Endabschnitt eine erste Zahnung 892 mit zwei Zähnen 892.1 für den Eingriff in eine zweite Zahnung 66 am Borstenträger 62 des Bürstenkopfs 61, welcher weiter unten beschrieben wird.

Die erste Zahnung 892, welche zur Vorderseite gerichtet ist, bildet mit der zweiten Zahnung 66 des Borstenträgers 62 hierzu eine Antriebsverzahnung aus.

Die Stirnendflächen der zwei Zähne 892.1 der ersten Zahnung 892, über welche der Eingriff mit den Zähnen 66.1 der zweiten Zahnung 66 erfolgt, weisen gegenüber der Steuerdrehachse S eine Neigung auf.

Der Antriebsstab 891 bildet an seinem bürstenkopfseitigen Endabschnitt 895 im Weiteren einen Lagerpinn 896 aus, dessen Längsachse in der Steuerdrehachse S verläuft. Der Lagerpinn 896 ist im montierten Zustand, wie bereits erwähnt, in der Pinnaufnahme 26, 626 des Aufsteckbürstengehäuses 21, 621 drehbar gelagert (siehe Figur 8d und 8e).

Der Antriebsstab 891 ist folglich mit seinem bürstenkopfseitigen Endabschnitt 895 über den Lagerpinn 896 am Aufsteckbürstengehäuse 21, 621 und mit seinem handteilseitigen Endabschnitt 894 über den Anschlagzylinder 801 mit Anschlagschulter 802 am Festlegelement 121, 721 drehbar gelagert und sowohl axial als auch radial gesichert (siehe Figur 8c sowie Figur 8d und 8e).

Der Antriebsstab 891 bildet nun in einem bürstenkopfseitigen Endabschnitt 895 eine Querschnittsaussparung aus, welche zum handteilseitigen Endabschnitt hin durch eine Lagerpinnschulter 897 begrenzt wird. der Lagerpinn 896 ist nun auf dieser Lagerpinnschulter 897 angeordnet.

Die oben genannte erste Zahnung 892 ist am bürstenkopfseitigen Ende eines sich ausgehend von der Lagerpinnschulter 897 in Richtung bürstenkopfseitiges Ende erstreckenden Stabfortsatzes 898 angeordnet. Der Stabfortsatz 898 verläuft parallel zum Lagerpinn 896. Zwischen Stabfortsatz 898 und Lagerpinn 896 ist eine Aussparung vorgesehen.

Der Lagerpinn 896 umfasst ausgehend von der Lagerpinnschulter 897 einen zylindrischen Basisabschnitt sowie einen kegelartig zulaufenden, freien Endabschnitt (siehe insbesondere Figur 18f und 18g).

Der Lagerpinn 896 ist von der Vorderseite betrachtet hinter der ersten Zahnung 892 angeordnet.

Der Antriebsstab 891 weist im Weiteren eine Krümmung auf (siehe Figur 18f). So verläuft ein erster handteilseitiger Längsabschnitt des Antriebsstabes 891 parallel zur Steuerdrehachse S, während ein zweiter bürstenkopfseitiger Längsabschnitt gegenüber der Steuerdrehachse S zur Vorderseite hin geneigt ist.

Ein bürstenkopfseitiger Endabschnitt 895 verläuft allerdings gegenüber der Steuerdrehachse S wieder parallel. Das heisst, der gekrümmte Abschnitt ist zwischen dem handteilseitigen Längsabschnitt des Antriebsstabes 891, umfassend den handteilseitigen Endabschnitt 894 und dem bürstenkopfseitigen Endabschnitt 895 angeordnet.

Der Antriebsstab 891 weist zwischen einem handteilseitigen Längsabschnitt bzw. Endabschnitt 894 und einem bürstenkopfteilseitigen Endabschnitt 895 einen dazwischenliegenden Einschnürungsabschnitt 805 von kleinerem Durchmesser als im handteilseitigen und bürstenkopfteilseitigen Längs- bzw. Endabschnitt auf. Der Antriebsstab 891 kann sich jeweils vom handteilseitigen und bürstenkopfteilseitigen Längs- bzw. Endabschnitt zum Einschnürungsabschnitt 805 hin konisch verjüngen.

Die oben beschriebene Neigung des Antriebsstabs 891 verläuft insbesondere im Einschnürungsabschnitt 805.

## Patentansprüche

1. Aufsteckbürstenteil für eine elektrische Körperpflegebürste, insbesondere elektrische Zahnbürste (1), wobei das Aufsteckbürstenteil (2) mehrteilig ausgebildet ist und:
- ein Aufsteckbürstengehäuse (21), welches einen Gehäusekopf (42) mit einer Borstenträgeraufnahme (43) umfasst;
- einen Antriebsstab (91) zum Antreiben eines Bürstenkopfs (61), mit einem bürstenkopfseitigen Endabschnitt (95), an welchem eine erste Zahnung (92) angeordnet ist, und mit einem handteilseitigen Endabschnitt (94);
- einen Bürstenkopf (61) mit einem Borstenträger (62) und an diesem angeordneten Pflegeborsten (81), wobei der Borstenträger (62) eine zweite Zahnung (66) aufweist und über einen Lagerstift (111) drehbar in der Borstenträgeraufnahme des Gehäusekopfs gelagert ist; sowie
- ein Festlegelement (121) zur drehbaren Lagerung des handteilseitigen Endabschnittes des Antriebsstabes (91)
enthält,
und die erste und zweite Zahnung (92, 66) eine Antriebsverzahnung zum Antreiben des Bürstenkopfs (61) durch den Antriebsstab (91) ausbilden, **dadurch gekennzeichnet, dass**
in der Borstenträgeraufnahme (43) ein Begrenzungsnocken (46) angeordnet ist, welcher mit seitlichen Anschlägen (67) am Bürstenkopf (61) derart zusammenwirkt, dass der Drehwinkel (W) des Borstenträgers (62) begrenzt wird.

2. Aufsteckbürstenteil gemäss Anspruch 1, **dadurch gekennzeichnet, dass** der Antriebsstab (91) an seinem bürstenkopfseitigen Endabschnitt (95) einen Lagerpinn (96) enthält, durch welchen die Steuerdrehachse (S) verläuft und der Lagerpinn (96) in einer Pinnaufnahme (26) am Aufsteckbürstengehäuse (21) drehbar gelagert ist.

3. Aufsteckbürstenteil gemäss Anspruch 2, **dadurch gekennzeichnet, dass** die Pinnaufnahme (26) im Übergangsbereich zwischen einem Gehäusehals (22), welcher den Antriebsstab (91) aufnimmt und dem Gehäusekopf (42), welcher den Bürstenkopf (61) oder Teile davon aufnimmt, angeordnet ist.

4. Aufsteckbürstenteil gemäss einem der Ansprüche 1 bis 3, **dadurch gekennzeichnet, dass** der Borstenträger (62) einen Trägerkörper (72) enthält, auf dessen Vorderseite Pflegeborsten (81) angeordnet sind, sowie eine Funktionseinheit (64) enthält, welche auf der Rückseite Trägerkörpers (72) angeordnet ist, und die Funktionseinheit (64) die zweite Zahnung (66), eine Lagerstiftaufnahme (65) zur Aufnahme eines Verankerungsabschnittes (113) des Lagerstifts (111), sowie die seitlichen Anschläge (67) für den Begrenzungsnocken (46) am Gehäusekopf (42) des Aufsteckbürstengehäuses (21) enthält.

5. Aufsteckbürstenteil gemäss einem der Ansprüche 1 bis 4, **dadurch gekennzeichnet, dass** der Gehäusekopf (42) eine auf der Vorderseite angeordnete Trägeraufnahmeöffnung (44) und eine von der Rückseite in die Borstenträgeraufnahme (43) führende, Durchführöffnung (48) zur Aufnahme des Lagerstiftes (111) von der Rückseite des Gehäusekopfs (42) enthält.

6. Aufsteckbürstenteil gemäss einem der Ansprüche 1 bis 5 **dadurch gekennzeichnet, dass** das Festlegelement (121) einen handteilseitigen Hülsenabschnitt (123) mit einer Zapfenaufnahme (127) zur Aufnahme des Kupplungszapfens (12) des Handteils (10) ausbildet.

7. Aufsteckbürstenteil gemäss einem der Ansprüche 1 bis 6, **dadurch gekennzeichnet, dass** die erste und zweite Zahnung (92, 66) jeweils 2 bis 4, insbesondere 3 bzw. 2, erste bzw. zweite Zähne (92.1, 66.1) aufweist.

8. Aufsteckbürstenteil gemäss einem der Ansprüche 1 bis 7, **dadurch gekennzeichnet, dass** der Gehäusekopf (42) eine Lagerungshülse (47) für den Lagerstift (111) enthält und der Begrenzungsnocken (46) an der Lagerungshülse (47) angeordnet ist.

9. Aufsteckbürstenteil gemäss einem der Ansprüche 1 bis 8, **dadurch gekennzeichnet, dass** der Begrenzungsnocken (46) im Wesentlichen trapezförmig ausgebildet ist und sich von seinem freien Ende zu seiner Basis hin verjüngt.

10. Aufsteckbürstenteil gemäss einem der Ansprüche 1 bis 9, **dadurch gekennzeichnet, dass** die seitlichen Anschläge (67) in Richtung oberes Gehäusekopfende oberhalb von der zweiten Zahnung angeordnet sind.

11. Aufsteckbürstenteil gemäss einem der Ansprüche 1 bis 10, **dadurch gekennzeichnet, dass** im montierten Zustand des Bürstenkopfs (61) der Begrenzungsnocken (46) zwischen den beiden seitlichen Anschlägen (67) angeordnet ist, wobei der Borstenträger (62) um einen definierten Drehwinkel drehbar ist, welcher durch das Anschlagen der seitlichen Anschläge (67) am Begrenzungsnocken (46) definiert wird.

12. Aufsteckbürstenteil gemäss einem der Ansprüche 1 bis 11, **dadurch gekennzeichnet, dass** die seitlichen Anschläge (67) über eine bogenförmige, insbesondere kreisbogenförmige Führungswand (71) miteinander verbunden sind.

13. Aufsteckbürstenteil gemäss einem der Ansprüche 1 bis 12, **dadurch gekennzeichnet, dass** die seitlichen Anschläge (67) für den Begrenzungsnocken (46) in einer Neutrallage des Borstenträgers (62) seitlich von einer Lagerstiftaufnahme (65) angeordnet sind.

14. Elektrische Körperpflegebürste, insbesondere elektrische Zahnbürste (1), mit einem Handteil (10) und einem mehrteiligen Aufsteckbürstenteil (2) gemäss den Ansprüchen 1 bis 13.

15. Verfahren zur Herstellung eines Aufsteckbürstenteils (2) gemäss einem der Ansprüche 1 bis 13, **dadurch gekennzeichnet, dass** das Aufsteckbürstengehäuse (21), der Antriebsstab (91), das Festlegelement (121) und der Borstenträger (62) jeweils mittels eines Spritzgiessverfahrens, insbesondere jeweils einteilig, spritzgegossen werden, und an den Borstenträger (62) mittels eines integrierten oder separaten Verfahrensschrittes Pflegeborsten (81) angebracht werden, und die Bauteile mittels eines nachfolgenden Montageschrittes zum Aufsteckbürstenteil (2) zusammengeführt werden.

## Claims

1. An attachment brush part for an electrical body care brush, in particular electrical toothbrush (1), wherein the attachment brush part (2) is designed in a multi-part manner and comprises:
- an attachment brush housing (21) which comprises a housing head (42) with a bristle carrier receiver (43);
- a drive rod (91) for driving a brush head (61), with a brush-head-side end section (95), on which a first toothing (92) is arranged, and with a hand-part-side end section (94);
- a brush head (61) with a bristle carrier (62) and with care bristles (81) which are arranged on this, wherein the bristle carrier (62) comprises a second toothing (66) and is rotatably mounted in the bristle carrier receiver of the housing head via a bearing pin (111); as well as
- a securing element (121) for the rotatable mounting of the hand-part-side end section of the drive rod (91),
and the first and second toothing (92, 66) form a drive toothing for the driving of the brush head (61) by the drive rod (91),
**characterised in that**
a limitation cam (46) which interacts with lateral stops (67) on the brush head (61) in a manner such that the rotation angle (W) of the bristle carrier (62) is limited is arranged in the bristle carrier receiver (43).

2. An attachment brush part according to claim 1, **characterised in that** the drive rod (91) at its brush-head-side end section (95) comprises a bearing pin (96), through which the control rotation axis (S) runs and the bearing pin (96) is rotatably mounted in a pin receiver (26) on the attachment brush housing (21).

3. An attachment brush part according to claim 2, **characterised in that** the pin receiver (26) is arranged in the transition region between a housing neck (22) which receives the drive rod (91), and the housing head (42) which receives the brush head (61) or parts thereof.

4. An attachment brush part according to one of the claims 1 to 3, **characterised in that** the bristle carrier (62) comprises a carrier body (72), on whose front side care bristles (81) are arranged, as well as comprises a function unit (64) which is arranged on a rear side of the carrier body (72), and the function unit (64) comprises the second toothing (66), the bearing pin receiver (65) for receiving an anchoring section (113) of a bearing pin (111), as well as lateral stops (67) for the limitation cam (46) on the housing head (42) of the attachment brush housing (21).

5. An attachment brush part according to one of the claims 1 to 4, **characterised in that** the housing head (42) comprises a carrier receiver opening (44) which is arranged on the front side and a feed-through opening (48) which leads from the rear side into the bristle carrier receiver (43) and is for receiving the bearing pin (111) from the rear side of the housing head (42).

6. An attachment brush part according to one of the claims 1 to 5, **characterised in that** the securing element (121) forms a hand-part-side sleeve section (123) with a nub receiver (127) for receiving the coupling nub (12) of the hand part (10).

7. An attachment brush part according to one of the claims 1 to 6, **characterised in that** the first and the second toothing (92, 66) each comprise 2 to 4, in particular 3 or 2 first and second teeth (92.1, 66.1) respectively.

8. An attachment brush part according to one of the claims 1 to 7, **characterised in that** the housing head (42) comprises a mounting sleeve (47) for the bearing pin (111) and the limitation cam (46) is arranged on the mounting sleeve (47).

9. An attachment brush part according to one of the claims 1 to 8, **characterised in that** limitation cam (46) is designed in an essentially trapezoidal manner and tapers from its free end to its base.

10. An attachment brush part according to one of the claims 1 to 9, **characterised in that** the lateral stops (67) are arranged above the second toothing in the direction of the upper housing head end.

11. An attachment brush part according to one of the claims 1 to 10, **characterised in that** the limitation cam (46) is arranged between the two lateral stops (67) in the assembled state of the brush head (61), wherein the bristle carrier (62) is rotatable about a defined rotation angle which is defined by the abutting of the lateral stops (67) on the limitation cam (46).

12. An attachment brush part according to one of the claims 1 to 11, **characterised in that** the lateral stops (67) are connected to one another via an arc-shaped, in particular circular-arc-shaped guide wall (71).

13. An attachment brush part according to one of the claims 1 to 12, **characterised in that** the lateral stops (67) for the limitation cam (46) in a neutral position of the bristle carrier (62) are arranged laterally of a bearing pin receiver (65).

14. An electrical body care brush, in particular electrical toothbrush (1), with a hand part (10) and with a multi-part attachment brush part (2) according to the claims 1 to 13.

15. A method for manufacturing an attachment brush part (2) according to one of the claims 1 to 13, **characterised in that** the attachment brush housing (21), the drive rod (91), the securing element (121) and the bristle carrier (62) are each injection moulded by way of an injection moulding method, in particular in each case in a single-part manner, and care bristles (81) are attached onto the bristle carrier (62) by way of an integrated or separate method step, and the components are brought together into the attachment brush part (2) by way of a subsequent assembly step.

## Revendications

1. Pièce de brosse enfichable pour brosse électrique de soin corporel, en particulier pour brosse à dents électrique (1), la pièce de brosse enfichable (2) étant réalisée en plusieurs pièces et contenant:
- un boîtier (21) de brosse enfichable qui comporte une tête de boîtier (42) présentant un logement porte-brosse (43),
- un barreau d'entraînement (91) qui entraîne une tête de brosse (61) et qui présente une section d'extrémité (95) située du côté de la tête de brosse et sur laquelle est disposée une première denture (92), ainsi qu'une section d'extrémité (94) située du côté de la pièce de poignée,
- une tête de brosse (61) dotée d'un porte-brosses (62) sur lequel sont disposées des brosses de soin (81), le porte-brosses (62) présentant une deuxième denture (66) et étant monté à rotation dans le logement porte-brosse de la tête de brosse par l'intermédiaire d'une tige de montage (111), ainsi que
- un élément de calage (121) qui monte à rotation la section d'extrémité du barreau d'entraînement (91) située du côté de la pièce de poignée,
et la première et la deuxième denture (92, 66) formant un engrenage d'entraînement qui permet au barreau d'entraînement (91) d'entraîner la tête de brosse (61), **caractérisée en ce que**
une came de limitation (46) qui coopère avec des butées latérales (67) prévues sur la tête de brosse (61) de manière à limiter l'angle de rotation (W) du porte-brosses (62) est disposée dans le logement porte-brosse (43).

2. Pièce de brosse enfichable selon la revendication 1, **caractérisée en ce que** le barreau d'entraînement (91) présente sur sa section d'extrémité (95) située du côté de la tête de brosse un goujon de montage (96) par lequel passe l'axe de rotation de commande (S) et **en ce que** le goujon de montage (96) est monté à rotation dans un logement de goujon (26) prévu sur le boîtier (21) de brosse enfichable.

3. Pièce de brosse enfichable selon la revendication 2, **caractérisée en ce que** le logement de goujon (26) est disposé à la transition entre un col de boîtier (22) qui loge le barreau d'entraînement (91) et la tête de boîtier (42) qui reprend la tête de brosse (61) ou des parties de cette dernière.

4. Pièce de brosse enfichable selon l'une des revendications 1 à 3, **caractérisée en ce que** le porte-brosses (62) contient un corps de support (72) sur la face avant duquel sont disposées des brosses de soin (81) et contient également une unité fonctionnelle (64) disposée sur la face dorsale du corps de support (72), l'unité fonctionnelle (64) contenant la deuxième denture (66), un logement (65) de tige de montage qui reprend une section d'ancrage (113) de la tige de montage (111) ainsi que les butées latérales (67) de la came de limitation (46) de la tête de boîtier (42) du boîtier (21) de brosse enfichable.

5. Pièce de brosse enfichable selon l'une des revendications 1 à 4, **caractérisée en ce que** la tête de boîtier (42) contient une ouverture (44) de logement de support disposée sur sa face avant et une ouverture de passage (48) conduisant dans le logement porte-brosse (43) depuis la face dorsale et qui reprend la tige de montage (111) depuis la face dorsale de la tête de boîtier (42).

6. Pièce de brosse enfichable selon l'une des revendications 1 à 5, **caractérisée en ce que** l'élément de calage (121) forme une section en douille (123) située du côté de la pièce de poignée et dotée d'un logement de tourillon (127) qui reprend le tourillon d'accouplement (12) de la pièce de poignée (10).

7. Pièce de brosse enfichable selon l'une des revendications 1 à 6, **caractérisée en ce que** la première et la deuxième denture (92, 96) présentent toutes deux de 2 à 4 et en particulier 3 ou 2 premières ou deuxièmes dents (92.1, 66.1).

8. Pièce de brosse enfichable selon l'une des revendications 1 à 7, **caractérisée en ce que** la tête de boîtier (42) contient une douille de palier (47) pour la tige de montage (111) et **en ce que** la came de limitation (46) est disposée sur la douille de palier (47).

9. Pièce de brosse enfichable selon l'une des revendications 1 à 8, **caractérisée en ce que** la came de limitation (46) a une forme essentiellement trapézoïdale qui se rétrécit entre son extrémité libre et sa base.

10. Pièce de brosse enfichable selon l'une des revendications 1 à 9, **caractérisée en ce que** les butées latérales (67) sont disposées au-dessus de la deuxième denture en direction de l'extrémité supérieure de la tête de brosse.

11. Pièce de brosse enfichable selon l'une des revendications 1 à 10, **caractérisée en ce que** lorsque la tête de brosse (61) est en situation montée, la came de limitation (46) est disposée entre les deux butées latérales (67), le porte-brosses (62) pouvant tourner d'un angle de rotation défini par la butée des butées latérales (67) contre la came de limitation (46).

12. Pièce de brosse enfichable selon l'une des revendications 1 à 11, **caractérisée en ce que** les butées latérales (67) sont reliées mutuellement par une paroi de guidage (71) de forme incurvée et en particulier en forme d'arc de cercle.

13. Pièce de brosse enfichable selon l'une des revendications 1 à 12, **caractérisée en ce que** les butées latérales (67) de la came de limitation (46) sont disposées latéralement par rapport à un logement (65) de tige de palier lorsque le porte-brosses (62) est situé en une position neutre.

14. Brosse électrique de soin corporel, en particulier brosse à dents électrique (1), présentant une pièce de poignée (10) et une pièce de brosse enfichable (2) en plusieurs pièces selon l'une des revendications 1 à 13.

15. Procédé de fabrication d'une pièce de brosse enfichable (2) selon l'une des revendications 1 à 13, **caractérisé en ce que** le boîtier (21) de brosse enfichable, le barreau d'entraînement (91), l'élément de calage (121) et le porte-brosses (62) sont tous moulés par injection, en particulier chacun en une seule pièce, par un procédé de moulage par injection et **en ce que** des brosses de soin (81) sont placées sur le porte-brosses (62) dans une étape intégrée ou séparée du procédé, les composants étant assemblés en la pièce de brosse enfichable (2) au moyen d'une étape de montage qui suit.
